(19) Europäisches Patentamt
European Patent Office
Office européen des brevets

(11) Veröffentlichungsnummer: **0 418 664 B1**

(12) # EUROPÄISCHE PATENTSCHRIFT

(45) Veröffentlichungstag der Patentschrift: **22.06.94**

(51) Int. Cl.5: **C09B 62/002**

(21) Anmeldenummer: **90117167.8**

(22) Anmeldetag: **06.09.90**

Die Akte enthält technische Angaben, die nach dem Eingang der Anmeldung eingereicht wurden und die nicht in dieser Patentschrift enthalten sind.

(54) **Reaktivfarbstoffe.**

(30) Priorität: **19.09.89 DE 3931140**

(43) Veröffentlichungstag der Anmeldung:
**27.03.91 Patentblatt 91/13**

(45) Bekanntmachung des Hinweises auf die Patenterteilung:
**22.06.94 Patentblatt 94/25**

(84) Benannte Vertragsstaaten:
**CH DE FR GB LI**

(56) Entgegenhaltungen:
**EP-A- 0 299 315**
**DE-A- 2 634 308**
**DE-A- 3 732 381**
**US-A- 4 447 357**

(73) Patentinhaber: **BAYER AG**

**D-51368 Leverkusen(DE)**

(72) Erfinder: **Hoppe, Manfred, Dr.**
**Kölner Strasse 233**
**D-5067 Kürten 2(DE)**
Erfinder: **Herd, Karl-Josef, Dr.**
**Am Gartenfeld 66**
**D-5067 Odenthal-Holz(DE)**
Erfinder: **Henk, Hermann, Dr.**
**Roggendorfstrasse 55**
**D-5000 Köln 80(DE)**
Erfinder: **Stöhr, Frank-Michael, Dr.**
**Am Thelen Siefen 10**
**D-5068 Odenthal-Osenau(DE)**

EP 0 418 664 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Aus dem Stand der Technik sind Reaktivfarbstoffe bekannt. Beispielsweise wird auf die US-A-4 447 357 und die DE-A-2 634 308 verwiesen.

Gegenstand der vorliegenden Erfindungen sind Reaktivfarbstoffe der Formel

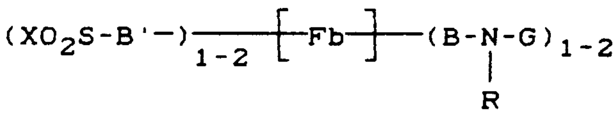

(1)

worin

Fb = Rest eines Farbstoffes der Mono- oder Polyazo-, Metallkomplexazo-, Anthrachinon-, Phthalocyanin-, Formazan-, Azomethin-, Dioxazin-, Phenazin-, Xanthen-, Thioxanthon-, Naphthochinon-, Stilben- oder Triphenylmethanreihe,

B bzw. B' = direkte Bindung oder Brückenglied an ein Ring C-Atom eines aromatisch-carbocyclischen oder an ein Ring-C- oder -N-Atom eines aromatisch-heterocyclischen Ringes in Fb,

R = H, gegebenenfalls substituiertes $C_1$-$C_6$-Alkyl (bevorzugte Substituenten: Halogen, OH, COOH, $SO_3H$, $OSO_3H$),

G =

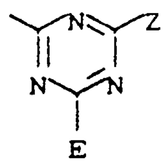

,

Z =

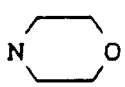 , 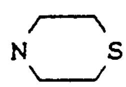 , 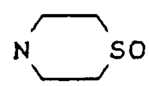 , 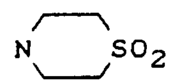,

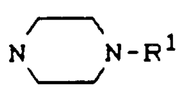 , 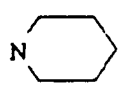 , oder 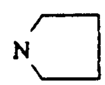 ,

wobei die heterocyclischen Ringe gegebenenfalls Substituenten, insbesondere 1 bis 2 $C_1$-$C_4$-Alkyl- oder $C_1$-$C_4$-Alkoxy-Reste aufweisen können, wie z.B. $R^1$ = $CH_3$, $C_2H_5$, $CH_2CH_2OH$ oder H,

X = $CH_2=CH_2$ oder $CH_2CH_2$-Y, worin

Y = alkalisch eliminierbarer Rest, z.B. $OSO_3H$, $SSO_3H$, $OCOCH_3$, $OPO_3H_2$, $OSO_2CH_3$, SCN, $NHSO_2CH_3$, Cl, Br, F, $OCOC_6H_5$, $OSO_2$-$C_6H_4CH_3$, $N(CH_3)_3]^+$Anion$^-$ oder E,

E = gegebenenfalls substituierter Pyridinium-Rest (Substituenten insbesondere gegebenenfalls substituiertes $C_1$-$C_4$-Alkyl, COOH, $SO_3H$, CN, Carbonamid), insbesondere die folgenden Reste:

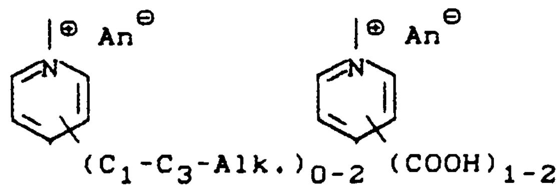
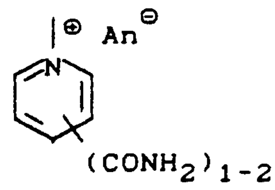

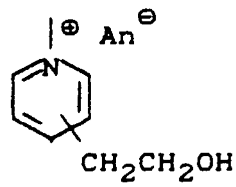
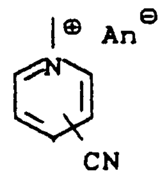
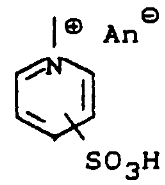

worin $An^{\ominus}$ = Anion, insbesondere $OH^{\ominus}$, $HSO_4^{\ominus}$, $Cl^{\ominus}$, $Br^{\ominus}$, $F^{\ominus}$,

Beispiele für die Brückenglieder B sind:

$\overset{*}{-}COCH_2-$, $-CH_2-$, $-CH_2-CH_2-$, $-CH_2-CH_2-CH_2-$, $\overset{*}{-}SO_2-CH_2-CH_2-$,
$\overset{*}{-}CONHCH_2CH_2-$, $\overset{*}{-}SO_2NH-CH_2CH_2-$, $\overset{*}{-}NH-CH_2CH_2-$, $\overset{*}{-}O-CH_2CH_2-$,

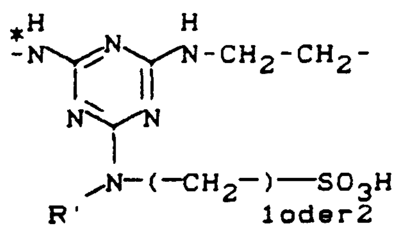 ,

wobei R' = H oder $CH_3$

Der Rest

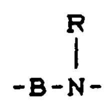

kann beispielsweise auch folgende Bedeutung haben:

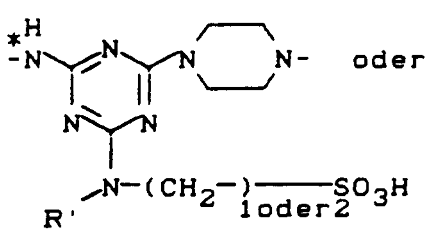 oder 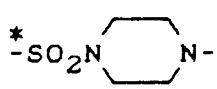

wobei R' = H oder $CH_3$.

Der Stern markiert jeweils die Verknüpfungsstelle des Brückengliedes mit dem Farbstoffrest Fb.

Beispiele für die Brückenglieder B' sind:

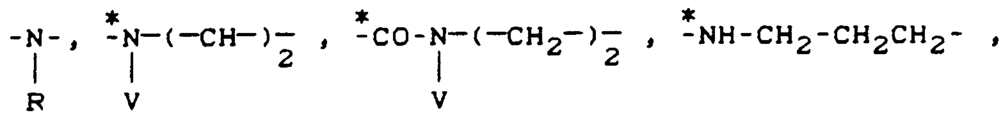

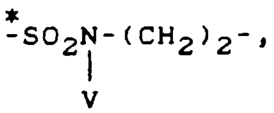

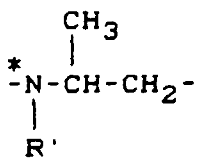 , $^*$-NHCH$_2$CH$_2$O-CH$_2$CH$_2$- , $^*$-O-CH$_2$CH$_2$- ,

$^*$-NHCO-CH$_2$CH$_2$- , $^*$-NH-CO-CH$_2$CH$_2$CH$_2$- ,

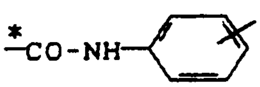 , 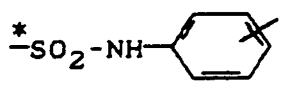 ,

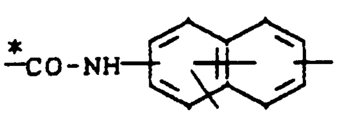 (SO$_3$H) 0 oder 1 , 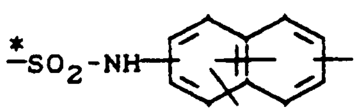 (SO$_3$H) 0 oder 1

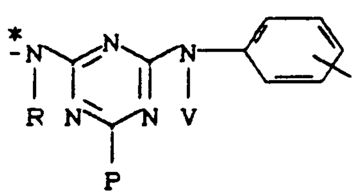 , 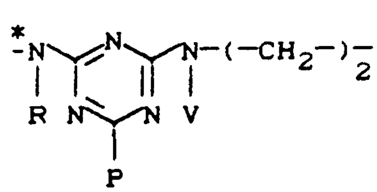 ,

wobei

P = F, Cl, E oder gegebenenfalls substituiertes Amino, vorzugsweise

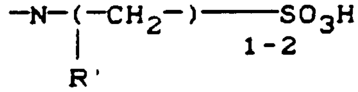

oder E,

V = H, $CH_3$, $-CH_2CH_2SO_2$-X,

R′ = H oder $CH_3$ und

R und X die obengenannte Bedeutung haben.

Die Brückenglieder B und B′ können jeweils gleiche oder verschiedene Bedeutung haben.

Der Rest Fb in Formel (1) kann in der üblichen Weise substituiert sein. Als Beispiel für weitere Substituenten an den Resten Fb seien genannt: Alkylgruppen mit 1 bis 4 Kohlenstoffatomen, wie Methyl, Ethyl, Propyl, Isopropyl oder Butyl, Alkoxygruppen mit 1 bis 4 Kohlenstoffatomen, wie Methoxy, Ethoxy, Propoxy, Isopropoxy oder Butoxy, Acylaminogruppen mit 1 bis 8 Kohlenstoffatomen, wie Acetylamino, Propionylamino oder Benzoylamino, Aminogruppe, Alkylaminogruppen mit 1 bis 4 Kohlenstoffatomen, wie Methylamino, Ethylamino, Propylamino, Isopropylamino oder Butylamino, Phenylamino, N,N-Di-$\beta$-hydroxyethylamino, N,N-Di-$\beta$-sulfatoethylamino, Sulfobenzylamino, N,N-Disulfobenzylamino, Alkoxycarbonyl mit 1 bis 4 Kohlenstoffatomen im Alkoxyrest, wie Methoxycarbonyl oder Ethoxycarbonyl, Alkylsulfonyl mit 1 bis 4 Kohlenstoffatomen, wie Methylsulfonyl oder Ethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Ethylcarbamoyl, Sulfamoyl, N-Alkylsulfamoyl mit 1 bis 4 Kohlenstoffatomen, wie N-Methylsulfamoyl, N-Propylsulfamoyl, N-Isopropylsulfamoyl oder N-Butylsulfamoyl, N-(4-Hydroxyethyl)-sulfamoyl, N,N-Di-($\beta$-hydroxyethyl)-sulfamoyl, N-Phenylsulfamoyl, Ureido, Hydroxy, Carboxy, Sulfomethyl oder Sulfo. Vorzugsweise enthalten die Reste Fb eine oder mehrere Sulfonsäuregruppen.

Reaktivfarbstoffe der Formel (1), worin Fb der Rest eines Azofarbstoffes ist, enthalten als Substituenten vor allem Methyl, Ethyl, Methoxy, Ethoxy, Acetylamino, Benzoylamino, Amino, Chlor, Brom, Ureido, Hydroxy, Carboxy, Sulfomethyl oder Sulfo.

Besonders bevorzugt sind faserreaktive Farbstoffe der Struktur (2)

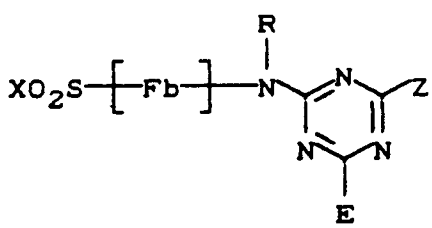

(2)

worin Fb, X, R, Z und E die unter Formel (1) genannte Bedeutung zukommt.

Bevorzugte Farbstoffe (1) sind Monoazo- und Polyazofarbstoffe der Formel (4) sowie deren Metallkomplexe

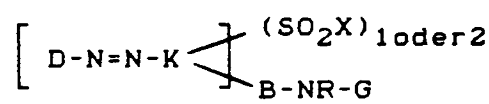

(3)

worin

D = Rest einer Diazokomponente der Benzol- oder Naphthalinreihe,

K = Rest einer Kupplungskomponente der Benzol-, Naphthalin-, Acetessigsäurearylid- oder heterocyclischen Reihe; in der heterocyclischen Reihe vorzugsweise ein Pyrazolon- oder Pyridon-Rest.

Die Reste D und K können dabei mit weiteren Azogruppen oder mit azogruppenhaltigen Resten und ebenso, wie es für den Rest Fb der Formel (1) weiter oben aufgeführt ist, substituiert sein.

Besonders bevorzugt sind dabei Farbstoffe der Formeln (4) und (5)

$X\text{-}SO_2\text{-}D\text{-}N=N\text{-}K\text{-}B\text{-}NR\text{-}G$ (4)

$G\text{-}NR\text{-}B\text{-}D\text{-}N=N\text{-}K'\text{-}SO_2\text{-}X$ (5)

worin

K' = Rest einer Kupplungskomponente der Pyrazolon-, Pyridon- oder Acetessigsäurearylid-Reihe ist, und

D, K, R und B die bereits obengenannte Bedeutung zukommt.

Beispiele für D sind vorzugsweise gegebenenfalls durch $SO_3H$, Chlor, $C_1$-$C_4$-Alkoxy, $C_1$-$C_4$-Alkyl, Carbalkoxy oder Sulfonamido substituiertes Phenyl bzw. Phenylen, gegebenenfalls durch $SO_3H$, Chlor, $C_1$-$C_4$-Alkoxy oder $C_1$-$C_4$-Alkyl substituiertes Naphthyl bzw. Naphthylen, gegebenenfalls durch $SO_3H$ substituiertes 4-(Phenylazo)phenyl und gegebenenfalls durch $SO_3H$ substituiertes Biphenylen.

K steht beispielsweise für den Rest einer Kupplungskomponente aus der Hydroxybenzol-, Hydroxynaphthalin-, Aminobenzol-, Aminonaphthalin-, Aminohydroxynaphthalinreihe, für einen 5-Hydroxy-3-methyl-(bzw. carboxy)-pyrazolon-, einen 6-Hydroxy-2-pyridon oder einen gegebenenfalls $C_1$-$C_4$-Alkyl- bzw. $C_1$-$C_4$-Alkoxy-ringsubstituierten Acetessigsäurearylid-Rest. Die drei letztgenannten Reste sind auch geeignete Beispiele für K'. K und K' können die üblichen Substituenten, insbesondere Sulfonsäuregruppen aufweisen.

Bevorzugt sind die folgenden Farbstoffe der Formeln (6) bis (43):

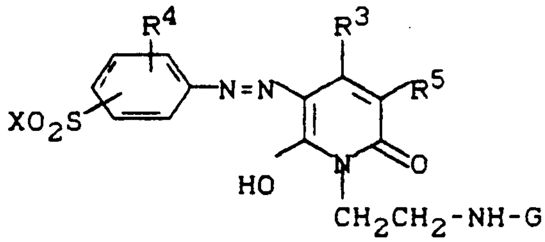

(6)

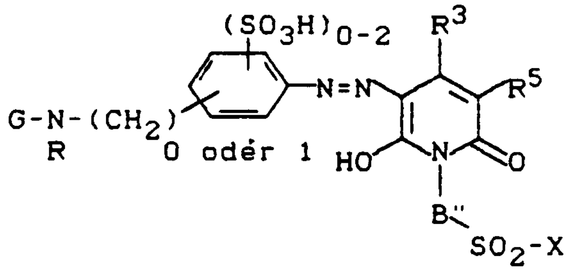

(7)

B'' =

$-(-CH_2-)_{2-3}$ , 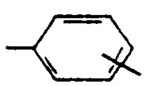

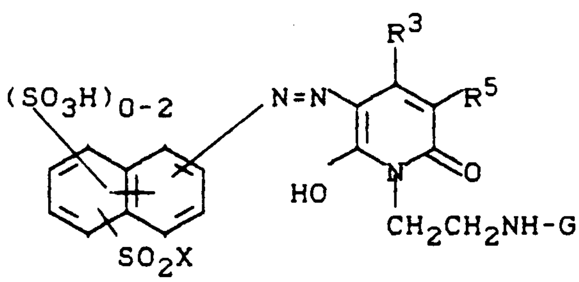

(8)

worin

$R^3$ = H, $C_1$-$C_4$-Alkyl, insbesondere $CH_3$ und $CH_2SO_3H$, COOH,

$R^4$ = H, $C_1$-$C_4$-Alkyl, $C_1$-$C_4$-Alkoxy, Cl, Br, COOH, $SO_3H$

$R^5$ = H, $SO_3H$, $CH_2SO_3H$, Cl, $C_1$-$C_4$-Alkylsulfonyl, Carbonamid, insbesondere $CONH_2$ sowie Carbonsäuremono- und -di-$C_1$-$C_4$-alkylamid.

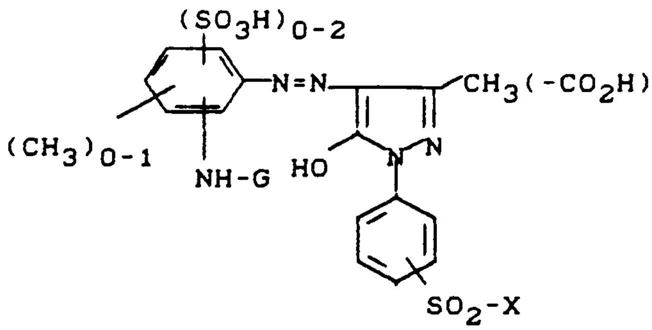

(9)

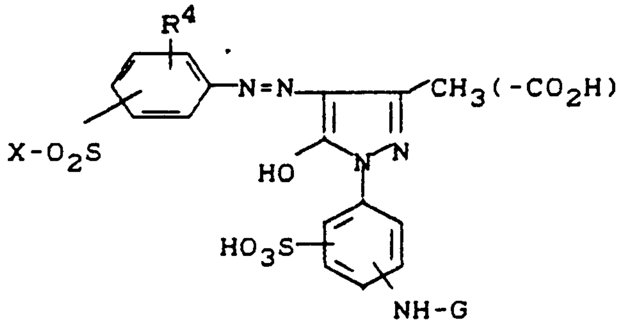

(10)

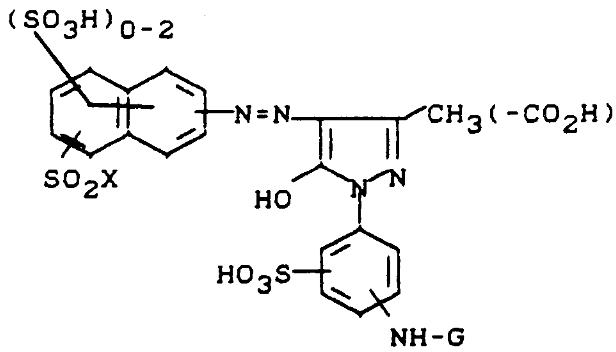

(11)

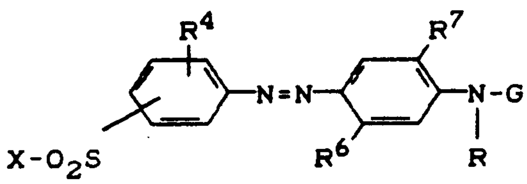

(12)

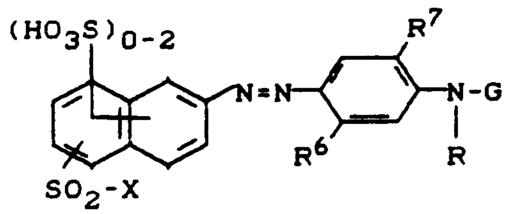

(13)

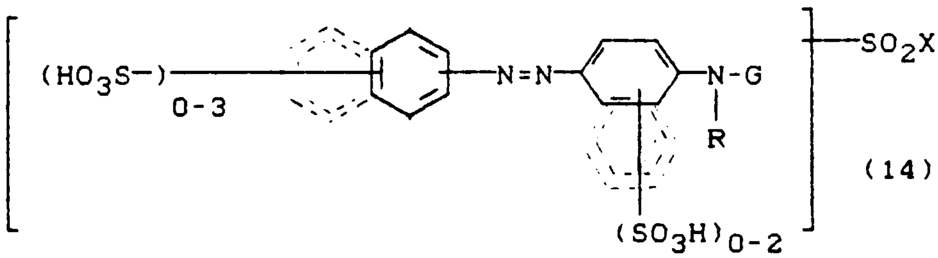

(14)

worin

$R^6$ = H, $C_1$-$C_4$-Alkyl, $C_1$-$C_4$-Alkoxy, Acylamino, insbesondere $C_1$-$C_4$-Alkylcarbonylamino oder Arylcarbonylamino wie gegebenenfalls substituiertes Phenylcarbonylamino, $C_1$-$C_4$-Alkylsulfonylamino, Cl, Br, Aminocarbonylamino, $C_1$-$C_4$-Alkylsulfonylamino, Arylsulfonylamino,

$R^7$ = H, $C_1$-$C_4$-Alkyl, $C_1$-$C_4$-Alkoxy, OH, $SO_3H$

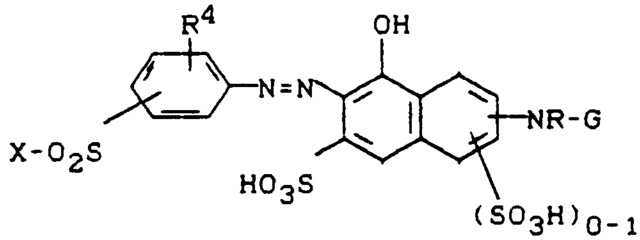

(15)

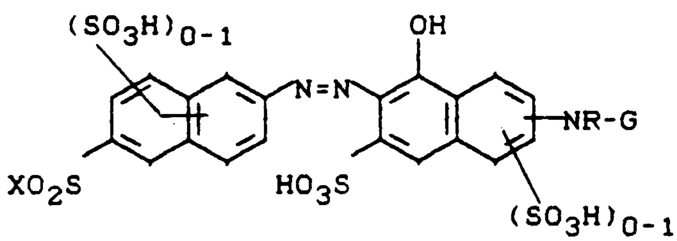

(16)

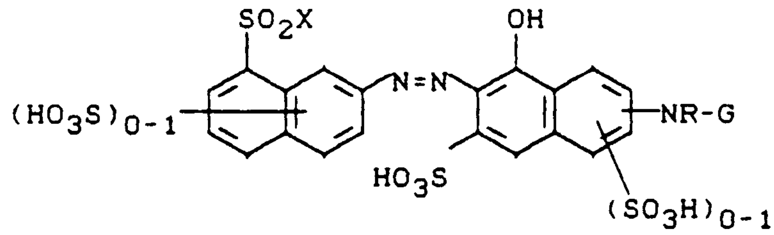

(17)

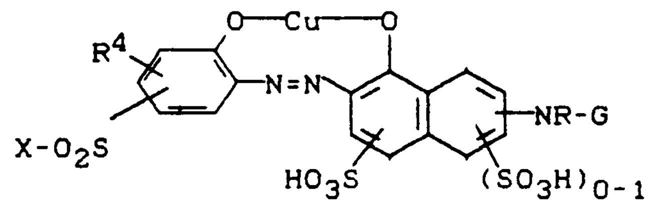

(18)

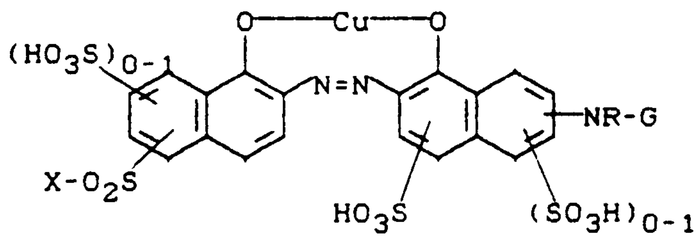

(19)

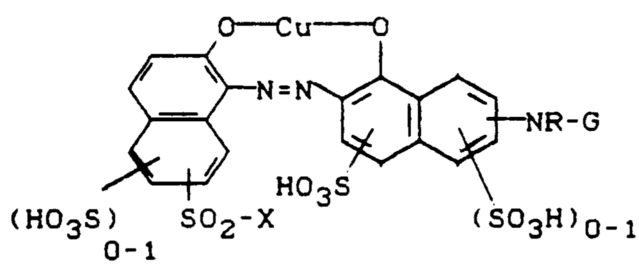

(20)

1:2-Metallkomplexe von Farbstoffen

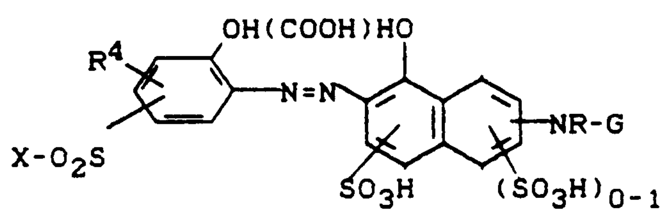

(21)

insbesondere die Cr- und Co-Komplexe, die zwei Farbstoffe (21) oder einen Farbstoff (21) und einen beliebigen anderen metallkomplexbildenden Farbstoff, insbesondere einen Azo- oder Azomethinfarbstoff enthalten,

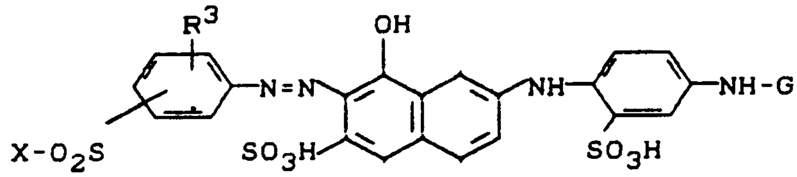

(22)

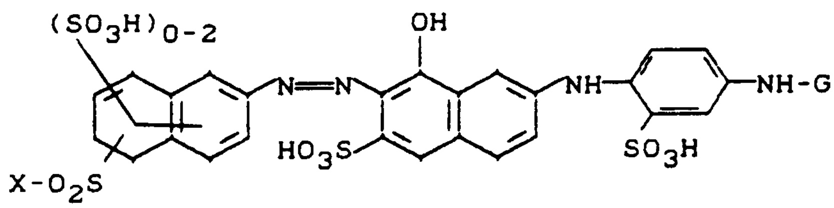

(23)

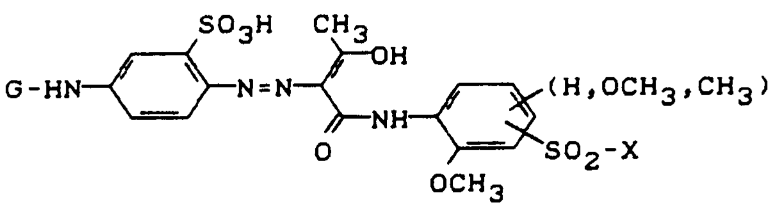

(24)

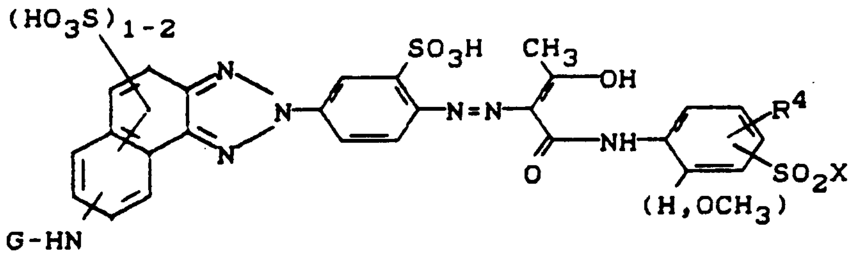

(25)

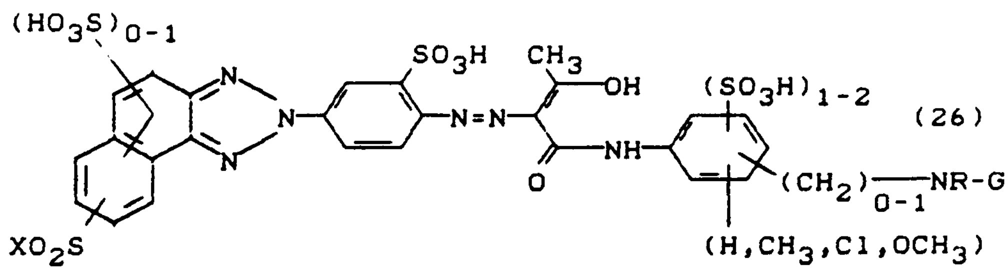

(26)

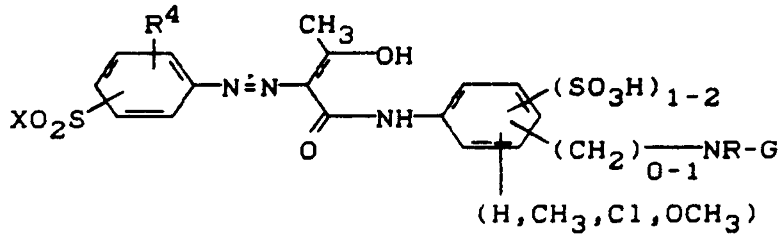

(27)

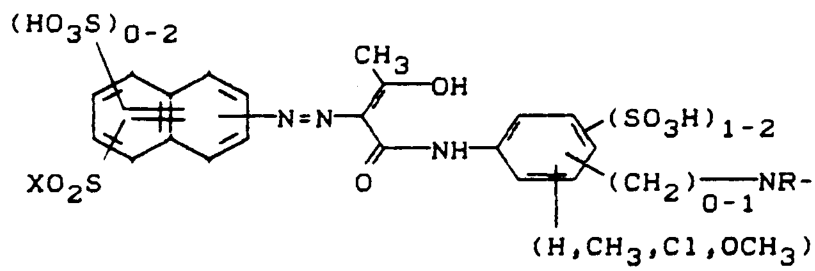

(28)

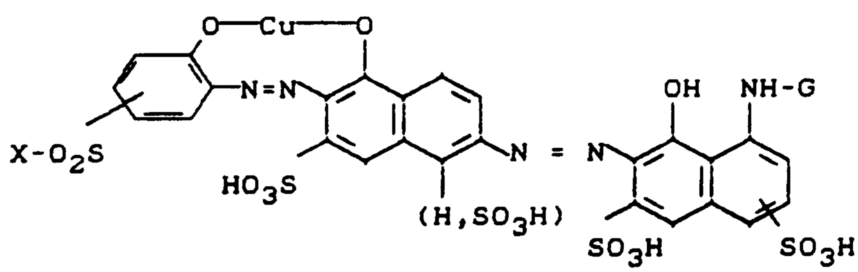

(29)

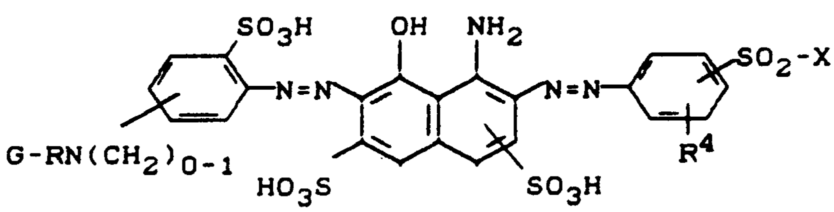

(30)

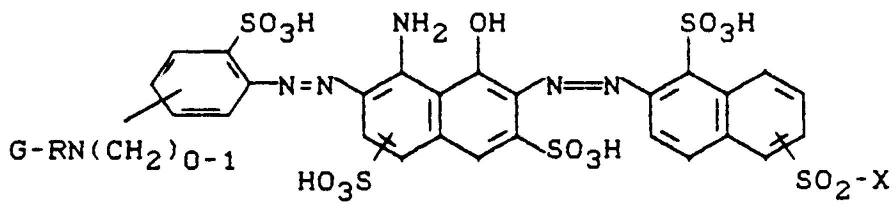

(31)

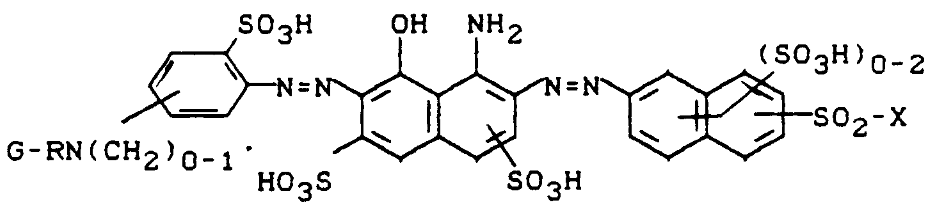

(32)

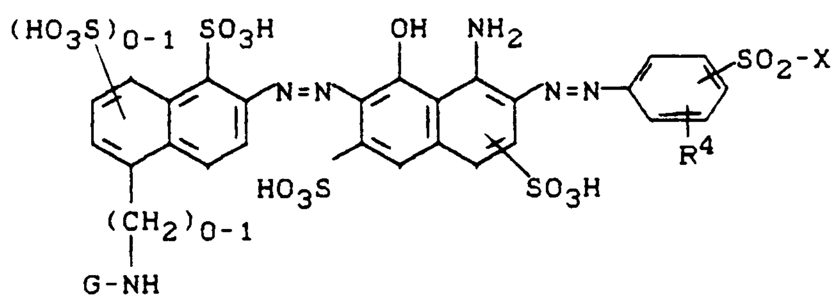

(33)

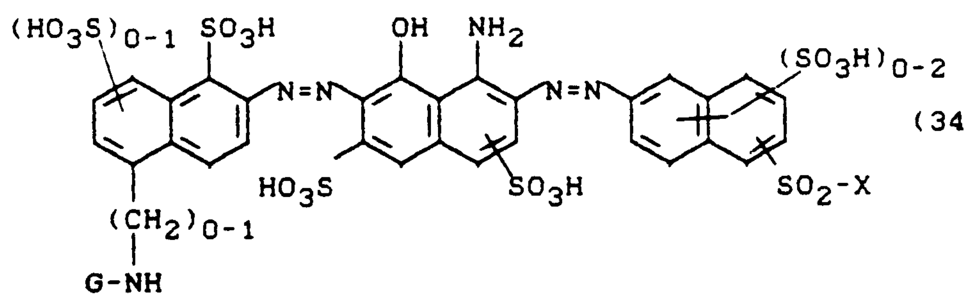

(34)

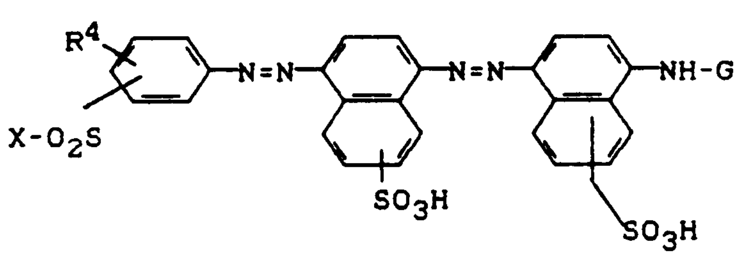

(35)

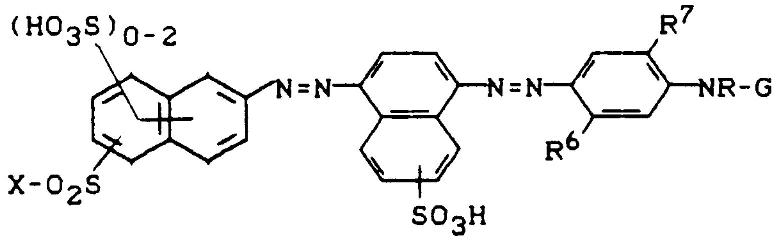

(36)

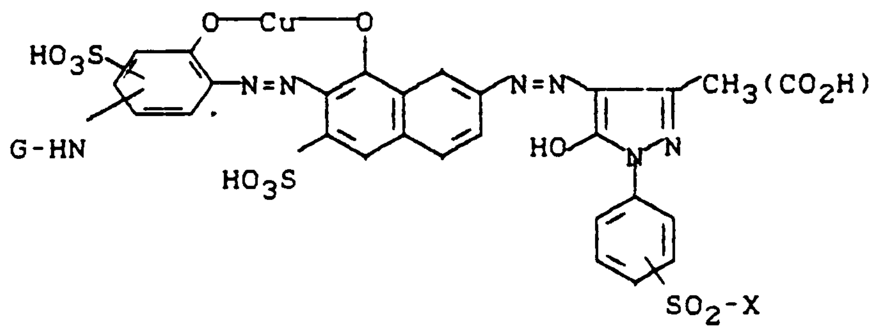

(37)

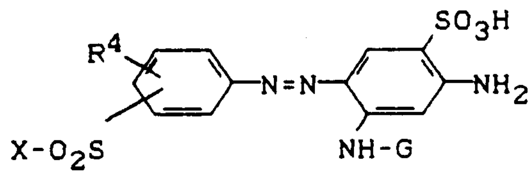

(38)

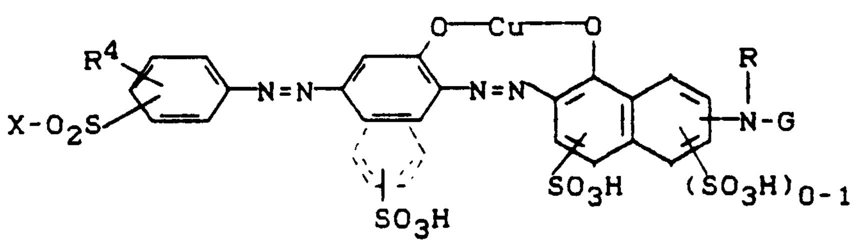

(39)

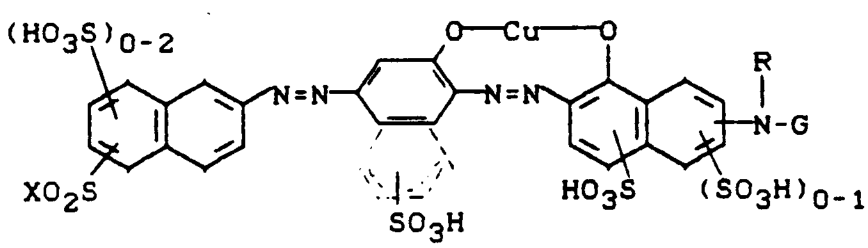

(40)

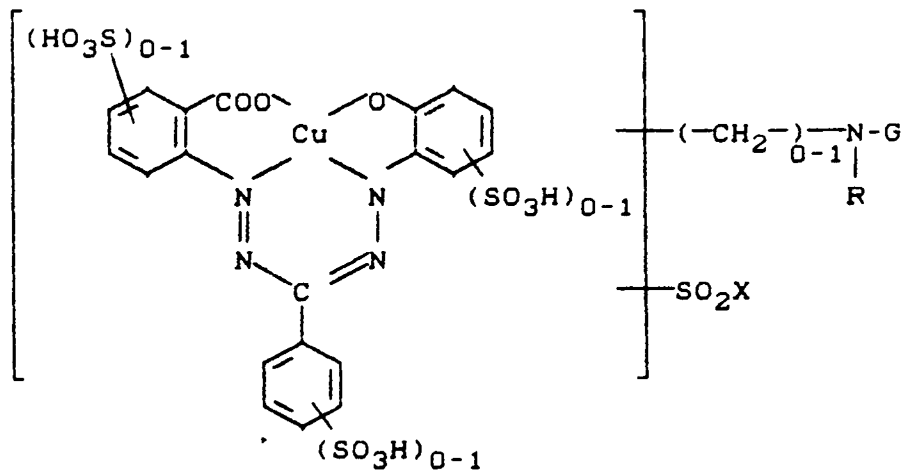

(41)

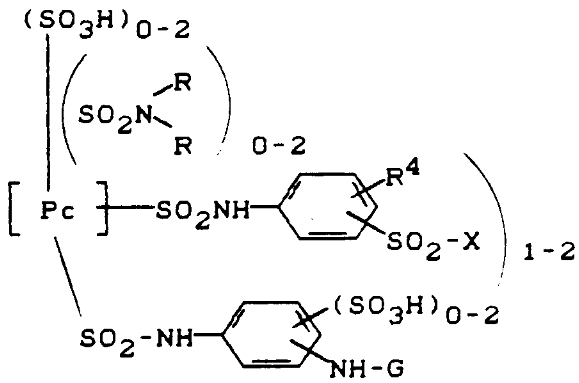

(42)

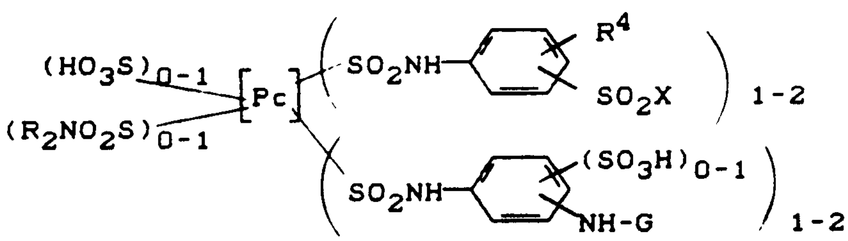

(42a)

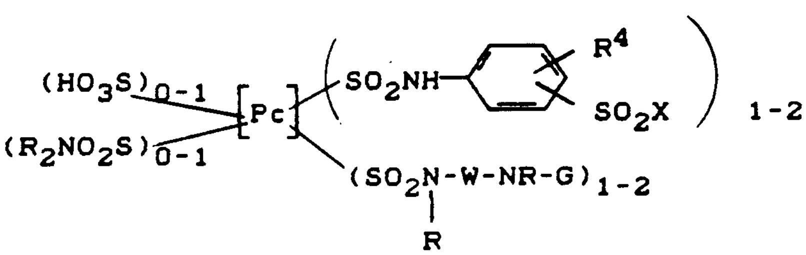

(42b)

worin Pc für einen Cu- oder Ni-Phthalocyaninrest steht und die Gesamtzahl der Substituenten am Pc-Gerüst maximal 4 beträgt; W = aliphatisches Brückenglied, insbesondere $C_2$-$C_4$-Alkylen und R die obengenannte Bedeutung besitzt.

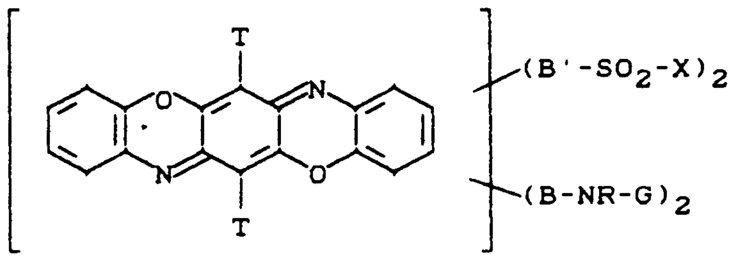

(43)

vorzugsweise

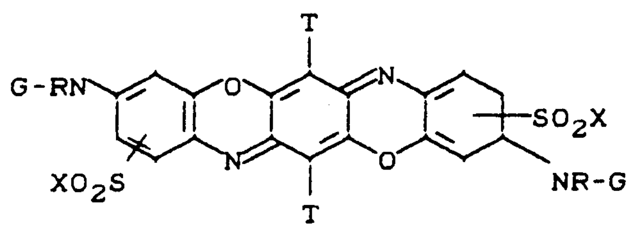

(43a)

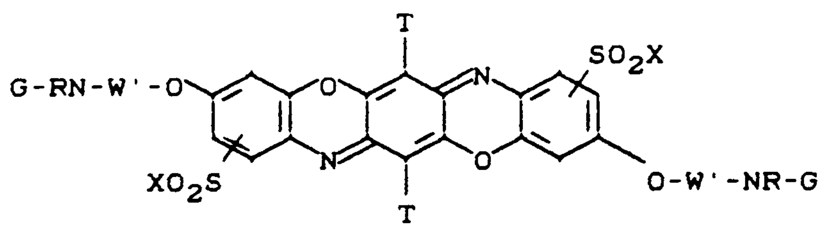

(43b)

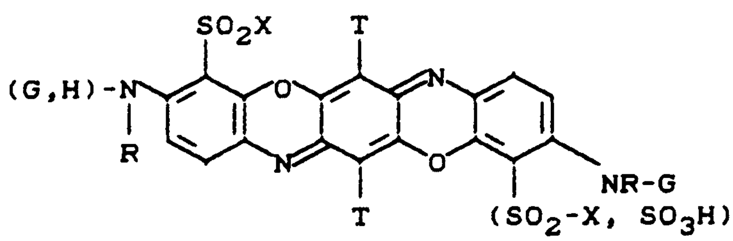

(43c)

wobei W' = aliphatisches oder aromatisches Brückenglied, insbesondere gegebenenfalls substituiertes $C_2$-$C_4$-Alkylen oder gegebenenfalls substituiertes Phenylen,

T = Wasserstoff oder Substituent, beispielsweise Halogen, Alkyl, Aralkyl, Aryl, Cyan, Carboxy, Carbalkoxy, Arylamino oder Alkoxy.

Besonders bevorzugte Farbstoffe (1) sind solche mit X = $CH_2CH_2OSO_3H$ oder $CH=CH_2$ und dabei insbesondere solche mit 1-6 wasserlöslichmachenden Gruppen, vorzugsweise Sulfogruppen, insbesondere die folgenden der Formeln (44) bis (74):

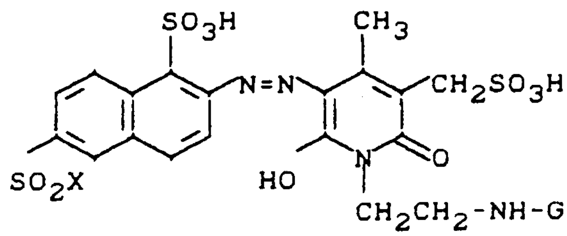

(44)

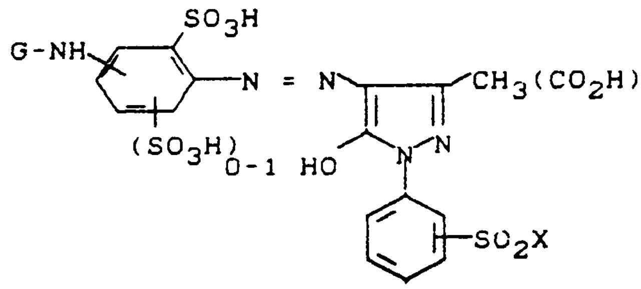

(45)

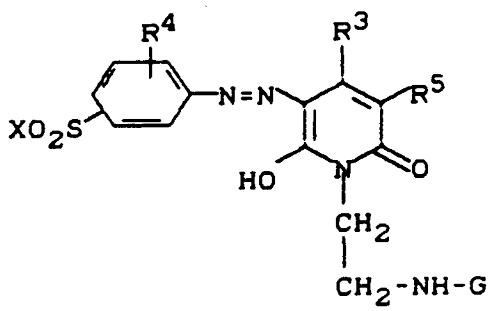

(46)

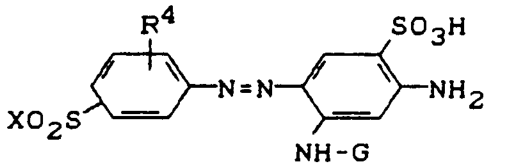

(47)

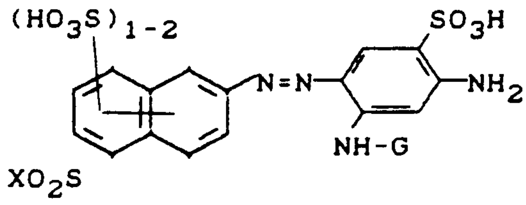

(48)

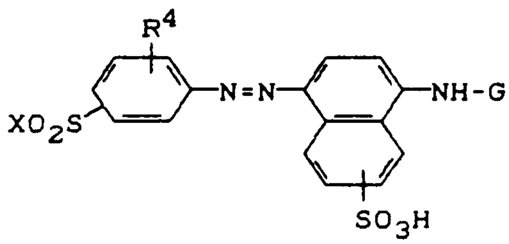

(49)

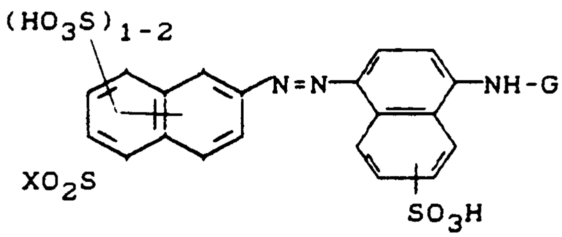

(50)

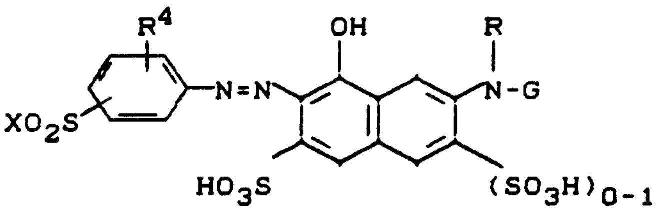

(51)

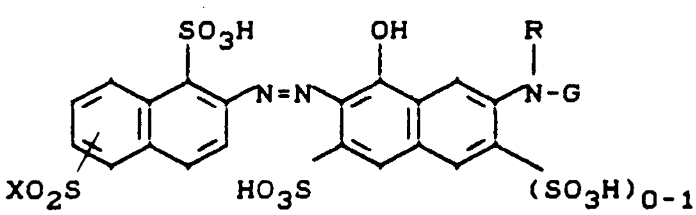

(52)

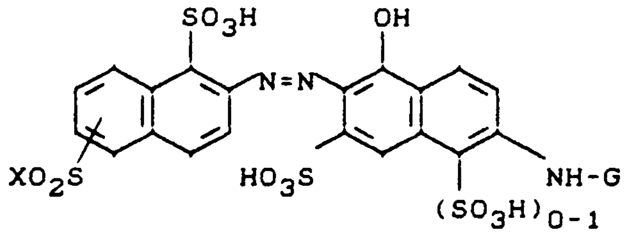

(53)

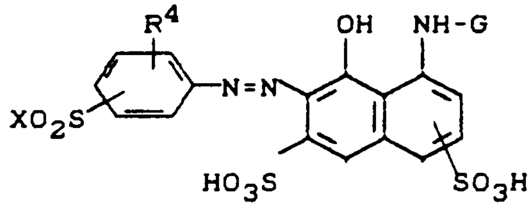

(54)

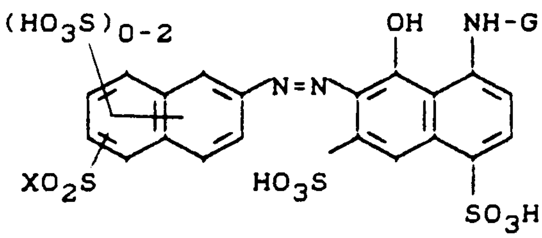

(55)

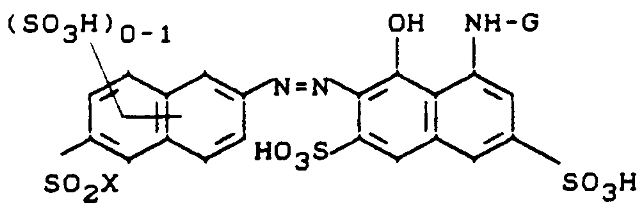

(56)

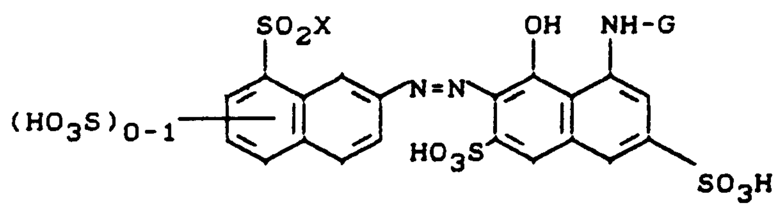

(57)

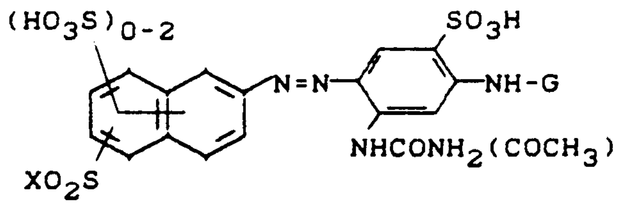

(58)

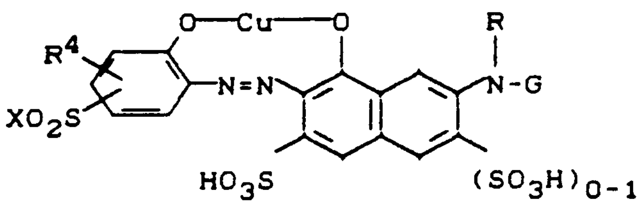

(59)

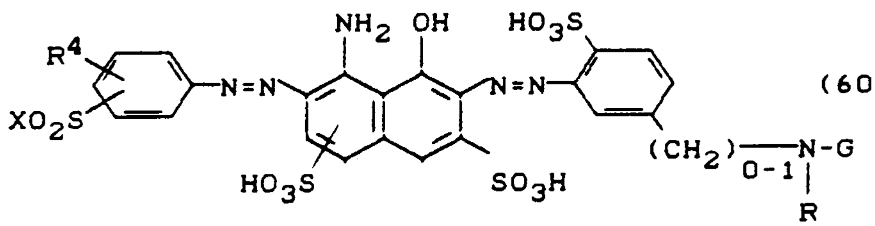

(60)

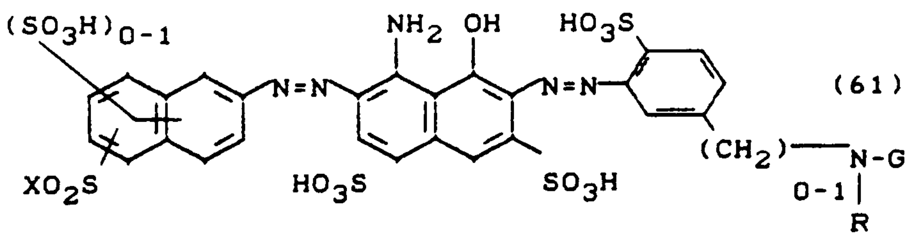

(61)

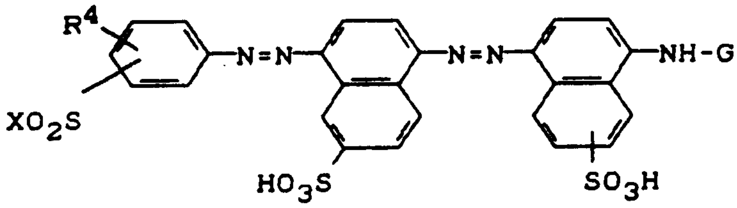

(62)

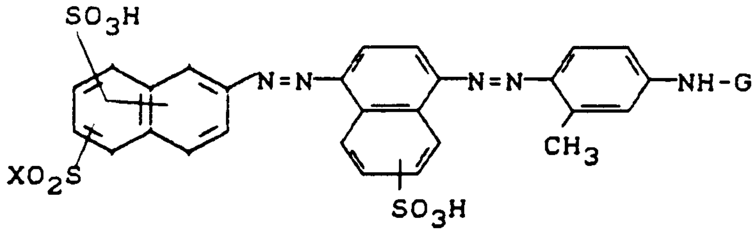

(63)

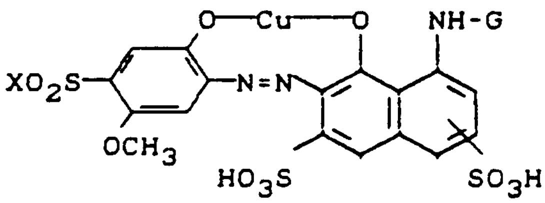

(64)

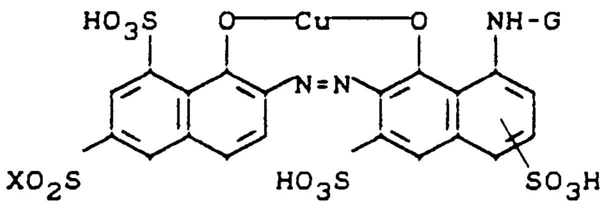

(65)

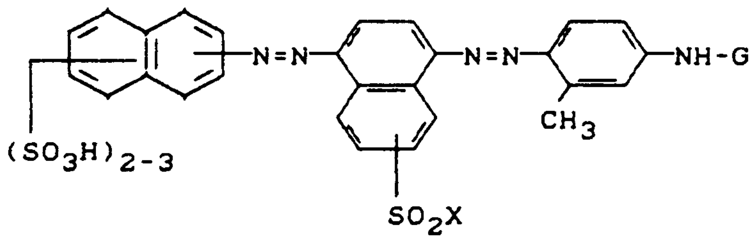

(66)

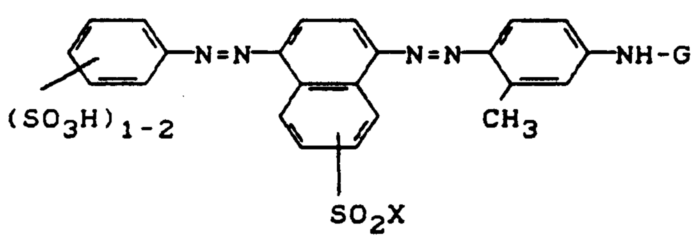

(67)

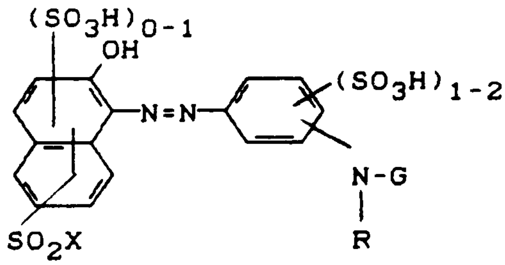

(68)

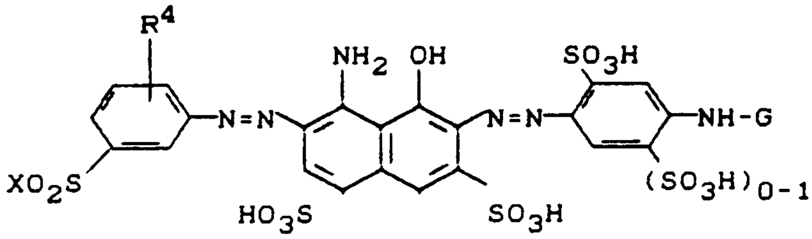

(69)

Ganz besonders bevorzugte Farbstoffe der Formel (1) - (69) sind solche mit

$-SO_2X$ = $-SO_2CH=CH_2$ oder $-SO_2CH_2-CH_2OSO_3H$

E =

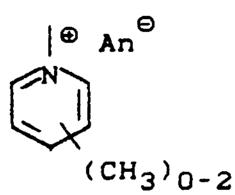

oder

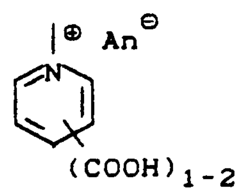

Z =

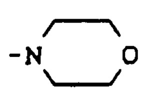 , 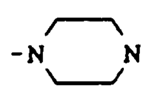 , 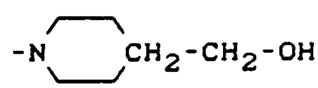

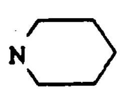 und 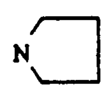

R = H, $C_1$-$C_4$-Alkyl.

Die neuen Farbstoffe lassen sich nach den verschiedenartigsten in der Farbstoffchemie üblichen Herstellungsverfahren erhalten. Beispielhaft seien die folgenden genannt:

1) Farbstoffe der Formeln

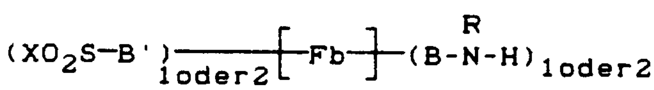

(70)

werden in bekannter Weise mit 1 oder 2 Äquivalenten Cyanurfluorid, Cyanurchlorid bzw. Cyanurbromid unter Abspaltung von H-Hal zu Verbindungen der Formel

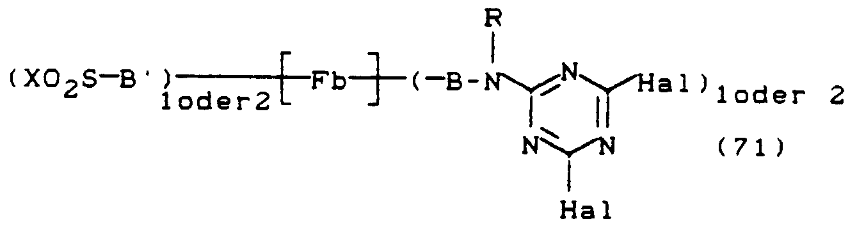

(71)

Hal = F, Cl oder Br

umgesetzt und nachfolgend mit einem Amin H-Z bei pH 6-8 zu Farbbasen der Formel

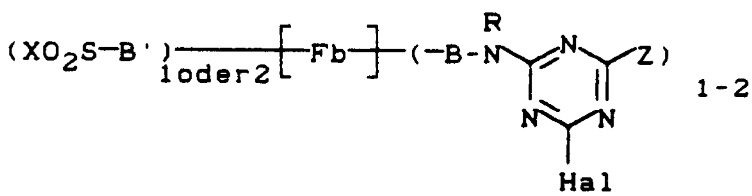

(72)

kondensiert (vgl. DOS 3 732 381). Durch erneute Kondensation mit Pyridinderivaten der Formel

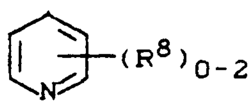

(73)

worin

$R^8$ = gegebenenfalls substituiertes $C_1$-$C_4$-Alkyl, COOH, $SO_3H$, CN, Carbonamid, insbesondere den folgenden

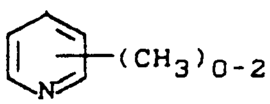 ,

(73 a)

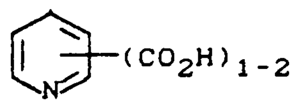 ,

(73 b)

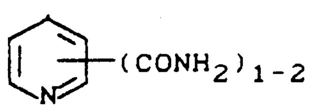 ,

(73 c)

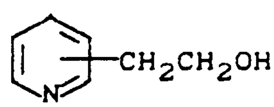 ,

(73 d)

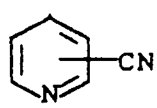

(73 e)

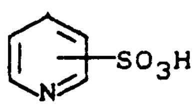

(73 f)

gelangt man unter Abspaltung von $Hal^{\ominus}$ zu Farbstoffen der Formel (1).

2) Farbstoffe der Formel (71) werden zunächst mit Pyridinderivaten der Formel (73) unter Abspaltung von $Hal^{\ominus}$ zu Verbindungen der Formel

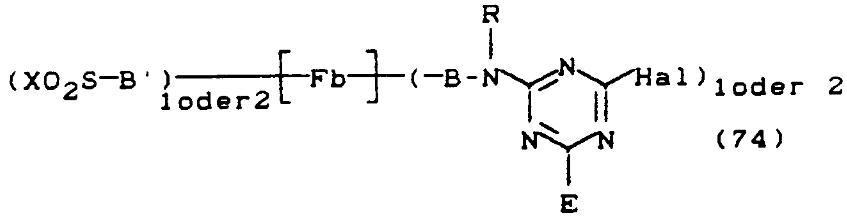

(74)

kondensiert und im zweiten Schritt mit Aminen H-Z zu Farbstoffen der Formel (1) umgesetzt.

3) Farbstoffe der Formeln (1) und (2) mit dem Rest - $SO_2X$ = $SO_2CH_2CH_2OH$ werden in bekannter Weise zu den Farbstoffen der Formeln (1) und (2) mit dem Rest -$SO_2X$ = $SO_2CH_2CH_2OSO_3H$ sulfatiert.

4) Vorprodukte von Fb mit 1 oder 2 Resten -$SO_2X$ bzw. 1 oder 2 Resten der Formel

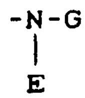

werden miteinander beispielsweise durch Kondensation oder, wie im Falle von Diazo- bzw. Kupplungskomponenten, durch Azokupplung umgesetzt und anschließend gegebenenfalls metallisiert.

Solche Vorprodukte sind beispielsweise bekannte Diazokomponenten, Kupplungskomponenten, 1-Amino-4-bromanthrachinon-2-sulfonsäure-Verbindungen, aromatische oder aliphatische primäre oder sekundäre Amine, Phthalocyaninsulfochloride, Aminophenolverbindungen und Aminobenzoesäure-Verbindungen. Solche Ausgangsverbindungen und deren Reaktionsweisen sind in großer Zahl in der Literatur für die Herstellung von bekannten Farbstoffen beschrieben.

Als Diazokomponenten, die 1 bis 2 Gruppen -$SO_2X$ enthalten, seien genannt:

Anilin-4-β-sulfatoethylsulfon, Anilin-4-β-thiosulfatoethylsulfon, Anilin-4-vinylsulfon, Anilin-4-β-chlorethylsulfon, Anilin-3-β-sulfatoethylsulfon, Anilin-3-vinylsulfon, 2-Methoxy-anilin-5-β-sulfatoethylsulfon, 2-Methoxy-anilin-5-β-thiosulfatoethylsulfon, 2-Methoxy-anilin-5-vinylsulfon, 4-Methoxy-anilin-3-β-sulfatoethylsulfon, 4-Methoxy-anilin-3-β-vinylsulfon, 2,5-Dimethoxy-anilin-4-β-sulfatoethylsulfon, 2,5-Dimethoxy-anilin-4-vinylsulfon, 2,5-Dimethoxy-anilin-4-β-sulfatoethylsulfon, 2-Methoxy-5-methyl-anilin-4-β-sulfatoethylsulfon, Anilin-2-β-sulfatoethylsulfon, 2-Chloranilin-5-β-sulfatoethylsulfon, 4-Chloranilin-3-β-sulfatoethylsulfon, 3-(3- oder 4-Aminobenzoyl)-aminophenyl-β-sulfatoethylsulfon, 2-Methoxy-5-methyl-anilin-4-vinylsulfon, 6-Carboxy-anilin-3-β-sulfatoethylsulfon, 6-Carboxy-anilin-3-vinylsulfon, 2-Sulfoanilin-4-β-sulfatoethylsulfon, 2-Sulfoanilin-4-vinylsulfon, 2,4-Disulfo-anilin-5-vinylsulfon, 2-Hydroxyanilin-5-β-sulfatoethylsulfon, 2-Hydroxy-anilin-4-β-sulfatoethylsulfon, 3-Sulfo-2-hydroxy-anilin-5-β-sulfatoethylsulfon, 2-Naphthylamin-8-β-sulfatoethylsulfon, 2-Naphthylamin-6-β-sulfatoethylsulfon, 1-Sulfo-2-naphthylamin-6-β-sulfatoethylsulfon, 1-Naphthylamin-4-β-sulfatoethylsulfon, 1-Sulfo-2-napthylamin-5-β-sulfatoethylsulfon, 6-Sulfo-2-naphthylamin-8-β-sulfatoethylsulfon, 2-Amino-3-sulfonaphthalin-6,8-bis-(β-sulfatoethylsulfon),2-Brom-1-aminobenzol-4-β-sulfatoethylsulfon, 2,6-Dichlor-1-aminobenzol-4-β-sulfatoethylsulfon, 1-Naphthylamin-5-β-sulfatoethylsulfon, 2-Naphthylamin-5-β-sulfatoethylsulfon, 2-Naphthylamin-8-β-sulfatoethylsulfon, 8-Sulfo-2-napthylamin-6-β-sulfatoethylsulfon.

Geeignete Diazokomponenten mit dem Rest

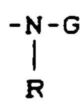

sind beispielsweise

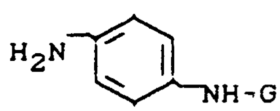 , 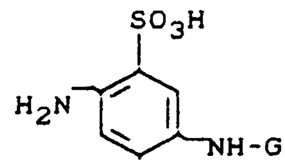 , 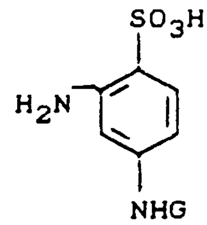

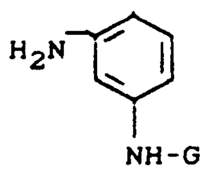 , 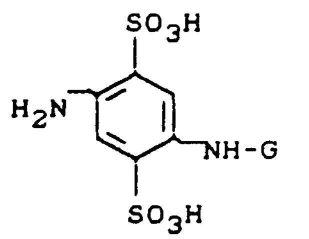 , 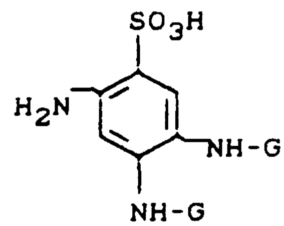 .

Aromatische Monoamine und Diamine, die sowohl als Diazoals auch als Kupplungskomponente bei der Herstellung von erfindungsgemäßen Disazoverbindungen verwendet werden können, sind beispielsweise:
Anilin, 3-Methylanilin, 3-Chloranilin, 2,5-Dimethylanilin, 2,5-Dimethoxyanilin, 3-Methoxyanilin, 3-Methyl-6-methoxyanilin, 3-Aminophenylharnstoff, 3-Acetylamino-6-methylanilin, 2-Amino-4-acetylaminobenzol-1-sulfonsäure, 1-Naphthylamin-6-β-sulfatoethylsulfon, 1-Naphthylamin-7-β-sulfatoethylsulfon, 1,3-Diaminobenzol, 1,3-Diamino-4-methyl- oder -methoxy-benzol, 1,3-Diaminobenzol-4-sulfonsäure, 1-Aminonaphthalin, 1-Aminonaphthalin-6- oder -7-sulfonsäure, 3-Acetylamino-anilin, 2-Amino-8-naphthol-6-sulfonsäure, 2-Amino-8-naphthol-4,6-disulfonsäure, 2-Amino-5-naphthol-7-sulfonsäure, 3-Amino-5-naphthol-7-sulfonsäure, 1-Amino-5-naphthol-7-sulfonsäure, 1-N-Acetoacetylamino-4-aminobenzol, 1-N-Acetoacetylamino-4-N-methyl-aminobenzol, 1-N-Acetoacetylamino-3-methyl-4-aminobenzol, 1-N-Aceto-acetylamino-3-methoxy-4-aminobenzol, 4-Amino-3-sulfo-acetoacetylanilid, 1-(3′-Amino-phenyl)-3-methyl-pyrazolon(5), 1-(4′-Aminophenyl)-3-methyl-pyrazolon(5), 1-(3′- oder -4′-Aminophenyl)-3-carboxy-pyrazolon(5), 1-(3′-Sulfo-4′-aminophenyl)-3-carbethoxy-pyrazolon(5), 1-(3′-Amino-4′-sulfo-phenyl)-3-carboxy-pyrazolon(5), 1-(2′,4′,6′-Trimethyl-3′-amino-5′-sulfophenyl)-3-carbethoxy-pyrazolon(5), 1-(4′-Amino-phenyl)-3-methyl-pyrazolon(5), 1-(3′-Amino-6′-methyl-phenyl)-3-carboxy-pyrazolon(5).

Aromatische Diamine, die als Tetrazokomponenten zur Herstellung von erfindungsgemäßen Disazo-Verbindungen dienen können, sind beispielsweise:
1,3-Diaminobenzol, 1,3-Diaminobenzol-4-sulfonsäure, 1,4-Diaminobenzol, 1,4-Diaminobenzol-2-sulfonsäure, 1,4-Diamino-2-methyl-benzol, 1,4-Diamino-2-methoxy-benzol, 1,3-Diamino-4-methyl-benzol, 1,3-Diaminobenzol-5-sulfonsäure, 1,3-Diamino-5-methyl-benzol, 1,6-Diamino-naphthalin-4-sulfonsäure, 2,5-Diamino-4,8-disulfo-naphthalin, 3,3′-Diamino-diphenylsulfon, 4,4′-Diamino-diphenylsulfon, 3,3′-Diamino-diphenylsulfon-disulfonsäure, 4,4′-Diamino-stilben-2,2′-disulfonsäure, 4,4′-Diamino-diphenylsulfon, 2,7-Diamino-diphenylensulfon-4,5-disulfonsäure, 4,4′-Diamino-benzophenon, 4,4′-Diamino-3,3′-dinitro-benzophenon, 3,3′-Diamino-4,4′-dichlor-benzophenon, 4,4′- oder 3,3′-Diamino-diphenyl, 4,4′-Diamino-3,3′-dichlor-diphenyl, 4,4′-Diamino-3,3′-dimethoxy- oder -3,3′-dimethyl- oder -2,2′-dimethyl-oder -2,2′-dichlor-oder -3,3′-diethoxy-diphenyl, 4,4′-Diamino-3,3′-dimethyl-6,6′-dinitro-diphenyl, 4,4′-Diamino-2,2′- oder 3,3′-disulfo-diphenyl, 4,4′-Diamino-3,3′-dimethyl- oder -3,3′-dimethoxy- oder -2,2′-dimethoxy-6,6′-disulfo-diphenyl, 4,4′-Diamino-2,2′,5,5′-tetrachlor-diphenyl, 4,4′-Diamino-3,3′-dinitro-diphenyl, 4,4′-Diamino-2,2′-dichlor-5,5′-dimethoxy-diphenyl, 4,4′-Diamino-2,2′- oder -3,3′-dicarbonsäure, 4,4′-Diamino-3,3′-dimethyl-diphenyl-5,5′-disulfonsäure, 4,4′-Diamino-2-nitro-diphenyl, 4,4′-Diamino-3-ethoxy- oder -3-sulfo-diphenyl, 4,4′-Diamino-3,3′-dimethyl-5-sulfo-diphenyl, 4,4′-Diamino-diphenylmethan, 4,4′-Diamino-3,3′-dimethyl-diphenylmethan, 4,4′-Diamino-2,2′,3,3′-tetramethyl-diphenylmethan, 4,4′-diamino-diphenylethan, 4,4′-Diaminostilben, 4,4′-Diamino-diphenylmethan-3,3′-dicarbonsäure, 1,2-Di-(4′-amino-phenoxy)-ethan.

Kupplungskomponenten, die in den erfindungsgemäßen Mono- oder Disazofarbstoffen enthalten sein können oder zu deren Herstellung dienen, sind insbesondere beispielsweise die Verbindungen der Formeln:

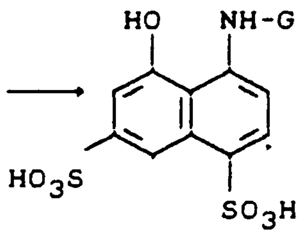 ,

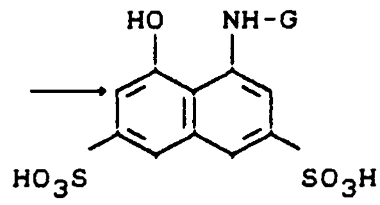 ,

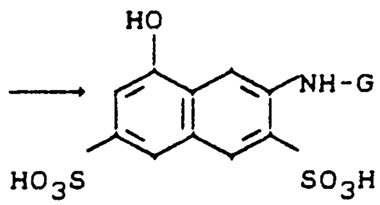 ,

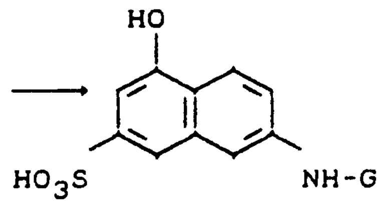 ,

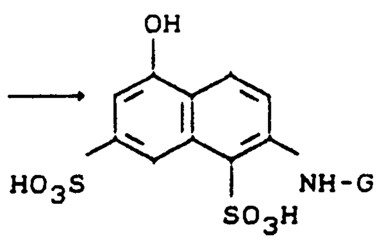 ,

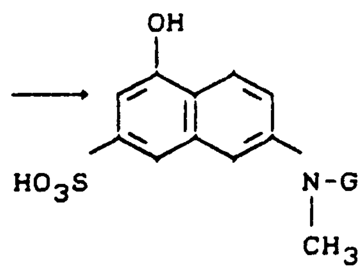 ,

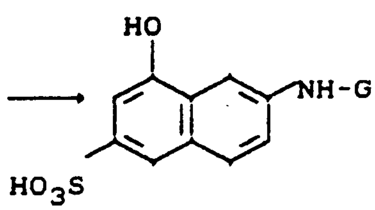 ,

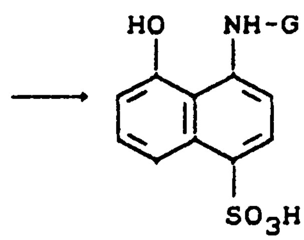 ,

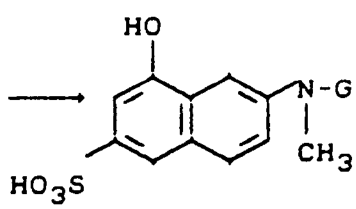 ,

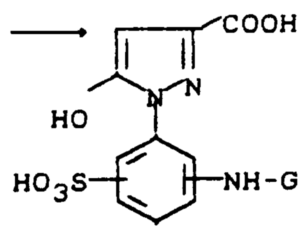

Zur Herstellung der erfindungsgemäßen Mono- und Disazoverbindungen und auch deren Metallkomplexfarbstoffe kann in üblicher Weise vorgegangen werden, indem beispielsweise analog den bekannten Diazotierungs- und Kupplungsmethoden Umsetzung der diazotierten aromatischen Amine mit den Kupplungskomponenten erfolgt und diese Azoverbindungen gegebenenfalls durch nachfolgende Metallisierung analog bekannten Verfahrensweisen (s. Houben-Weyl, "Methoden der Organischen Chemie", 4. Ausgabe (1965), Band 10/3, S. 452 ff.; Angewandte Chemie 70, 232-238 (1958); Angewandte Chemie 64, 397 (1952)) in die entsprechenden Schwermetallkomplexverbindungen, wie die Kupfer-, Kobalt- oder Chromkomplexverbindungen, überführt.

Andere Umwandlungsreaktionen der Farbstoffe oder deren Vorprodukte, wie Metallisierungsreaktionen, Sulfierungen, Triazolierungen oder Einführung von Acylamino-oder Triazinyl-Gruppierungen, können im

allgemeinen in beliebigen Stufen der Farbstoffsynthese vorgenommen werden. Einzelheiten können den nachfolgend aufgeführten Beispielen entnommen werden.

Die angegebenen Formeln sind die der freien Säuren. Bei der Herstellung werden im allgemeinen die Salze erhalten, insbesondere die Alkalisalze wie Natrium-, Kalium-oder Lithiumsalze. Die durch Quarternierung mit Pyridinen entstehende Ladung wird, in Abhängigkeit der Isolierungsbedingungen, durch ein Gegenion z.B. Chlorid, Fluorid oder Sulfat ausgeglichen; oder die Farbstoffe bilden innere Salze mit Sulfo- oder Carboxylgruppen.

Alle Farbstoffe, insbesondere solche die in letzter Stufe mit Pyridinen umgesetzt werden, können je nach Reaktionsbedingungen als Gemische der β-Sulfatoethylsulfonylfarbstoffe und deren eliminierten Form dem Vinylsulfon vorliegen. Die Farbstoffe können auch als konzentrierte Lösungen eingesetzt werden.

Die erfindungsgemäßen Farbstoffe eignen sich hervorragend zum Färben und Bedrucken von natürlichen und synthetischen OH- oder amidgruppenhaltigen Materialien, insbesondere solchen aus Cellulose und Polyamiden. Sie sind besonders geeignet zum Färben von Cellulosematerialien in Auszieh-und Klotz-Kaltverweilverfahren, sowie zum Bedrucken von Baumwolle und Zellwolle.

Man erhält bei gutem Aufbauvermögen und hohen Fixierausbeuten Färbungen mit guten Allgemeinechtheiten, insbesondere Naßechtheiten.

Beispiel 1

0,1 Mol 1-Aminoethyl-3-sulfomethyl-4-methyl-6-hydroxy-pyridon-(2) werden in Wasser gelöst und mit 0,105 Mol 2,4,6-Trichlortriazin bei 0 bis 5 °C und pH = 7,5 umgesetzt. Während der Reaktion wird der pH-Wert mit Sodalösung konstant gehalten. Nach beendeter 1. Kondensation wird mit 0,1 Mol Morpholin versetzt und die Temperatur auf 40-50 °C erhöht, wobei der pH-Wert mit Sodalösung bei 7,5 gehalten wird. Nachdem auch die 2. Kondensation beendet ist, wird mit 0,103 Mol Nicotinsäure versetzt. Auch während der 3. Kondensation wird der pH-Wert bei 7,5 gehalten, die Temperatur beträgt 85 °C. Nach beendeter Kondensation erhält man das Kondensationsprodukt der Formel

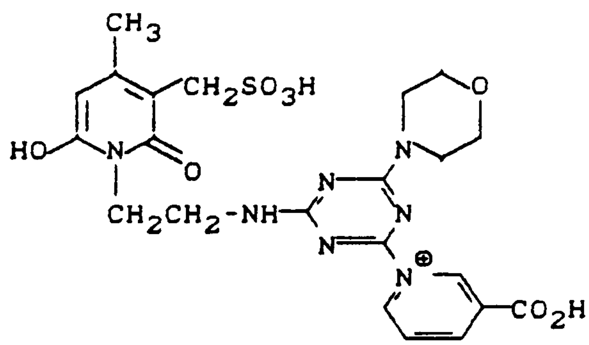

0,095 Mol 2-Amino-6-β-sulfatoethylsulfonyl-naphthalin-1-sulfonsäure werden in 300 ml Wasser gelöst und mit Natriumnitritlösung salzsauer diazotiert. Nach dem Entfernen von überschüssigem Nitrit mit Amidosulfonsäure wird die Diazotierung zu der Kupplungskomponente gegeben und der pH-Wert mit Sodalösung auf 5 - 6 eingestellt.

Nach beendeter Kupplung wird der Farbstoff isoliert, abgesaugt, getrocknet und gemahlen. Es resultiert ein in Wasser leicht lösliches gelbes Farbstoffpulver, das den Farbstoff der Formel

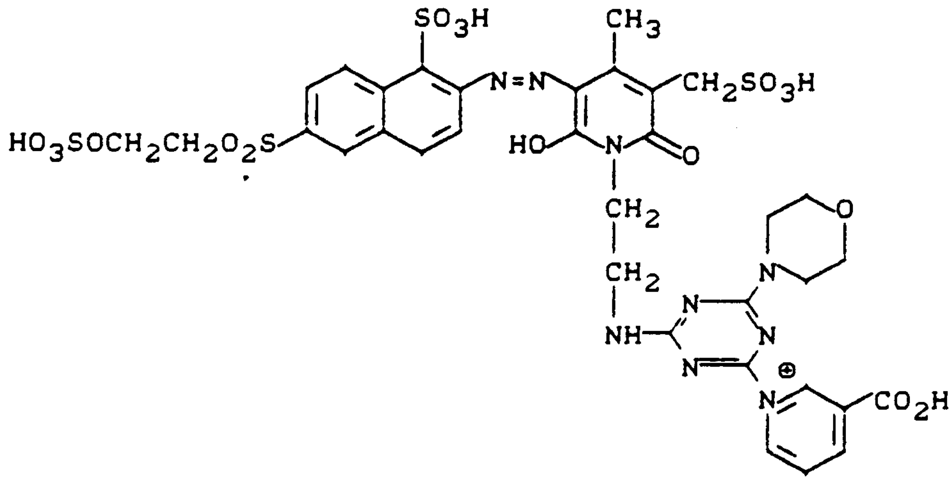

enthält. Der Farbstoff färbt Baumwolle stark grünstichig gelb.

Beispiel 2

Ersetzt man im Beispiel 1 die Diazokomponente durch die äquivalente Menge an 1-Amino-4-β-sulfatoethyl-sulfonyl-benzol und arbeitet ansonsten wie in Beispiel 1 beschrieben, erhält man den Farbstoff der Formel

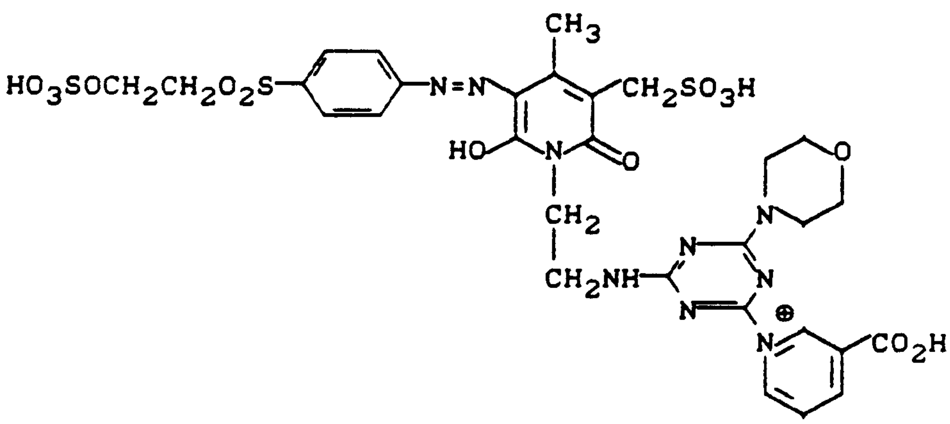

Der Farbstoff färbt Baumwolle stark grünstichig gelb.

Analog Beispiel 1 erhält man bei Verwendung der entsprechenden Ausgangsverbindungen D-$NH_2$, Pyridinderivat (E), Amin H-Z und

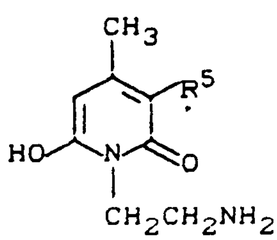

die grünstichig gelben Farbstoffe der Formel

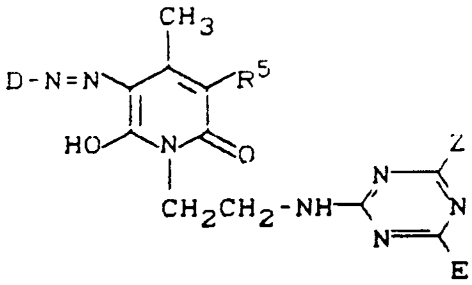

der folgenden Tabelle.

Weiterhin lassen sich die Beispiele 1-20 herstellen durch Umsetzung von

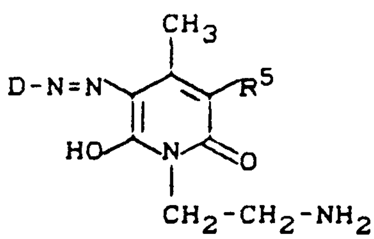

mit 2,4,6-Trihalogentriazinen und anschließende Kondensation mit Amin H-Z und einem Pyridinderivat, wobei $\beta$-Sulfatoethylsulfonylgruppen teilweise oder ganz in Vinylsulfongruppen umgewandelt werden können.

| Bsp. | D | $R^5$ | E | Z |
|---|---|---|---|---|
| 3 | 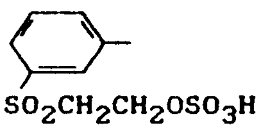 | $-CH_2SO_3H$ | 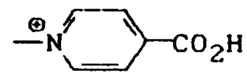 | 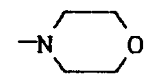 |
| 4 | 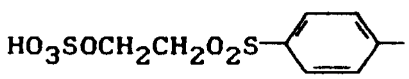 | " | 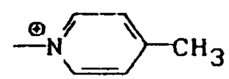 | " |
| 5 | " | " | 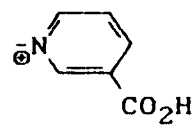 | 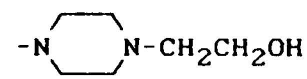 |
| 6 | 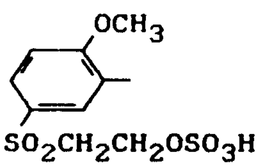 | $-CONH_2$ | " | " |
| 7 | 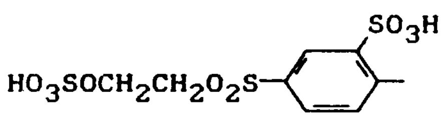 | " | 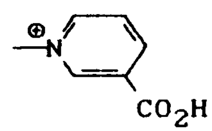 | 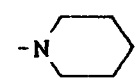 |
| 8 | " | $-SO_3H$ | 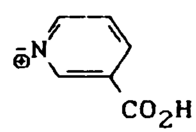 | " |

| Bsp. | D | $R^5$ | E | Z |
|---|---|---|---|---|
| 9 | 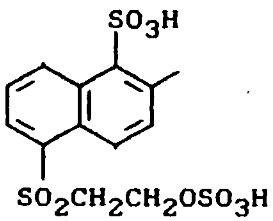 | $-CH_2SO_3H$ | 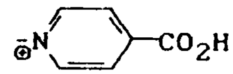 , | 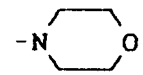 |
| 10 | " | " | 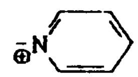 | " |
| 11 | 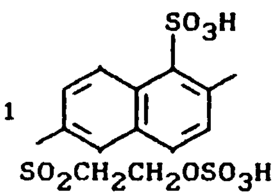 | " | 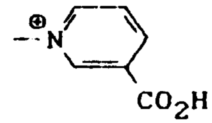 | " |
| 12 | " | $-CONH_2$ | " | 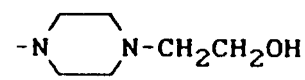 |
| 13 | " | " | 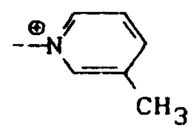 | " |

| Bsp. | D | $R^5$ | E | Z |
| --- | --- | --- | --- | --- |
| 14 | 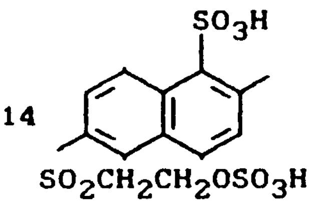 | $-SO_3H$ | 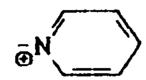 | 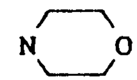 |
| 15 | " | $-CH_2SO_3H$ | " | " |
| 16 | " | " | 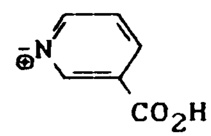 | " |
| 17 | " | " | 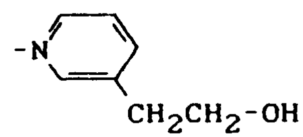 | " |
| 18 | 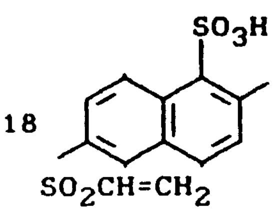 | " | 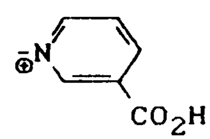 | 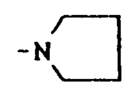 |

| Bsp. | D | $R^5$ | E | Z |
|---|---|---|---|---|
| 19 | 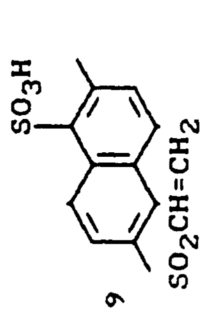 | $-CH_2SO_3H$ | 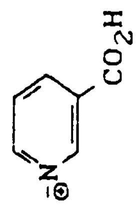 | 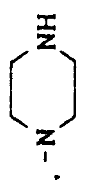 |
| 20 | " | " | " | 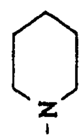 |

Beispiel 21

0,1 Mol 2,4-Diaminobenzolsulfonsäure werden in 400 ml Wasser mit Natronlauge neutral gelöst. Nach Zugabe von 0,105 Mol einer 2,4,6-Trichlortriazinanschlämmung in Wasser, Eis und Emulgator läßt man bei 0 bis 5 °C den pH-Wert auf 4 fallen und hält ihn dort mit Sodalösung. Sobald die Kondensation vollständig ist, versetzt man mit 0,1 Mol N-2-Hydroxy-ethyl-piperazin und erhöht den pH-Wert auf 5,5 bis 6,5.

Nachdem wiederum die Kondensation vollständig ist, versetzt man mit 0,1 Mol 3-Carboxypyridin und kondensiert bei pH 7,5/85 °C, wobei die entstehende Salzsäure mit Sodalösung neutralisiert wird. Nach Ende der Reaktion wird pH-kontrolliert bei pH 2,8 und 0 - 5 °C mit Natriumnitritlösung und HCl diazotiert. Nach Entfernen des überschüssigen Nitrits mit Amidosulfonsäure wird die Diazotierung zu einer Lösung von 6-Hydroxy-4-methyl-1-(3′-β-sulfatoethylsulfophenyl)-3-sulfomethyl-pyridon-(2) gegeben und bei pH 5 bis 6 (Soda) gekuppelt. Der Farbstoff wird ausgefällt, abgesaugt, getrocknet und gemahlen. Es resultiert ein in Wasser leicht lösliches gelbes Pulver, das auf Baumwolle stark grünstichig gelbe Färbungen ergibt.

Der Farbstoff entspricht der Formel

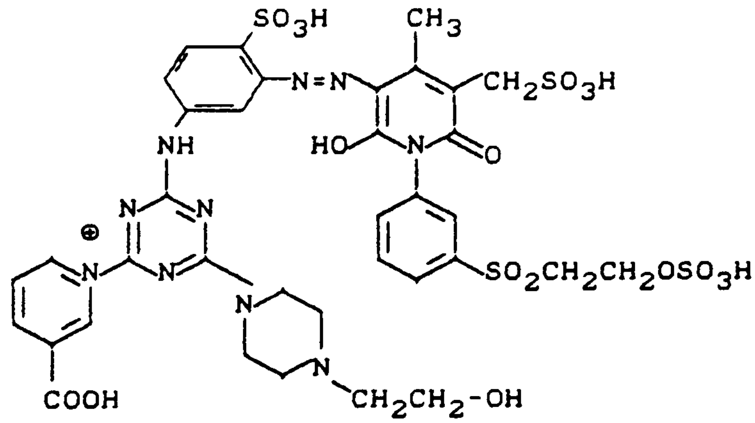

Beispiel 22

Ersetzt man in Beispiel 21 die Kupplungskomponente durch 1(4′-β-Sulfatoethylsulfophenyl)-pyrazol-5-on-3-carbonsäure und arbeitet ansonsten wie im Beispiel 21 angegeben, erhält man den Farbstoff der Formel

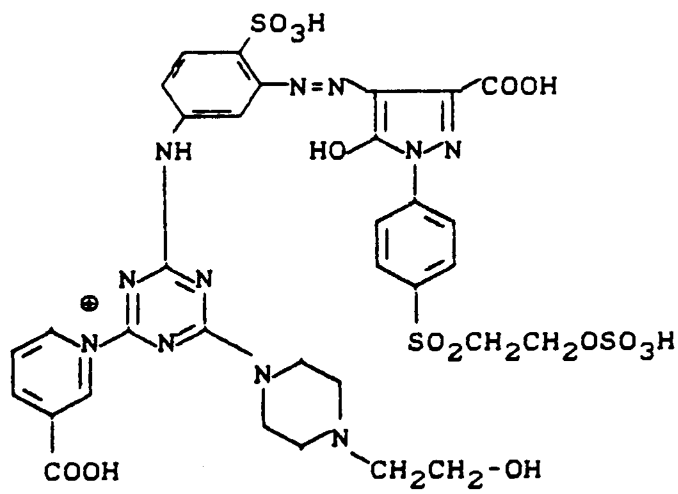

der Baumwolle in grünstichig gelben Tönen färbt.

Beispiel 23

Ersetzt man in Beispiel 21 die 2,4-Diaminobenzolsulfonsäure durch die 2,5-Diaminobenzolsulfonsäure, erhält man die Diazokomponente der Formel

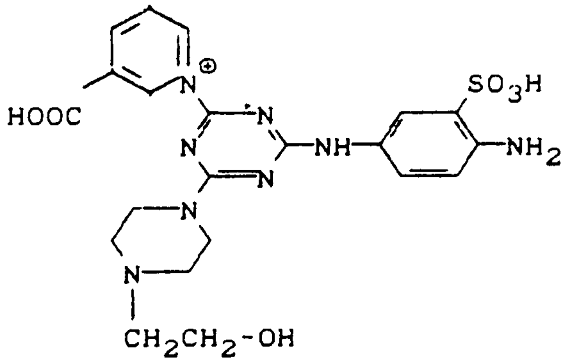

Durch Diazotierung und Kupplung mit der in Beispiel 22 genannten Kupplungskomponente erhält man den Farbstoff der Formel

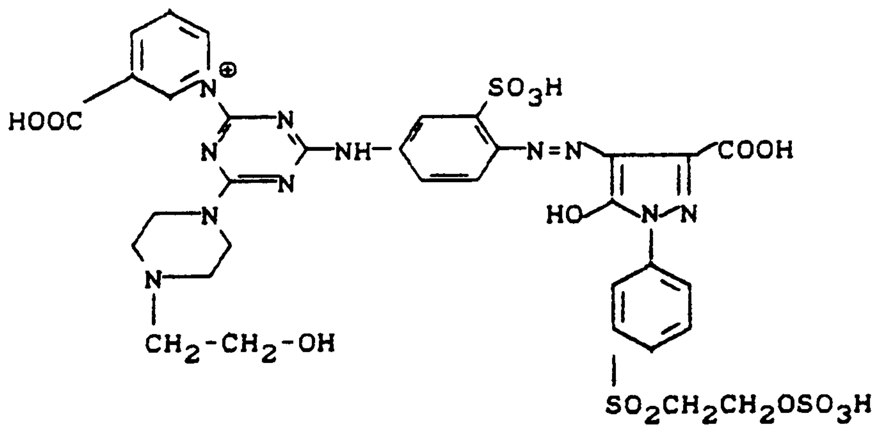

Dieser Farbstoff färbt Baumwolle in goldgelben Tönen. Analog zu den beschriebenen Farbstoffen lassen sich auch die in der folgenden Tabelle aufgeführten Farbstoffe herstellen, die Baumwolle in den angegebenen Farbtönen färben.

| Beispiel | Farbstoff / Farbton |
|---|---|
| 24 | 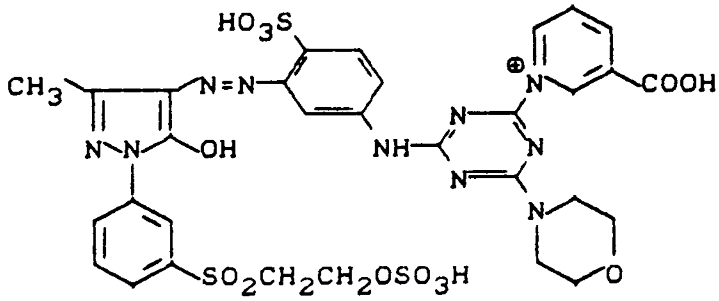 grünstichig-gelb |
| 25 | 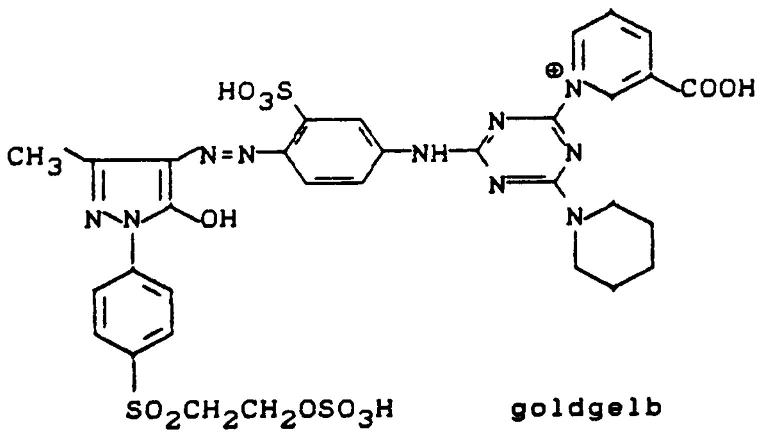 goldgelb |
| 26 | 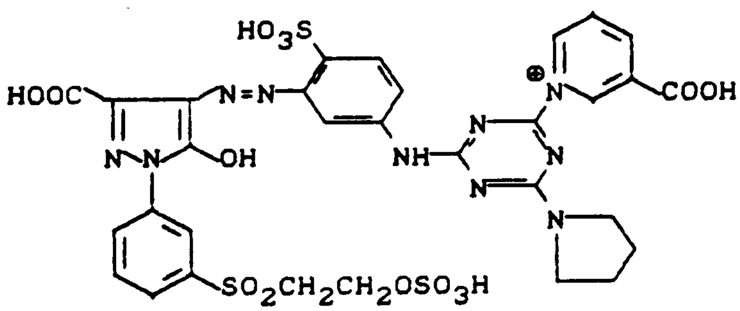 grünstichig-gelb |

Beispiel | Farbstoff / Farbton

27

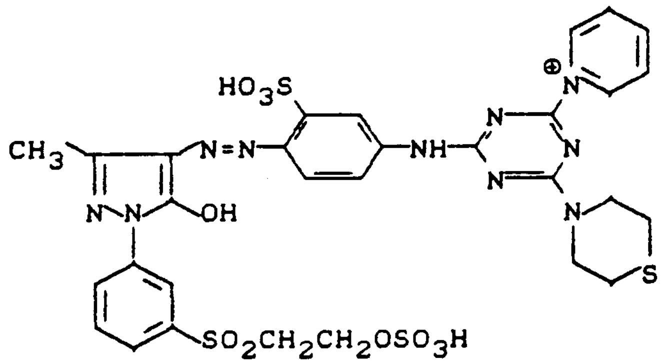

goldgelb

28

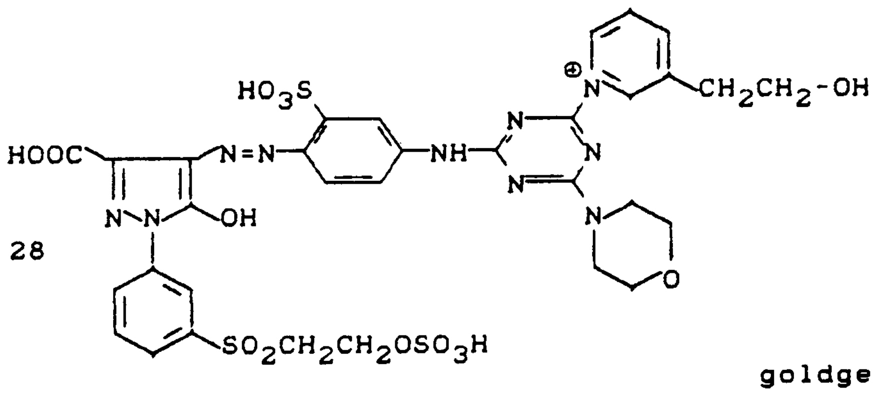

goldgelb

29

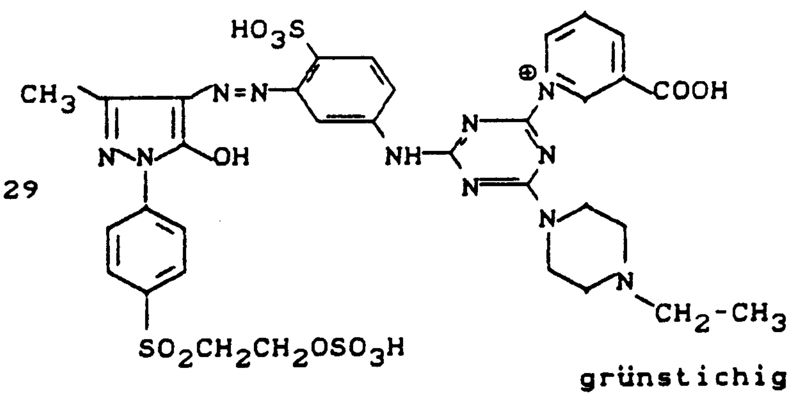

grünstichig-gelb

| Beispiel | Farbstoff / Farbton |
|---|---|
| 30 | 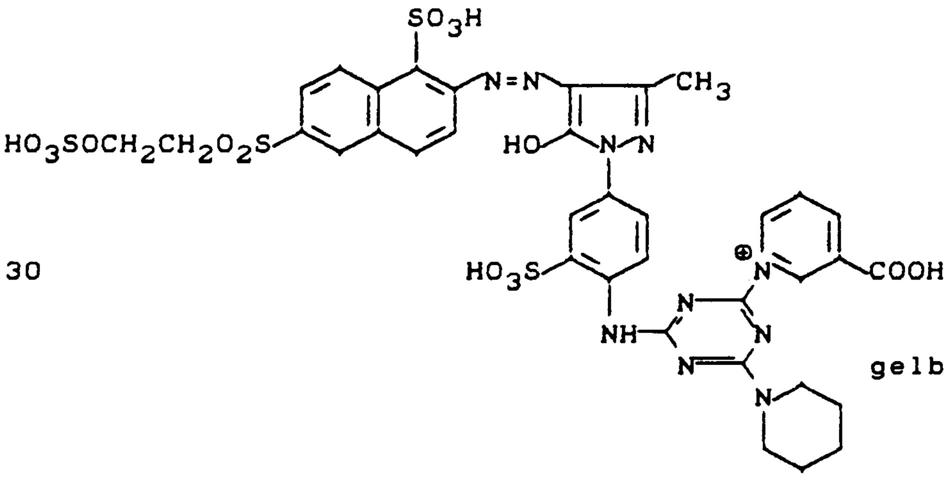 gelb |
| 31 | 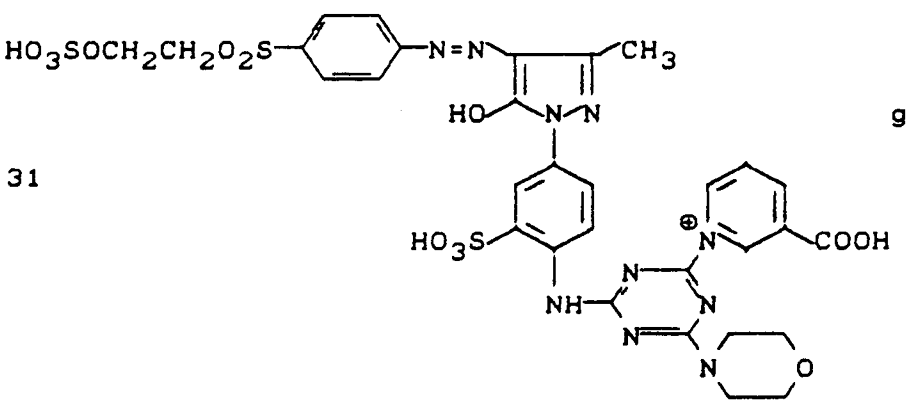 gelb |
| 32 | 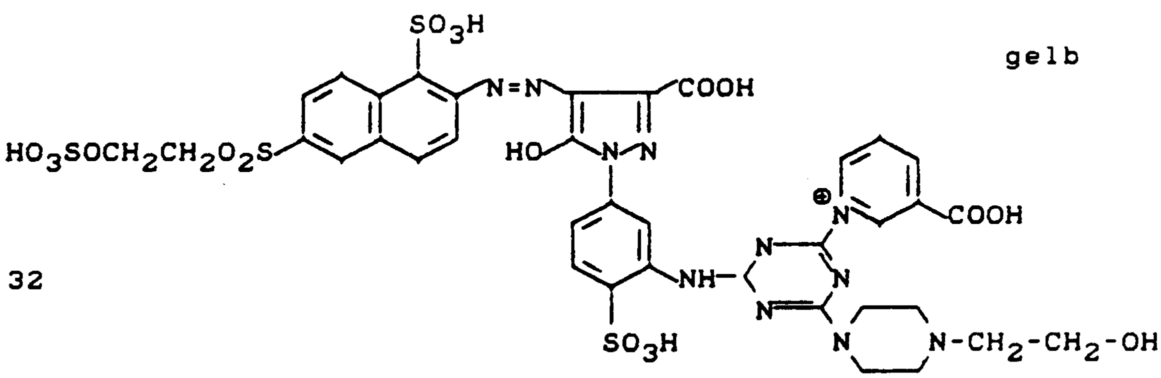 gelb |

Beispiel 33

Die analog Beispiel 2 hergestellte Diazotierung von 1-Amino-4-sulfatoethylsulfonylbenzol wird mit 4-Acetylamino-2-amino-benzol-1-sulfonsäure versetzt und der pH mit Natriumacetatlösung auf pH 2 angehoben und gehalten. Nach beendeter Kupplung wird bei pH 4 und 0 °C mit 2,4,6-Trifluortriazin acyliert, wobei entstehende Fluorwasserstoffsäure mit Sodalösung neutralisiert wird. Nach Ende der Kondensation wird mit Morpholin bei pH 6,5 und 0 - 5 °C und anschließend bei pH 7,5 mit 3-Carboxy-pyridin umgesetzt, wobei der pH-Wert jeweils durch Zutropfen von Natriumhydrogencarbonatlösung konstant gehalten wird. Nach beendeter Kondensation wird der Farbstoff isoliert, getrocknet und gemahlen. Der Farbstoff der Formel

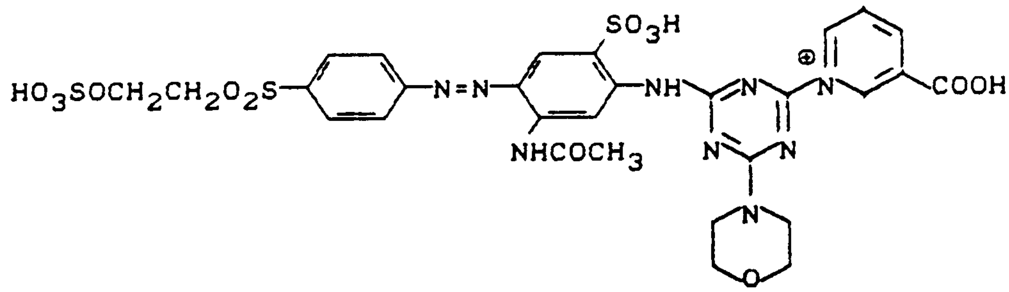

oder Gemische mit der Vinylsulfonform, färbt Baumwolle in gelben Tönen.

Beispiel 34

Bei Verwendung der entsprechenden Komponenten läßt sich analog Beispiel 33 der Farbstoff der Formel

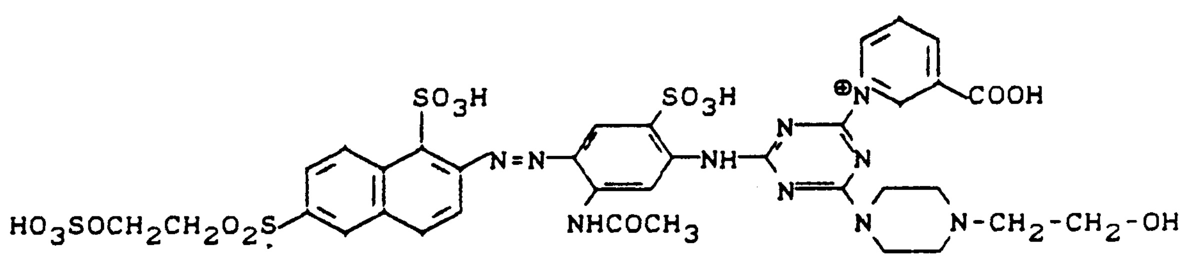

bzw. Gemische mit der Vinylsulfonform herstellen, die Baumwolle in gelben Tönen färbt.

Analog der Beispiele 33 und 34 lassen sich auch die folgenden Farbstoffe herstellen, die Baumwolle in gelben Tönen färben:

Beispiel

35

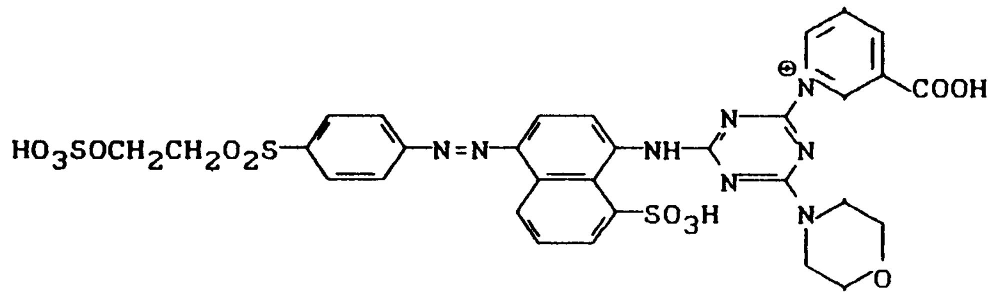

36

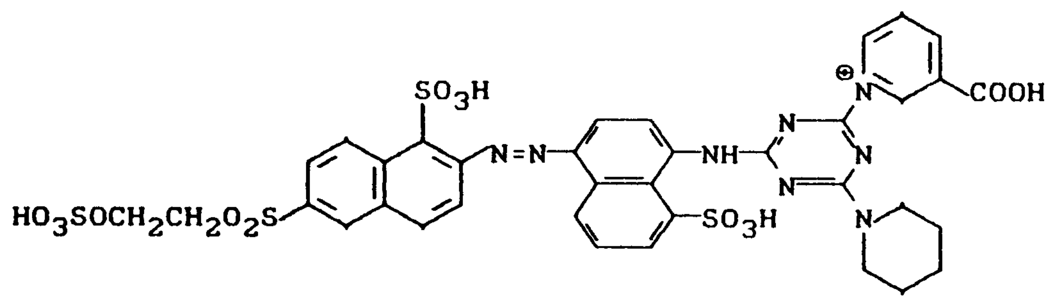

37

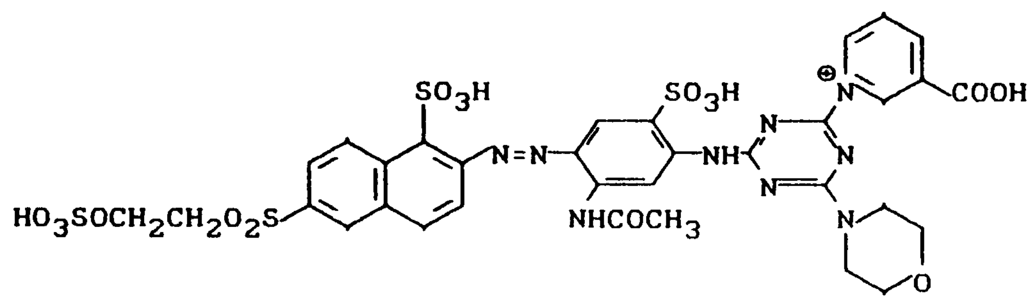

| Beispiel | |
|---|---|
| 38 | 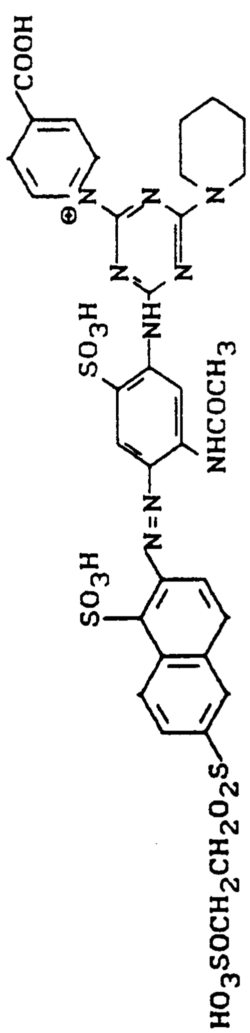 |
| 39 | 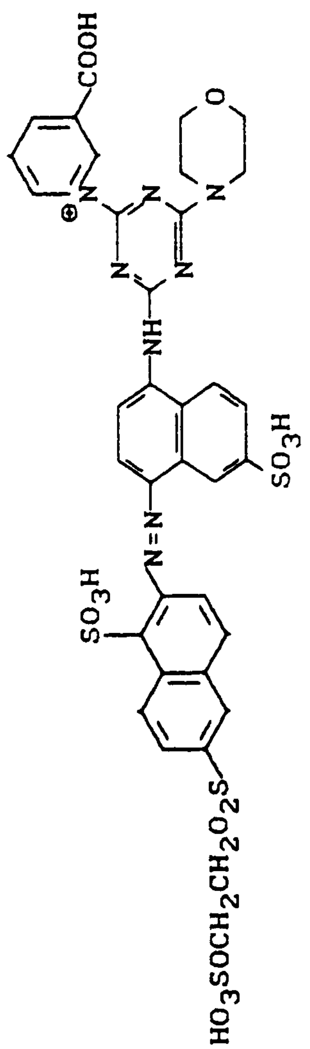 |
| 40 | 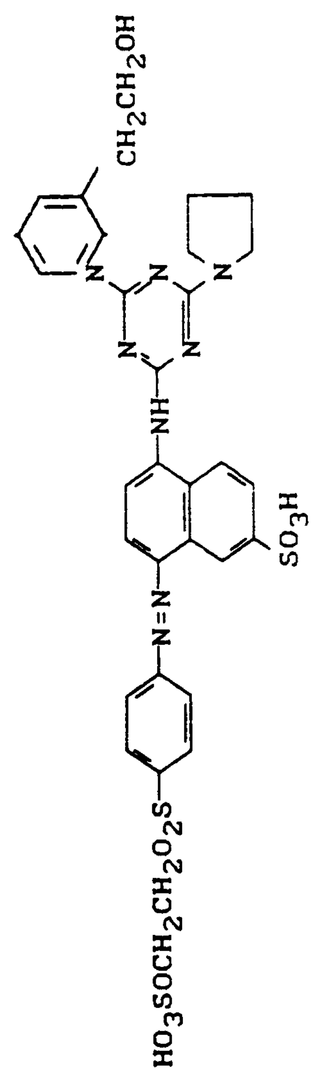 |

Beispiel 41

0,1 Mol H-Säure werden in 350 ml Wasser alkalisch gelöst, mit Salzsäure auf pH 6-7 gestellt und mit 0,105 Mol 2,4,6-Trifluortriazin bei 0 °C acyliert, wobei der pH mit Natriumcarbonat bei 4,5 gehalten wird. Danach wird bei pH 7,5 und 5 °C mit Morpholin kondensiert. Nun werden 0,095 Mol 2-Amino-6-sulfatoethylsulfonylnaphthalin-1-sulfonsäure in 300 ml Waser gelöst und mit Natriumnitritlösung salzsauer diazotiert. Nach dem Entfernen von überschüssigem Nitrit mit Amidosulfonsäure wird die Diazotierung zu der Kupplungskomponente gegeben und mit Sodalösung pH 6,5 bis 7 eingestellt und gehalten. Nach beendeter Kupplung wird mit 0,1 Mol 3-Carboxypyridin versetzt und bei pH 7,5 und 80 °C kondensiert. Nach dem Abkühlen wird der Farbstoff isoliert, getrocknet und gemahlen. Der so erhaltene Farbstoff der Formel

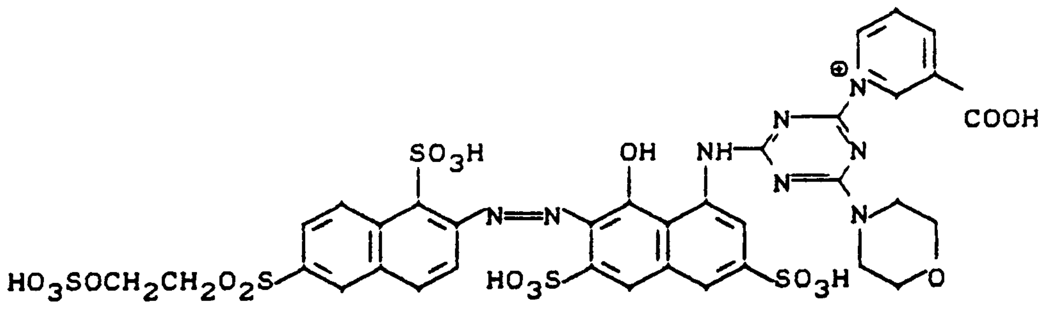

bzw. im Gemisch mit der Vinylsulfonform färbt Baumwolle in blaustichig roten Tönen.

Beispiel 42

0,095 Mol 1-Amino-4-sulfatoethylsulfonylbenzol werden in Wasser angeschlagen und mit Natriumnitritlösung diazotiert. Man läßt 30 Minuten nachrühren und entfernt dann überschüssiges Nitrit mit Amidosulfonsäure. Die Diazotierung wird zu der in Beispiel 41 hergestellten Kupplungskomponente gegeben und mit Natriumcarbonatlösung pH 6 bis 7 eingestellt. Nachdem die Kupplung beendet ist, wird mit Nicotinsäure bei pH 7,5 und 80 °C kondensiert, der Farbstoff isoliert, getrocknet und gemahlen.

Der Farbstoff der Formel

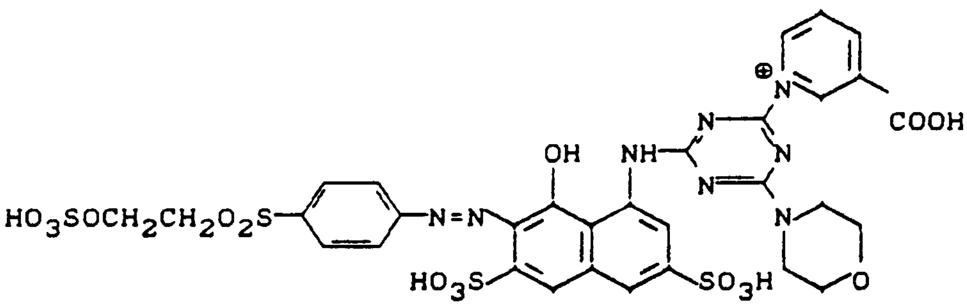

bzw. im Gemisch mit der Vinylsulfonform färbt Baumwolle in klaren roten Tönen.

Beispiel 43

Arbeitet man entsprechend dem Beispiel 41 und ersetzt die H-Säure durch die K-Säure, erhält man den Farbstoff der Formel

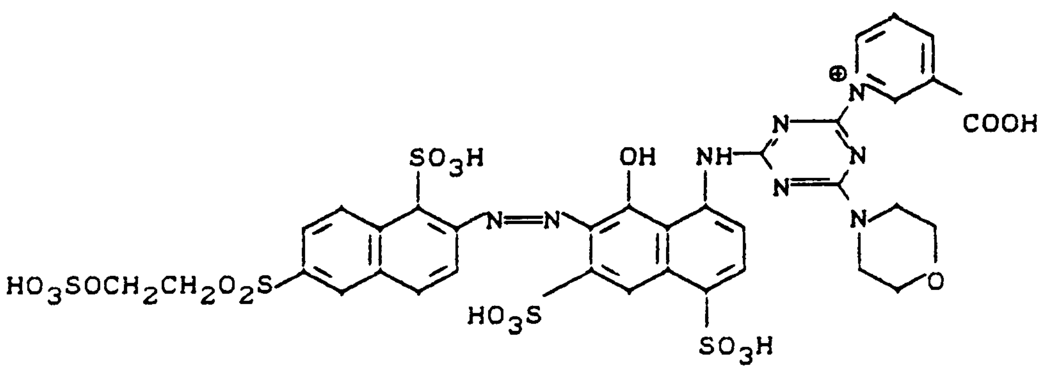

bzw. im Gemisch mit der Vinylsulfonform, mit dem Baumwolle in klaren roten Tönen bedruckt wird.

Beispiel 44

Arbeitet man entsprechend dem Beispiel 42 und ersetzt die H-Säure durch die K-Säure, erhält man den Farbstoff der Formel

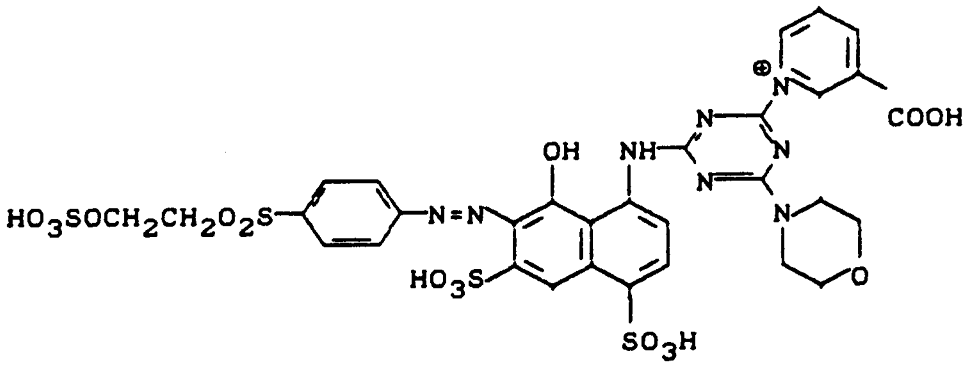

bzw. im Gemisch mit der Vinylsulfonform,
mit dem Baumwolle in klaren gelbstichig roten Tönen zu färben bzw. zu bedrucken ist.

Analog den in den voranstehenden Beispielen beschriebenen Verfahren lassen sich bei Verwendung der entsprechenden Ausgangsverbindungen D-$NH_2$, K-$H_2$,

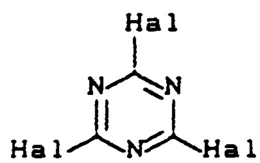

,

Pyridinderivat (E)
und Amin H-Z die Farbstoffe der Formel

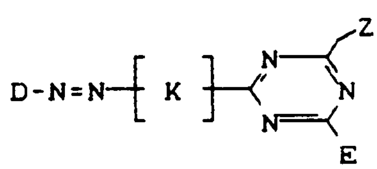

der Beispiele 45 bis 104 erhalten, die alle teilweise in Form der Vinylsulfone vorliegen können.

| Beispiel | D- | -K- | E | Z | Farbton |
|---|---|---|---|---|---|
| 45 | 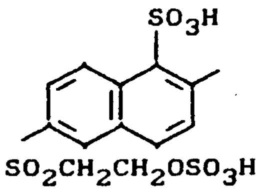 | 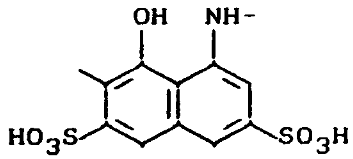 | 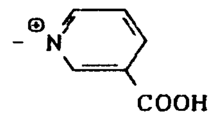 | 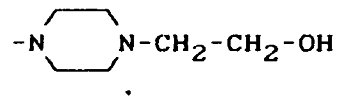 | blaustichig rot |
| 46 | " | " | 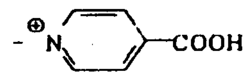 | 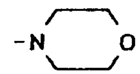 | " |
| 47 | " | " | 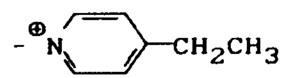 | 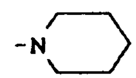 | " |
| 48 | " | " | 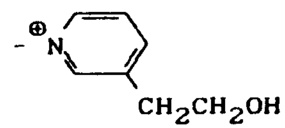 | 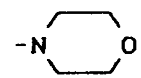 | " |
| 49 | " | " | 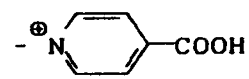 | 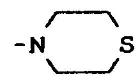 | " |
| 50 | " | " | 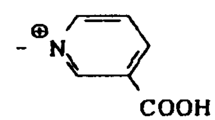 | 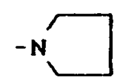 | " |

| Beispiel | D- | -K- | E | Z | Farbton |
|---|---|---|---|---|---|
| 51 | 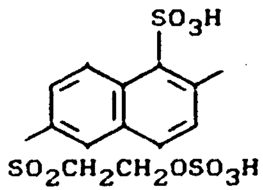 | 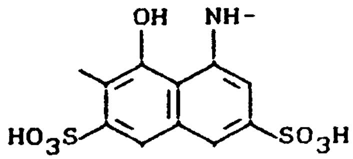 | 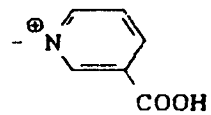 | 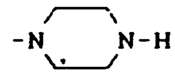 | blaustichig rot |
| 51 a | " | " | 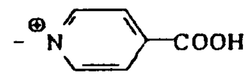 | 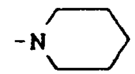 | " |
| 52 | " | " | 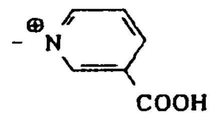 | 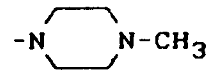 | " |
| 53 | " | 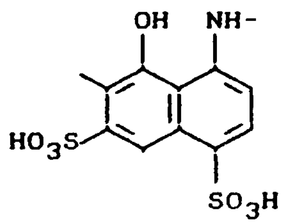 | " | 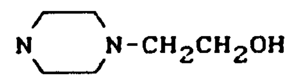 | rot |
| 54 | " | " | " | 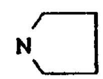 | " |

| Beispiel | D- | -K- | E | Z | Farbton |
|---|---|---|---|---|---|
| 55 | 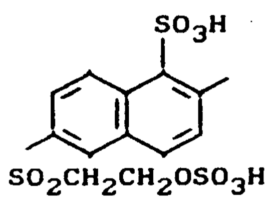 | 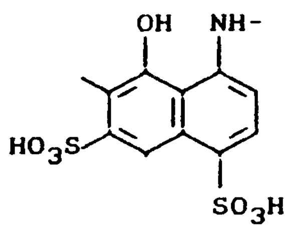 | 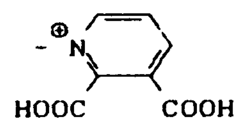 | 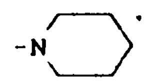 | rot |
| 55 a | " | " | 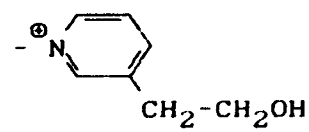 | 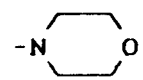 | " |
| 56 | " | " | 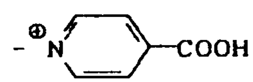 | 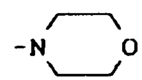 | " |
| 57 | " | " | 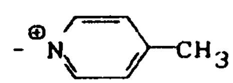 | 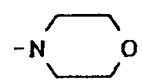 | " |

| Beispiel | D- | -K- | E | Z | Farbton |
|---|---|---|---|---|---|
| 58 | 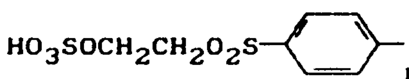 | 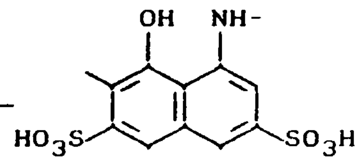 | 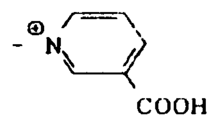 | 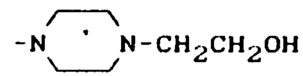 | gelbstichig rot |
| 59 | " | " | " | 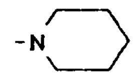 | " |
| 60 | " | " | 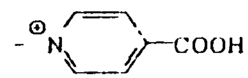 | 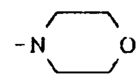 | " |
| 61 | " | " | 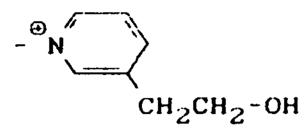 | " | " |
| 62 | " | " | 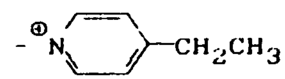 | 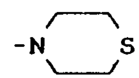 | " |

| Beispiel | D- | -K- | E | Z | Farbton |
|---|---|---|---|---|---|
| 63 | 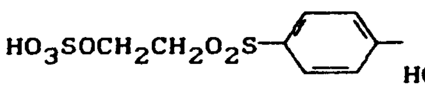 | 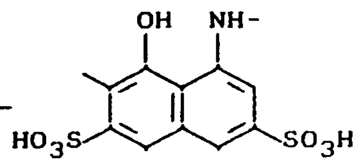 | 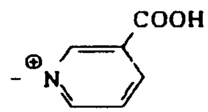 | 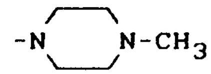 | gelbstichig rot |
| 64 | " | " | 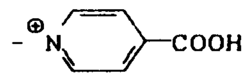 | 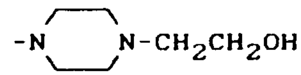 | " |
| 65 | " | 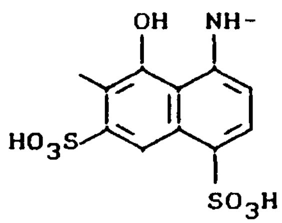 | " | 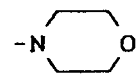 | |
| 66 | " | " | 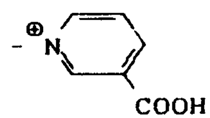 | 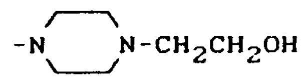 | |
| 67 | " | " | " | 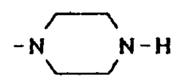 | |

| Bei-spiel | D- | -K- | E | Z | Farbton |
|---|---|---|---|---|---|
| 68 | 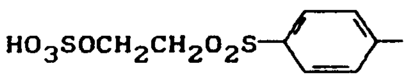 | 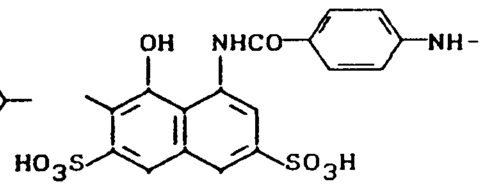 | 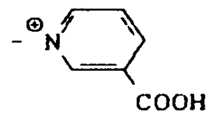 | 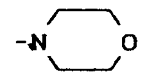 | gelbstichig rot |
| 69 | " | 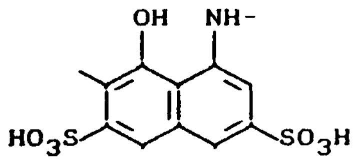 | 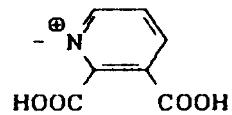 | " | " |
| 70 | 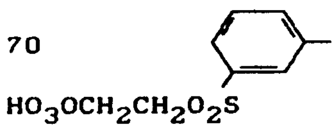 | " | 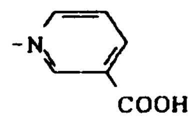 | " | " |
| 71 | 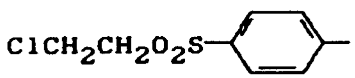 | " | " | " | " |
| 72 | 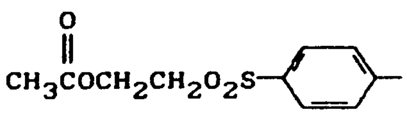 | " | " | " | " |

| Beispiel | D- | -K- | E | Z | Farbton |
|---|---|---|---|---|---|
| 73 | 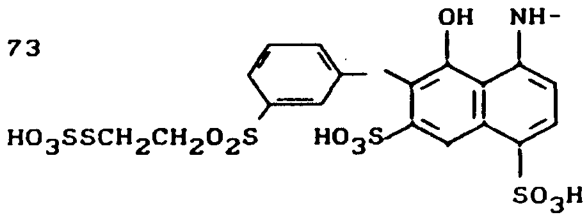 | | 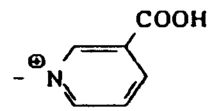 | 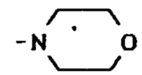 | gelbstichig rot |
| 74 | " | " | " | 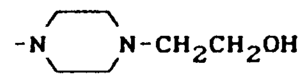 | " |
| 75 | 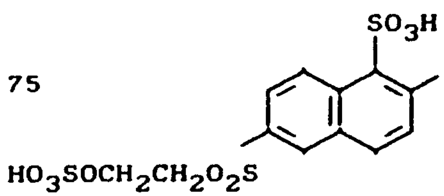 | 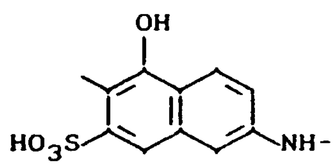 | 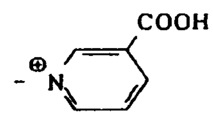 | 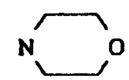 | scharlach |
| 76 | " | " | " | 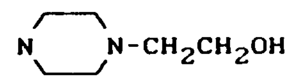 | " |
| 77 | " | " | " | 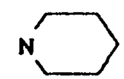 | " |

| Beispiel | D- | -K- | E | Z | Farbton |
|---|---|---|---|---|---|
| 78 | 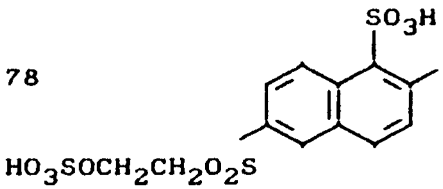 | 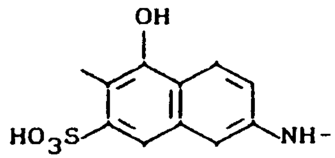 | 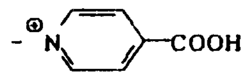 | 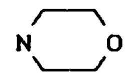 | scharlach |
| 79 | " | " | | | " |
| 80 | 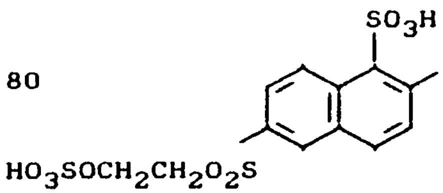 | 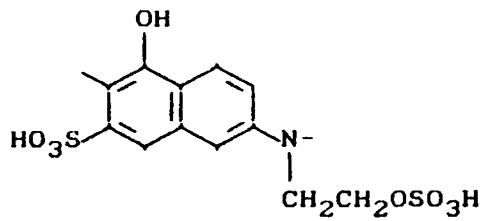 | 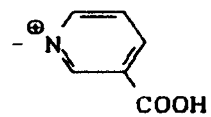 | 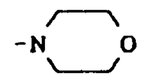 | scharlach |
| 81 | " | " | " | 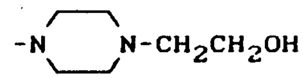 | " |
| 82 | " | 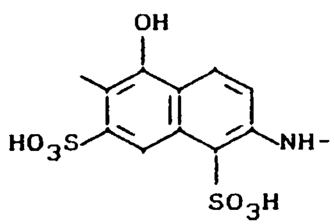 | " | " | " |

| Beispiel | D- | -K- | E | Z | Farbton |
|---|---|---|---|---|---|
| 83 | 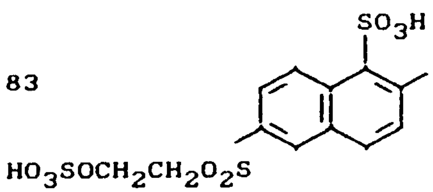 | 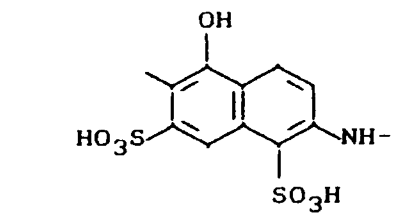 | 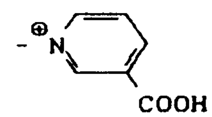 | 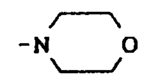 | scharlach |
| 84 | " | " | 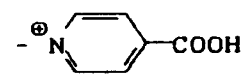 | " | " |
| 85 | 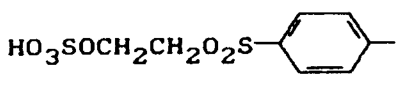 | 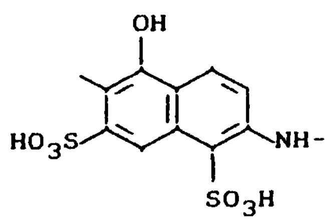 | 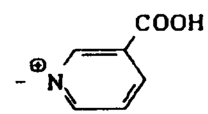 | 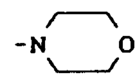 | orange |
| 86 | " | " | " | 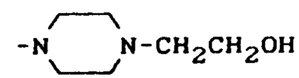 | " |

| Beispiel | D- | -K- | E | Z | Farbton |
|---|---|---|---|---|---|
| 87 | 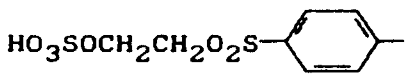 | 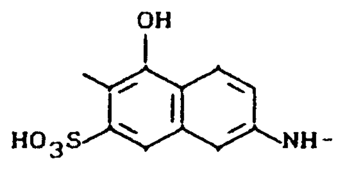 | 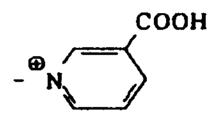 | 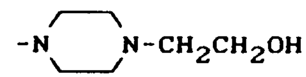 | orange |
| 88 | " | " | " | 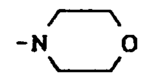 | " |
| 89 | 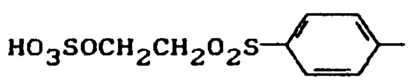 | 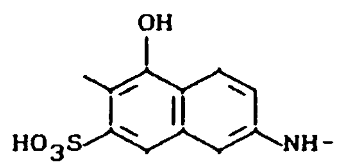 | 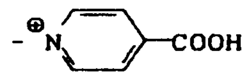 | 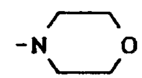 | orange |
| 90 | " | " | 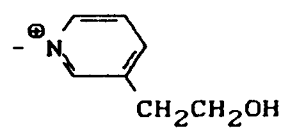 | " | " |

| Beispiel | D- | -K- | E | Z | Farbton |
|---|---|---|---|---|---|
| 91 | 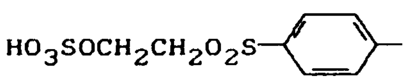 | 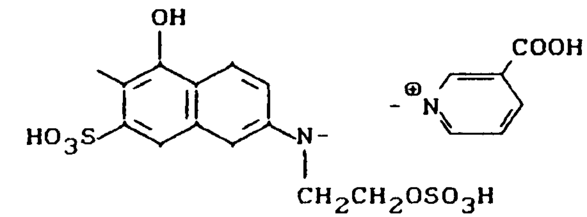 |  | 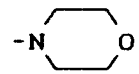 | orange |
| 92 | " | " | " | 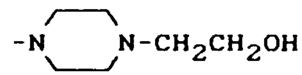 | " |
| 93 | 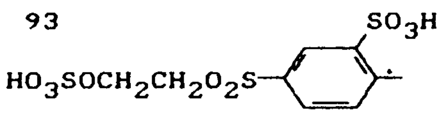 | 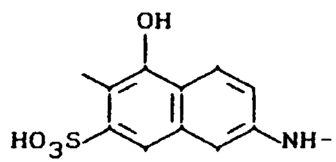 | 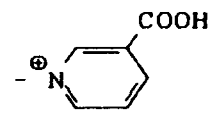 | 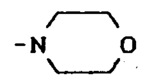 | orange |
| 94 | " | " | 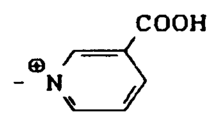 | 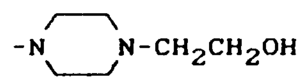 | " |

| Beispiel | D- | -K- | E | Z | Farbton |
|---|---|---|---|---|---|
| 95 | 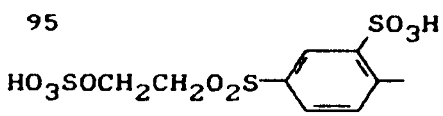 | 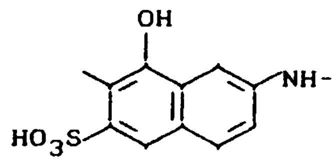 | 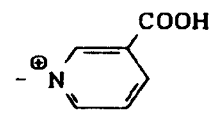 | 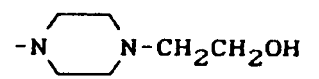 | orange |
| 96 | 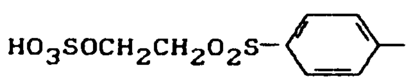 | " | " | 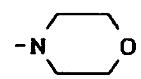 | " |
| 97 | " | " | " | " | " |
| 98 | 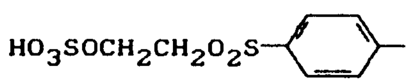 | 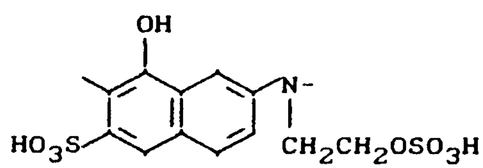 | 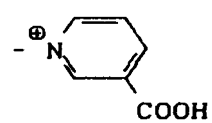 | 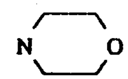 | scharlach |

| Beispiel | D- | -K- | E | Z | Farbton |
|---|---|---|---|---|---|
| 99 | 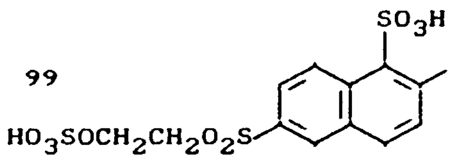 | 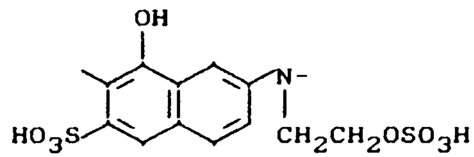 | 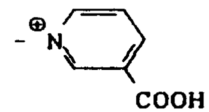 | 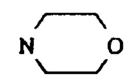 | scharlach |
| 100 | " | 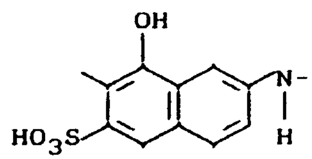 | " | " | " |
| 101 | " | 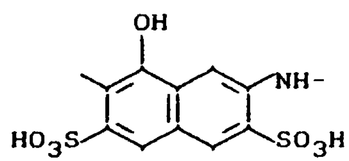 | " | " | " |
| 102 | " | " | " | " | " |

| Beispiel | D- | -K- | E | Z | Farbton |
|---|---|---|---|---|---|
| 103 | 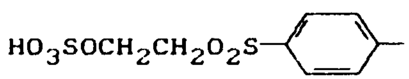 | 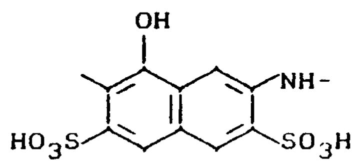 | 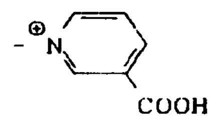 | 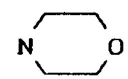 | scharlach |
| 104 | " | " | 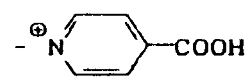 | " | " |

Beispiel 105

0,1 Mol des Azofarbstoffes der Formel

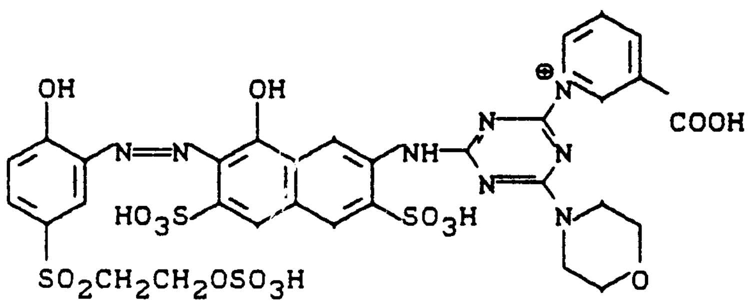

werden in 1 l Wasser neutral gelöst. Man streut bei Raumtemperatur 28 g Kupfersulfat ($CuSO_4 \cdot 5H_2O$) ein und hält durch gleichzeitiges Eintropfen von Sodalösung den pH zwischen 5,5 und 6,5. Nach beendeter Kupferung wird der Farbstoff mit Kochsalz ausgesalzen, abgesaugt, getrocknet und gemahlen.

Man erhält ein dunkles Pulver, das sich leicht in Wasser löst und Baumwolle nach einem der für Reaktivfarbstoffe üblichen Färbeverfahren rubin färbt. Der Farbstoff entspricht der Formel

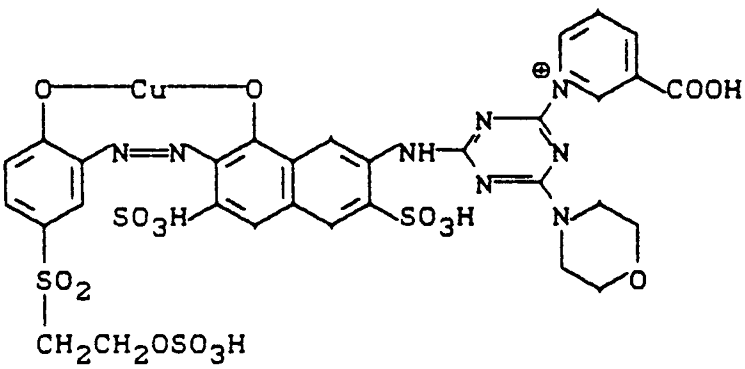

Der in diesem Beispiel verwendete Azofarbstoff wird erhalten, indem man 2-Amino-4-sulfatoethylsulfonylphenol diazotiert und bei pH 5,5 bis 6,5 auf das Kondensationsprodukt kuppelt, das man durch Acylierung von 2-Amino-8-hydroxy-naphthalin-3,6-disulfonsäure mit 2,4,6-Trichlortriazin und Kondensation mit Morpholin und 3-Carboxypyridin erhält.

Beispiel 106

In die analog Beispiel 2 hergestellte Diazotierung von 1-Amino-4-sulfatoethylsulfonylbenzol wird das bei pH 4 und 40 °C hergestellte Kondensationsprodukt aus 1-Hydroxy-3-sulfo-7-(2'-sulfo-4-aminophenylamino)-naphthalin, 2,4,6-Trifluortriazin und Morpholin gegeben. Durch Einstellen eines pH-Wertes von 6 bis 7 mit Sodalösung wird die Kupplung durchgeführt. Anschließend wird der Farbstoff bei pH 7,5 und 85 °C mit 3-Carboxypyridin umgesetzt, dabei kann die $\beta$-Sulfatoethylsulfonylgruppe teilweise in den Vinylsulfon-Rest umgewandelt werden. Nach Isolieren, Trocknen und Mahlen erhält man ein dunkelbraunes Pulver, das sich in Wasser leicht löst und Baumwolle in braunen Tönen färbt der folgenden Formel:

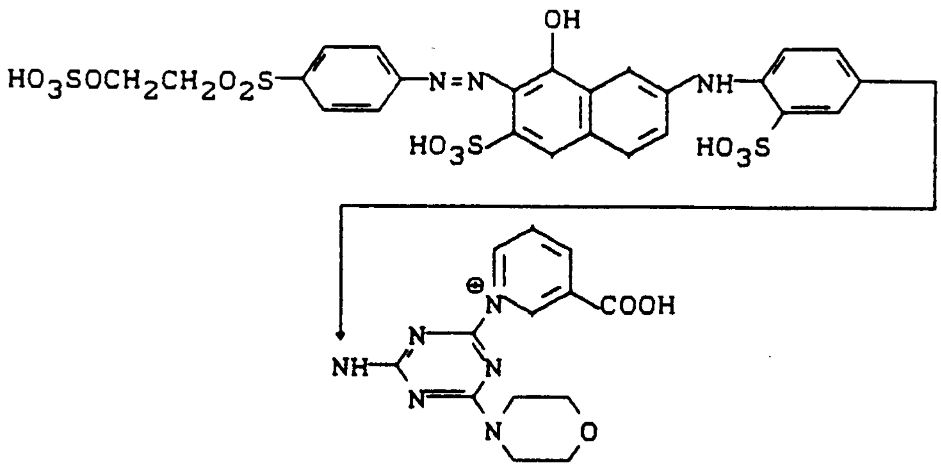

Beispiel 107

Ersetzt man im Beispiel 106 die dort angegebene Diazotierung durch die im Beispiel 1 beschriebene Diazotierung, erhält man nach der gleichen Verfahrensweise den Farbstoff der Formel

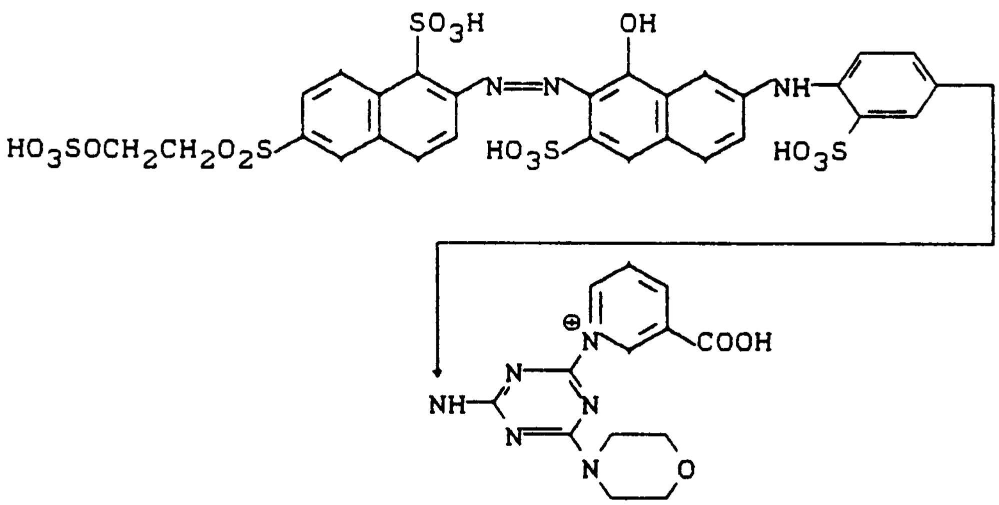

der Baumwolle ebenfalls in braunen Tönen färbt.

Beispiel 108

0,1 Mol des Diazofarbstoffes der Formel

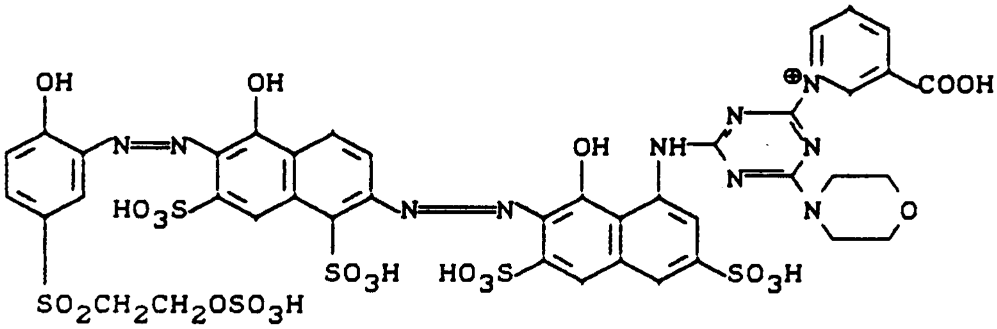

werden in 1 l Wasser neutral gelöst, bei Raumtemperatur mit 28 g Kupfersulfat ($CUSO_4 \cdot 5H_2O$) versetzt und durch Eintropfen von Sodalösung bei pH 5,5 bis 6,5 gehalten. Nach beendeter Kupferung wird der Farbstoff mit Kochsalz ausgesalzen, abgesaugt, getrocknet und gemahlen.

Man erhält ein dunkelbraunes Pulver, daß sich leicht in Wasser löst und Baumwolle nach einem der für Reaktivfarbstoffe üblichen Färbeverfahren in marineblauen Tönen färbt. Der Farbstoff entspricht der Formel

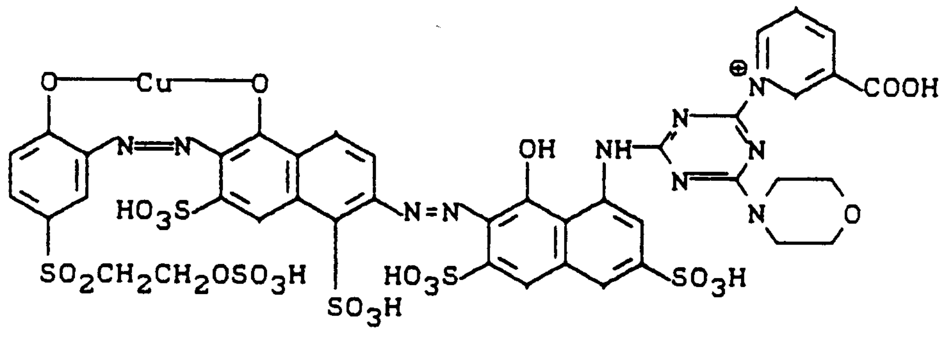

Der in diesem Beispiel verwendete Disazofarbstoff wird erhalten, indem man 2-Amino-4-sulfatoethylsulfonylphenol diazotiert, bei pH 5,5 bis 6,5 auf 2-Amino-5-hydroxy-naphthalin-1,7-disulfonsäure kuppelt, den resultierenden Aminoazofarbstoff diazotiert und bei pH 5,5 bis 6,5 auf das Kondensationsprodukt kuppelt, das man durch Acylierung von 1-Amino-8-hydroxy-naphthalin-3,6-disulfonsäure mit 2,4,6-Trichlortriazin, Kondensation mit dem entsprechenden Amin und Umsetzung mit Nicotinsäure erhält.

Beispiel 109

0,1 Mol des Azofarbstoffes der Formel

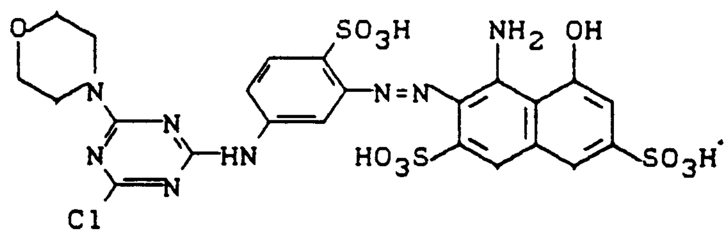

werden in Wasser bei 10°C und pH 7,5 angerührt. Dazu fügt man die wäßrig-salzsaure Diazotierung einer äquivalenten Menge an 2-Amino-6-(2-sulfatoethyl)sulfonyl-1-naphthalinsulfonsäure und hält gleichzeitig durch Zudosieren vom Kaliumhydrogencarbonatlösung den pH konstant zwischen 6,5 und 7,5. Nach beendeter Kupplung wird der Farbstoff mit 0,1 Mol 3-Carboxypyridin versetzt und bei pH 7-8 und 90°C kondensiert. Danach wird isoliert, getrocknet und gemahlen; man erhält ein schwarzes Pulver, das Baumwolle in marineblauen Tönen färbt. Der Farbstoff entspricht der Formel

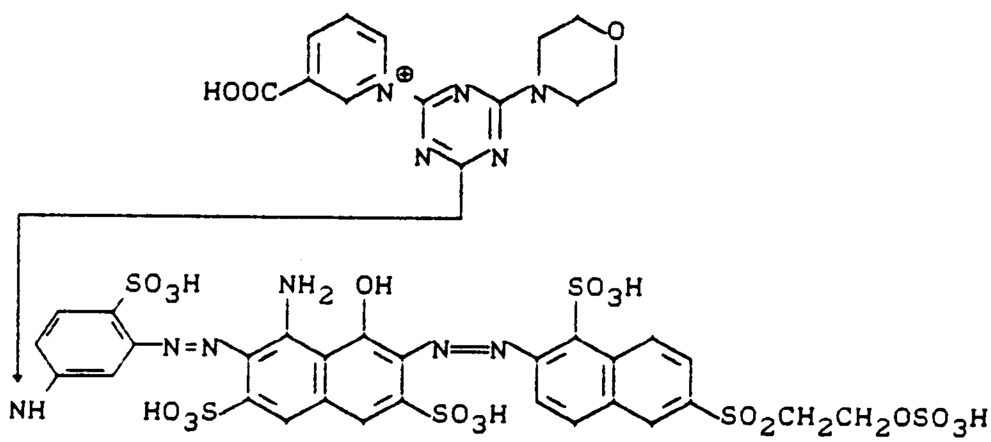

bzw. Gemische mit der Vinylsulfonform

Beispiel 110

Durch Variation der Diazokomponenten erhält man in analoger Arbeitsweise Beispiel 110:

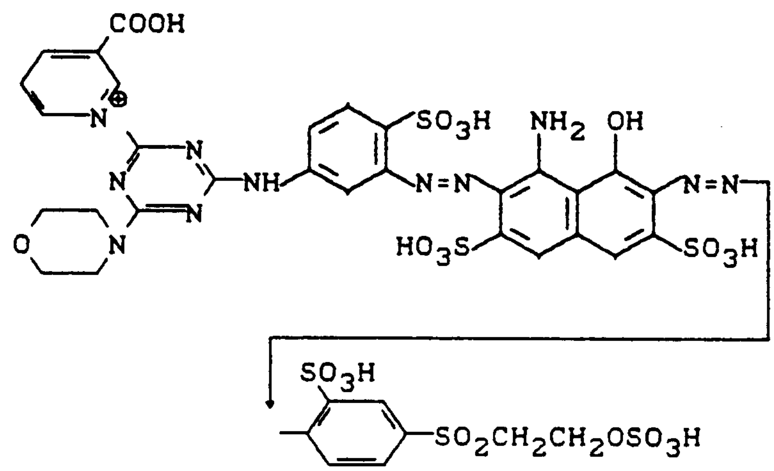

Beispiel 111

0,1 Mol 2,4-Diaminobenzolsulfonsäure werden in Wasser bei pH 4 und 0 °C mit 2,4,6-Trichlortriazin acyliert. Durch Umsetzung mit Morpholin erhält man die Diazokomponente der Formel

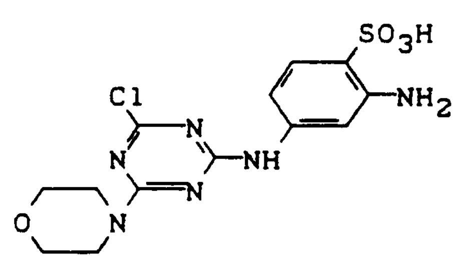

Die bei den Kondensationen entstehende Salzsäure wurde mit Sodalösung neutralisiert.

Die wäßrig-salzsaure Diazotierung dieses Kondensationsproduktes wurde zu dem Azofarbstoff der Formel

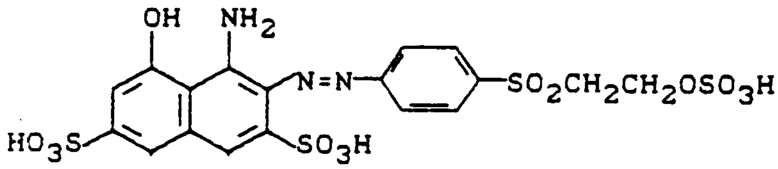

gegeben und der pH-Wert durch Eintropfen von Sodalösung bei 6,5 gehalten. Nach beendeter Kupplung wurde der Farbstoff mit 0,1 Mol Nicotinsäure bei 90 °C kondensiert, wobei der pH mit Soda-Lösung bei pH 7,5 gehalten wird. Nach Isolieren, Trocknen und Mahlen erhält man ein schwarzes Pulver, das Baumwolle in marineblauen Tönen färbt. Der Farbstoff entspricht der Formel

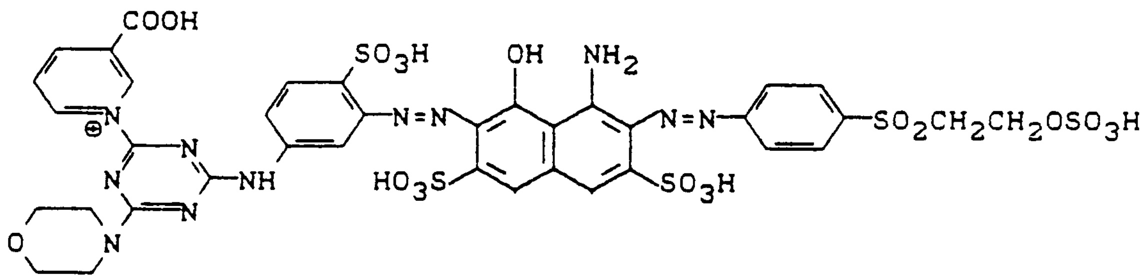

bzw. im Gemisch mit der Vinylsulfonform

Beispiel 112

0,1 Mol wäßrig-salzsauer diazotiertes 2-Amino-6-sulfatoethylsulfonylnaphthalin wird mit der äquivalenten Menge neutral gelöster 1-Amino-8-hydroxy-naphthalin-3,6-disulfonsäure tropfenweise versetzt. Nachdem die saure Kupplung beendet ist, gibt man die Diazotierung aus Beispiel 111 hinzu und stellt mit Sodalösung pH 6,5 ein. Nach beendeter Kupplung wurde mit 0,1 Mol Nicotinsäure bei 90 °C kondensiert, wobei der pH mit Sodalösung bei pH 7,5 gehalten wird. Nach Isolieren, Trocknen und Mahlen erhält man ein schwarzes Pulver, das Baumwolle in marineblau bis schwarzen Tönen färbt. Der Farbstoff entspricht der Formel

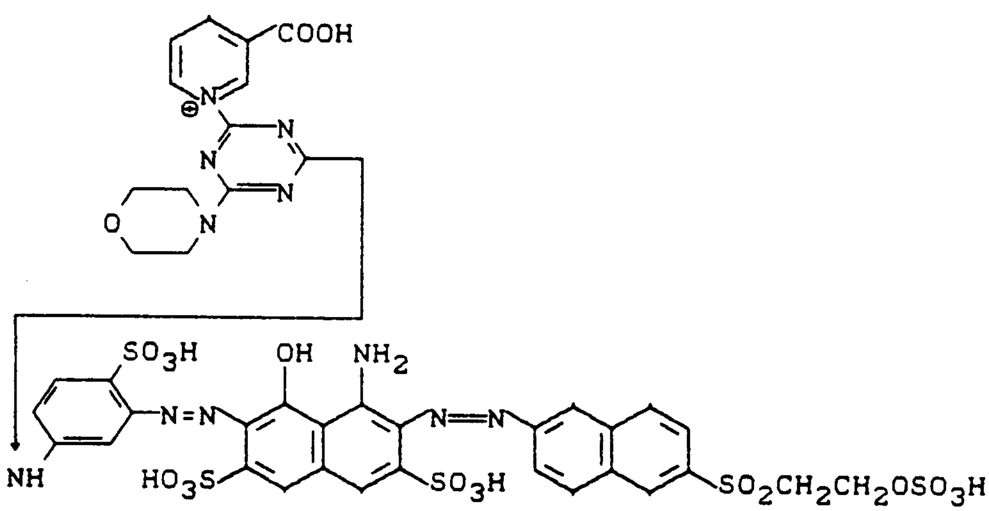

wobei die β-Sulfatoethylsulfonylgruppe teilweise eliminiert sein kann.

Analog zu den beschriebenen Methoden lassen sich auch die in der folgenden Tabelle aufgeführten Farbstoffe herstellen, die Baumwolle im angegebenen Farbton färben.

| Beispiel | Farbstoff | Farbton |
|---|---|---|
| 113 | 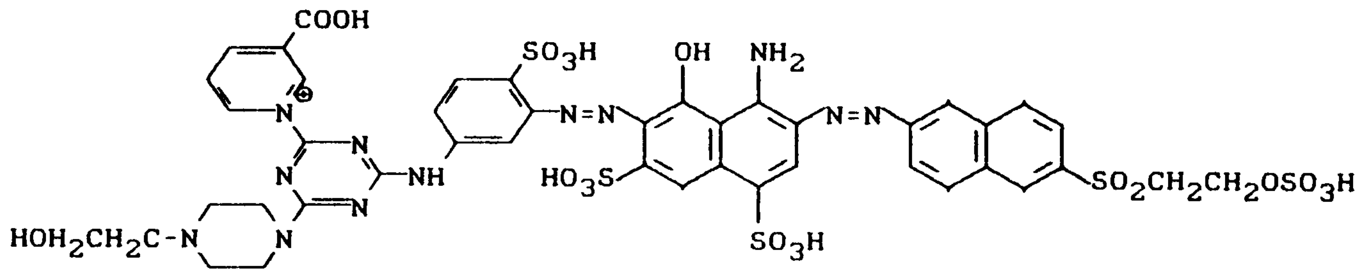 | marineblau |
| 114 | 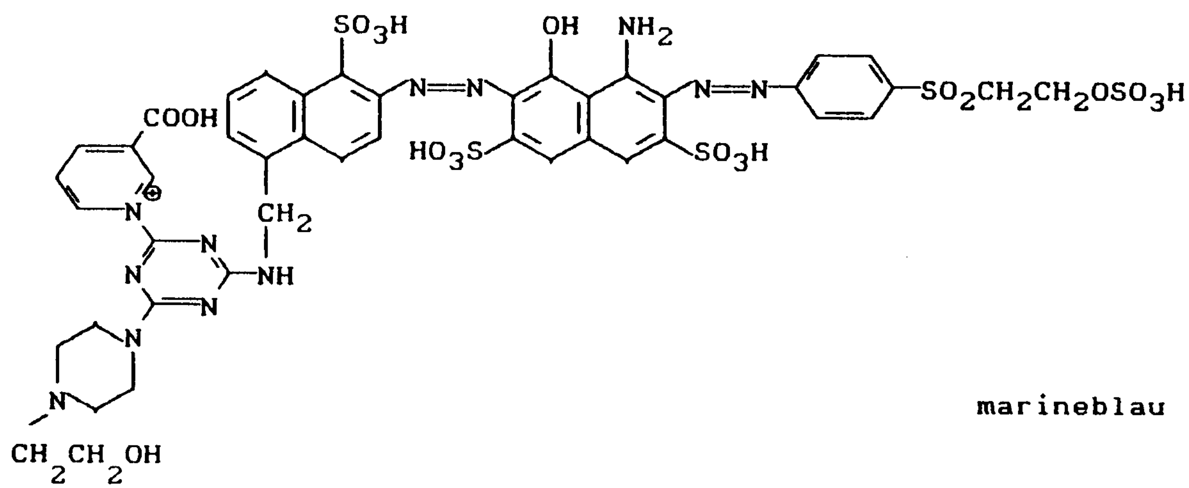 | marineblau |

| Beispiel | Farbstoff | Farbton |
|---|---|---|
| 115 | 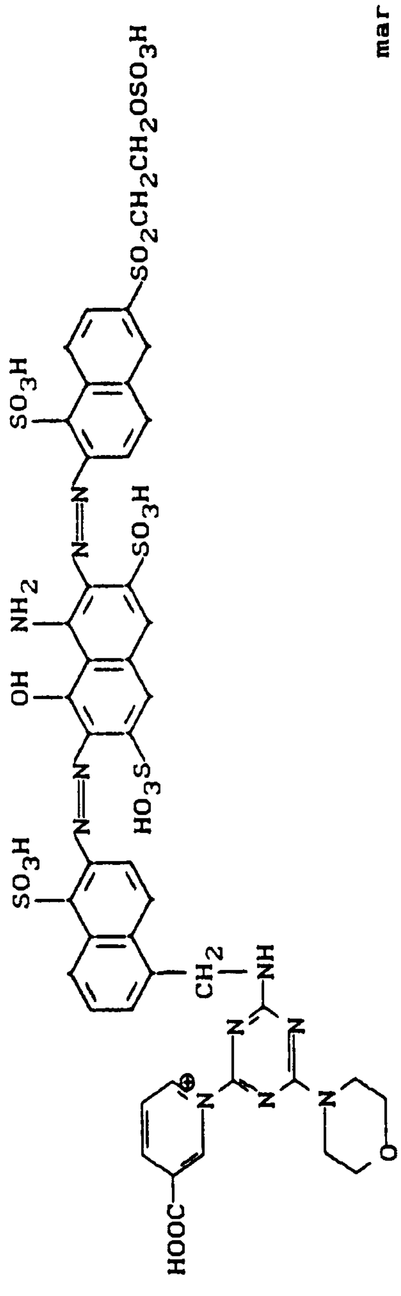 | marineblau |
| 116 | 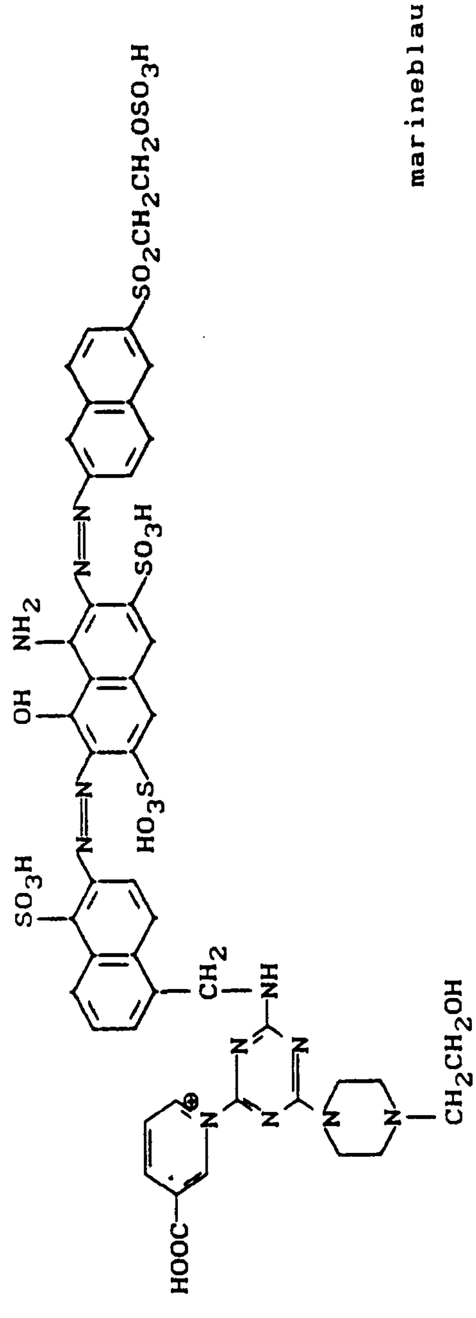 | marineblau |

Beispiel 117

Zu der analog Beispiel 2 hergestellten Diazotierung von 1-Amino-4-sulfatoethylsulfonylbenzol wird die äquivalente Menge an 5-Amino-2-naphthalinsulfonsäure gegeben und der pH-Wert durch Zugabe von

Natriumacetatlösung auf 4,5 gestellt. Nach 2 Stunden Rühren bei 10 bis 15 °C ist keine Diazotierung mehr nachweisbar. Es wird auf 0 bis 5 °C abgekühlt und salzsauer mit Natriumnitritlösung diazotiert. Nach 1 Stunde wird überschüssige salpetrige Säure mit Amidosulfonsäure zerstört. In die Diazotierung wird 8-Amino-1-naphthalinsulfonsäure eingetragen, der pH-Wert auf 4 bis 5 mit Sodalösung angehoben und 2 Stunden nachgerührt. Nach beendeter Kupplung wird mit dem Kondensationsprodukt der Formel

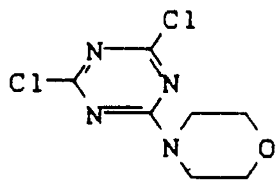

acyliert. Der Farbstoff wird danach bei pH 7,5 und 95 °C einer zweiten Kondensation mit Nicotinsäure unterworfen und anschließend isoliert, getrocknet und gemahlen.

Wie schon in Beispiel 2 erläutert kann der Farbstoff, bedingt durch die Synthesesequenz, teilweise in der Vinylsulfon-Form vorliegen.

Man erhält ein braunes Pulver, das den Farbstoff der Formel

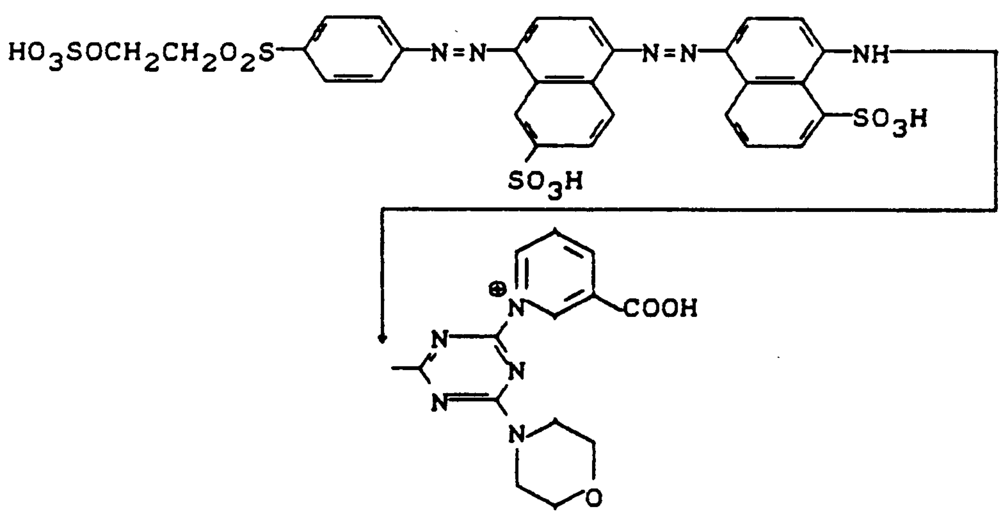

enthält und Baumwolle in braunen Tönen färbt.

Beispiel 118

Nach der Arbeitsweise des Beispiels 117 erhält man unter Verwendung der Diazotierung von 2-Amino-6-sulfatoethylsulfonyl-naphthalin-1-sulfonsäure den Farbstoff der Formel

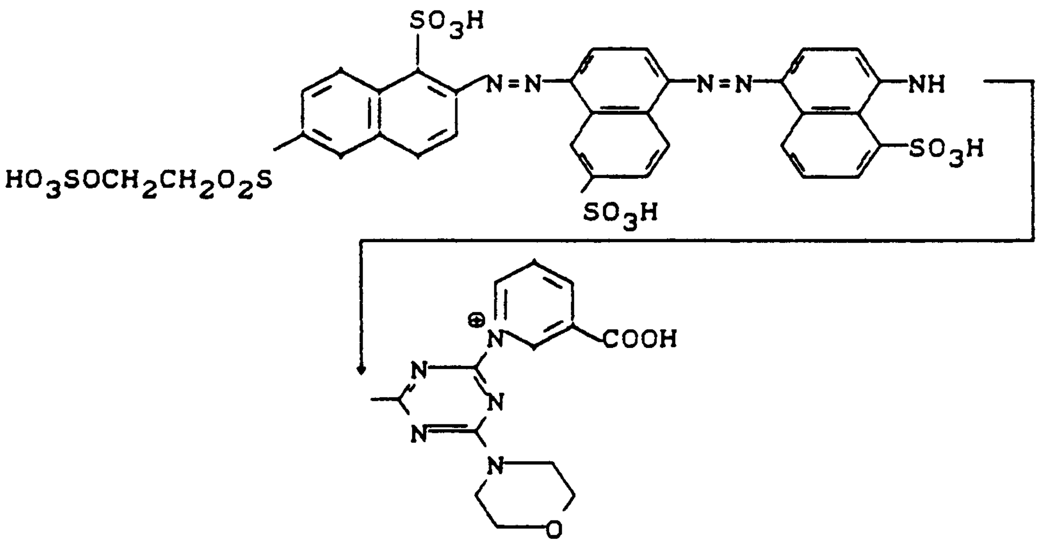

der Baumwolle nach den für Reaktivfarbstoffe üblichen Applikationsmethoden in braunen Tönen färbt.

Beispiel 119

Nach der Arbeitsweise des Beispiels 117 erhält man unter Verwendung der Diazotierung von 7-Amino-3-sulfatoethylsulfonyl-naphthalin-1-sulfonsäure und m-Toluidin als 2. Kupplungskomponente den Farbstoff der Formel

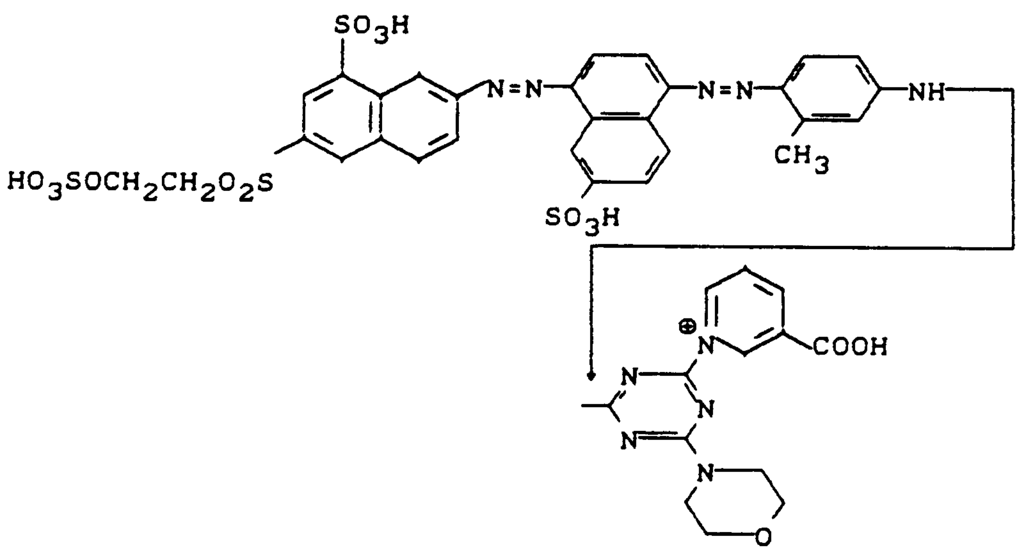

der Baumwolle in braunen Tönen färbt.

Analog zu den beschriebenen Methoden lassen sich auch die in der folgenden Tabelle aufgeführten Farbstoffe herstellen, die Baumwolle im angegebenen Farbton färben.

| Beispiel | Farbstoff | Farbton |
| --- | --- | --- |
| 120 | 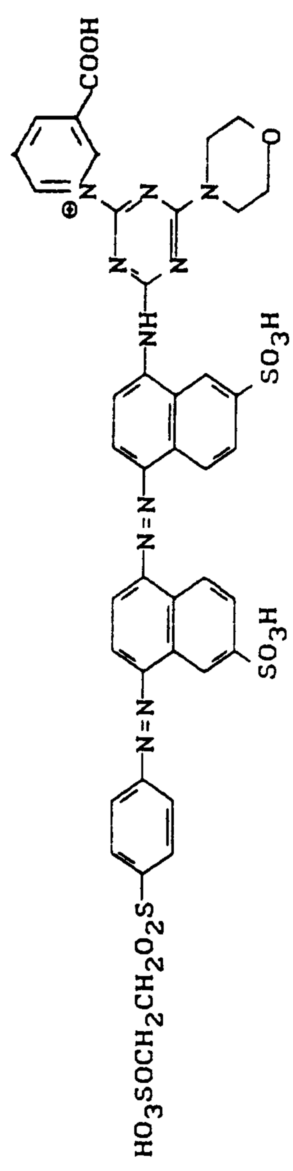 | braun |
| 121 | 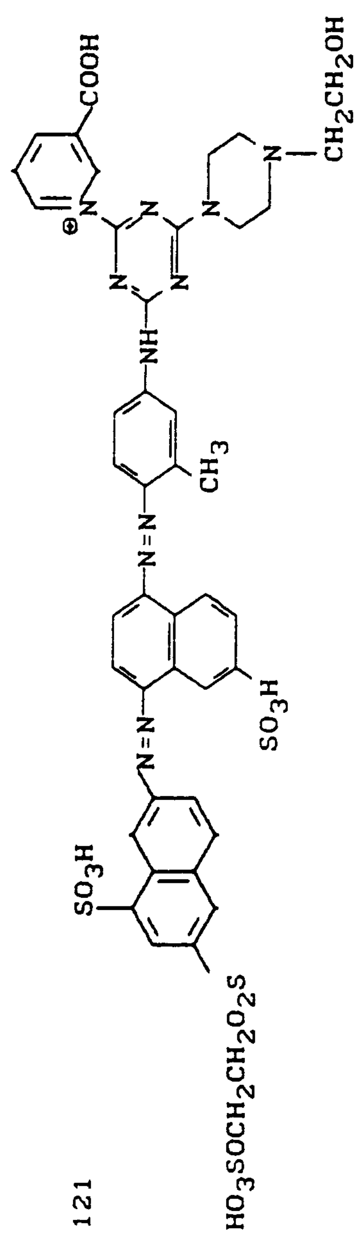 | braun |
| 122 | 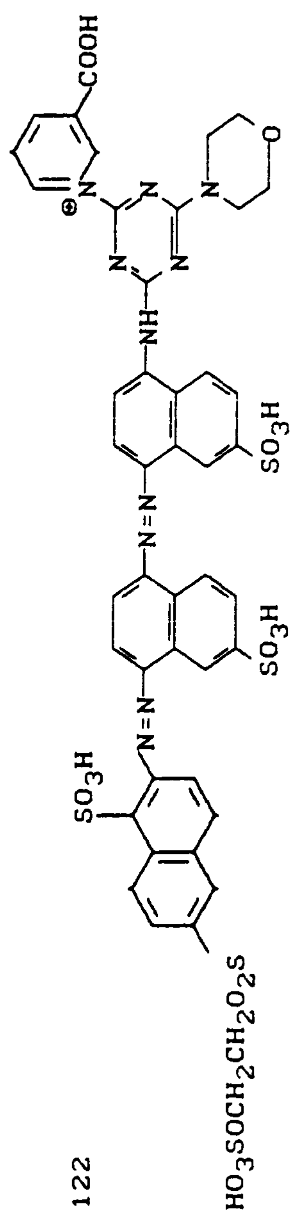 | braun |

Beispiel 123

30,3 Teile 2-Naphthylamin-4,8-disulfonsäure werden in 400 Volumenteilen Eiswasser suspendiert. Es werden 25 Gewichtsteile conc. Salzsäure zugefügt und mit 20 Volumenteilen 5n-Natriumnitritlösung diazotiert. Es wird noch 1 Stunde bei 0 bis 5 ° C nachgerührt und dann überschüssige salpetrige Säure mit wenig Amidosulfonsäure zerstört. Dann werden 33,1 Teile 1-Naphthylamin-6-β-sulfatoethylsulfon zugegeben und durch Natriumacetat wird der pH-Wert langsam auf 4,5 erhöht. Bei diesem pH-Wert wird noch 2 Stunden bei 10 bis 15 ° C nachgerührt, bis keine freie Diazoniumverbindung mehr nachweisbar ist. Dann wird wieder auf 0 bis 5 ° C abgekühlt, 35 Teile einer conc. Salzsäure und anschließend 22 Volumenteile einer 5n-Natriumnitritlösung zugefügt. Es wird 1 Stunde bei 0 bis 5 ° C nachgerührt und dann wenig Amidosulfonsäure zugegeben.

In die Lösung werden dann 22,5 Teile 1-Naphthylamin-8-sulfonsäure eingetragen und mit etwa 15 Teilen Soda wird ein pH-Wert von 4 bis 5 eingestellt und gehalten, wobei 2 Stunden nachgerührt wird. Die Farbstofflösung wird dann auf pH 5,5 bis 6,0 gestellt und auf 20 ° C erwärmt. Bei dieser Temperatur und bei diesem pH-Wert gibt man die äquivalente Menge des Kondensationsproduktes aus Beispiel 117 hinzu, hält den pH-Wert mit Sodalösung und läßt dann 1 Stunde nachrühren. Der Farbstoff wird bei pH 7,5 und 95 ° C einer zweiten Kondensation mit Nicotinsäure unterworfen und anschließend isoliert.

Nach dem Trocknen bei 40 bis 50 ° C und Mahlen erhält man ein schwarzes Farbstoffpulver der Formel

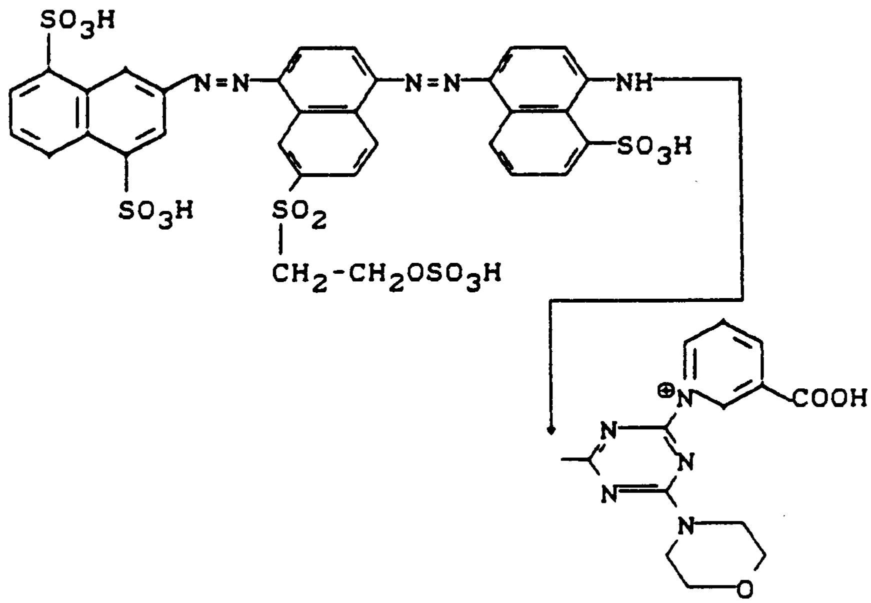

bzw. im Gemisch mit der Vinylsulfonform.

Diese Verbindung besitzt sehr gute Farbstoffeigenschaften und färbt Baumwolle und Wolle nach den üblichen Färbe- und Druckmethoden für Reaktivfarbstoffe in braunen Tönen mit sehr guten Naßechtheitseigenschaften.

Durch Verwendung der in den Beispielen 109 und 113 eingesetzten Diazokomponenten als Kupplungskomponenten und anschließender Kondensation mit 3-Carboxypyridin lassen sich die folgenden Farbstoffe herstellen:

Farbton

Beispiel 124

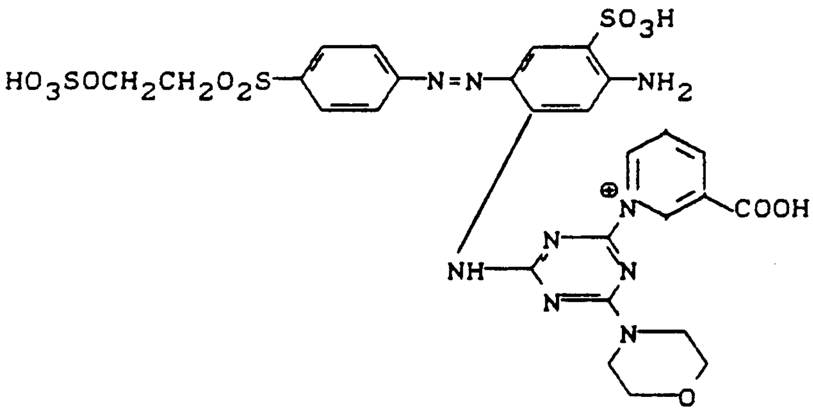

gelb

Beispiel 125

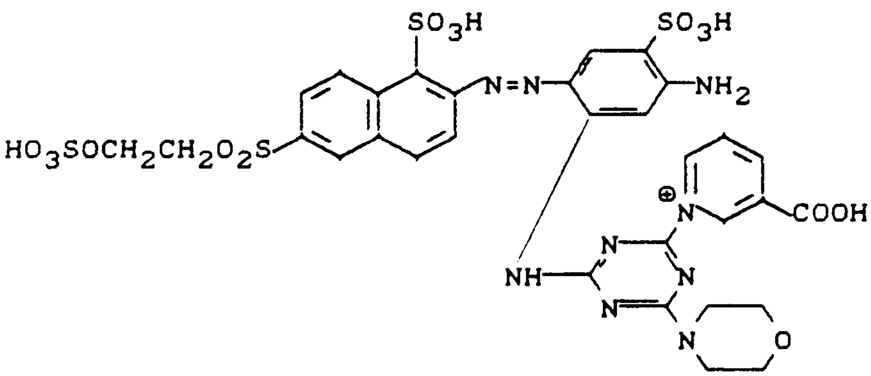

gelb

Beispiel 126

0,2 Mol der Verbindung

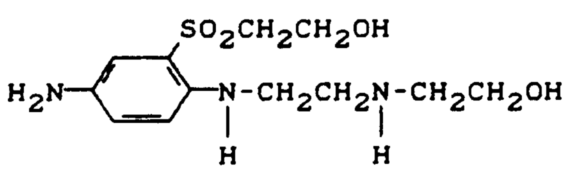

dargestellt durch Umsetzung von 1-Chlor-2-(β-hydroxyethylsulfonyl)-4-nitrobenzol mit dem Eisessigaddukt des Diamins der Formel

$$H_2N-CH_2CH_2N(H)-CH_2CH_2OH$$

in Isopropanol und anachließender katalytischer Hydrierung mit Raney-Nickel und Wasserstoff, werden bei 80 °C mit 0,1 Mol Chloranil in Isopropanol und Gegenwart von Natriumacetat kondensiert. Das dunkelbraune, ausgefallene Produkt der Formel

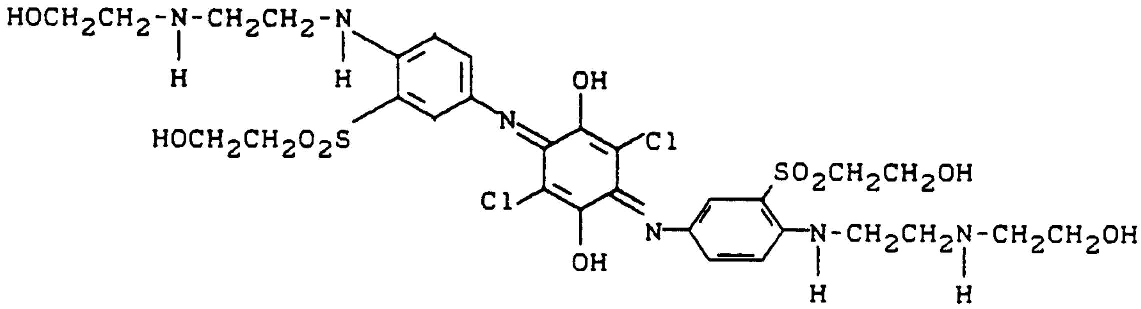

wird abgesaugt, getrocknet und in 250 ml 20%iges Oleum eingetragen. Zu diesem Ansatz fügt man Kaliumperoxodisulfat hinzu und erwärmt stufenweise bis auf 40 bis 50 °C. Anschließend wird auf Eis ausgetragen, die blaue Farbbase der Struktur

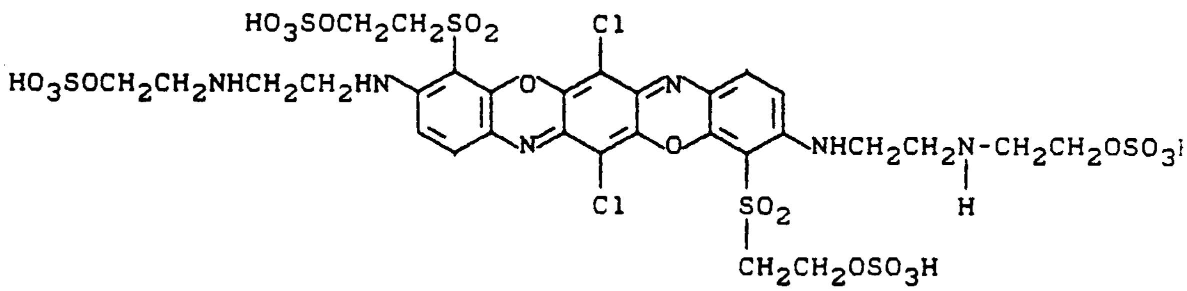

isoliert, in Wasser angeschlagen und mit 0,2 Mol des Kondensationsproduktes der Formel

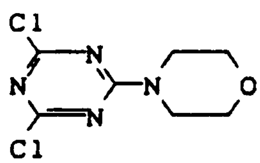

bei 20 °C und pH 6,5 bis 7,5 kondensiert.

Der Farbstoff wird bei pH 7,5 und 95 °C einer zweiten Kondensation mit Nicotinsäure unterworfen und anschließend isoliert, getrocknet und gemahlen. Man erhält ein dunkles Pulver, das den Farbstoff der Formel

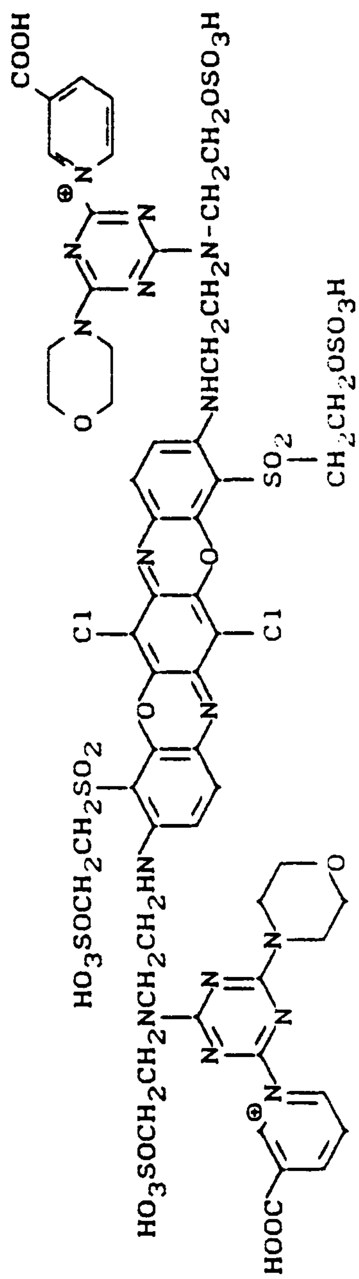

bzw. im Gemisch mit der Vinylsulfonform,

enthält und Baumwolle und Wolle nach den für Reaktivfarbstoffe üblichen Färbe- und Druckmethoden in blauen Tönen färbt.

Beispiel 127

127 g des Farbstoffes (3-Amino-4-sulfophenyl-aminosulfonyl)-(3-β-sulfatoethylsulfonyl-phenylamino-sulfonyl)-kupferphthalocyanin-disulfonsäure (hergestellt durch Mischkondensation von Kupferphthalocyanin-(3)-tetrasulfochlorid mit 1,3-Diaminobenzol-4-sulfonsäure und 3-β-Sulfatoethylsulfonyl-anilin in wäßriger Lösung in Gegenwart von Pyridin bei pH 6 bis 7,5) werden in Wasser unter Zusatz von Natriumbicarbonat neutral gelöst. Zu dieser Lösung gibt man das Kondensationsprodukt aus Beispiel 117 und hält bei 20 °C den pH durch Zutropfen von Sodalösung zwischen 6 und 6,5.

Nachdem die Kondensation beendet ist, wird analog Beispiel 117 mit Nicotinsäure ein weiteres Mal kondensiert und isoliert. Nach dem Absaugen, Trocknen und Mahlen erhält man ein blaues Farbstoffpulver, das sich leicht in Wasser mit türkisblauer Farbe löst.

Der Farbstoff entspricht der Formel

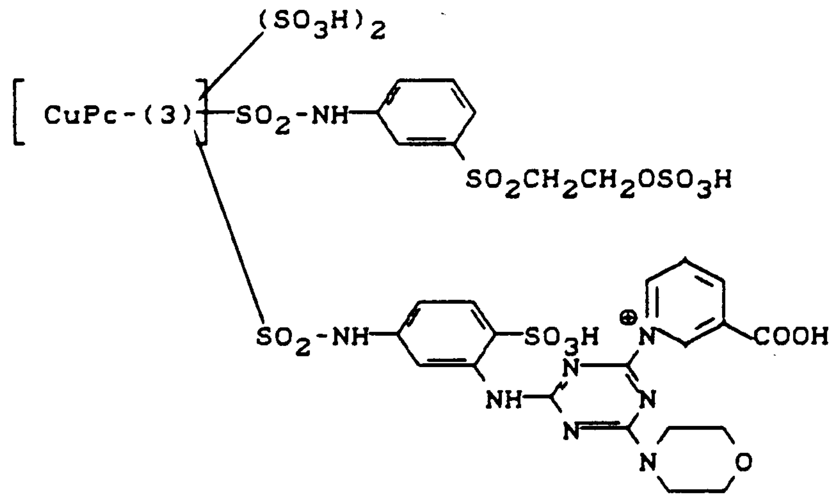

bzw. Gemische mit der Vinylsulfonform.

Er färbt Baumwolle in türkisblauer Nuance.

Analog zu der Arbeitsweise in Beispiel 127 lassen sich die nachfolgend aufgeführten Farbstoffe herstellen, die Baumwolle im angegebenen Farbton färben.

Beispiel 128

Farbton auf Baumwolle

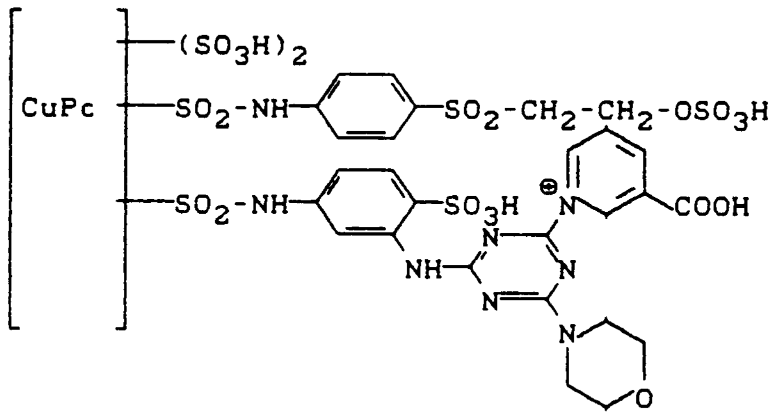

türkis

Beispiel 129

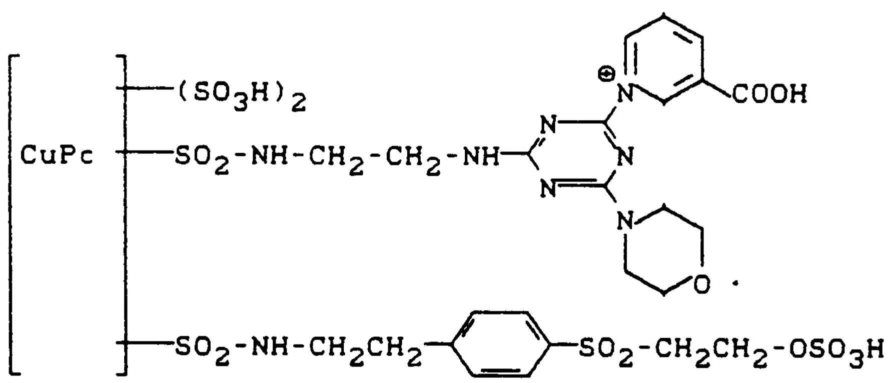

türkis

**Beispiel 130** | **Farbton auf Baumwolle**

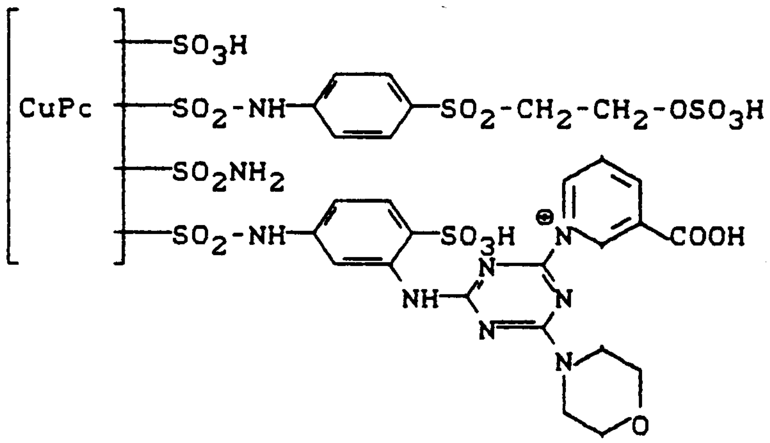

türkis

**Beispiel 131**

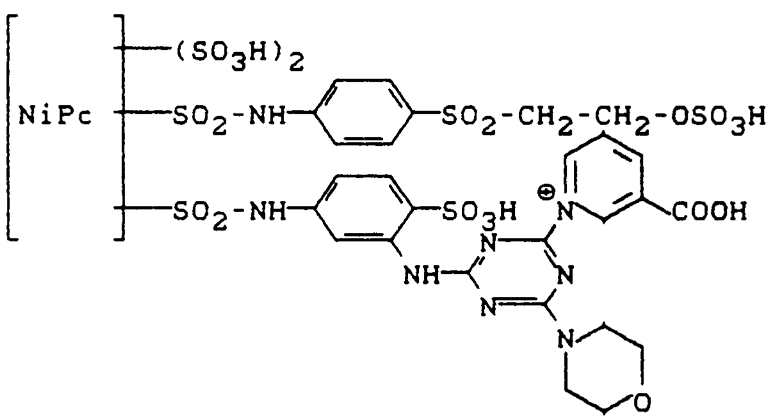

grün

Beispiel 132

135 g des Farbstoffes (3-Amino-4-β-sulfatoethylsulfonylphenylaminosulfonyl)-kupferphthalocyanin-trisulfonsäure werden neutral gelöst. Die Lösung wird auf 25 °C erwärmt, mit dem Kondensationsprodukt aus Beispiel 117 versetzt und dann hält man den pH durch Zugabe von Natriumcarbonat bei 5,5 bis 6,0. Nach beendeter Kondensation wird mit Nicotinsäure bei 90 °C und pH 7-8 umgesetzt und anschließend isoliert. Nach dem Absaugen, Trocknen und Mahlen erhält man ein blaues Farbstoffpulver, das sich mit türkisblauer Farbe in Wasser löst. Der Farbstoff entspricht der Formel

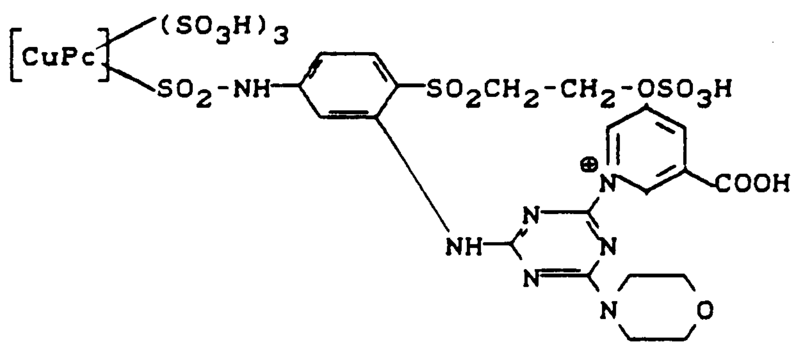

bzw. Gemische mit der Vinylsulfonform, und färbt Baumwolle in echten, türkisblauen Farbtönen.

Die als Ausgangsprodukt verwendete Verbindung wird wie folgt hergestellt: Kupferphthalocyanin-trisulfochlorid-monosulfonsäure wird mit 1,3-Diaminobenzol-4-β-hydroxy-ethylsulfon in wäßriger Lösung bei pH 6 bis 7 kondensiert. Das Kondensationsprodukt wird durch Zugabe von Schwefelsäure abgeschieden, isoliert und getrocknet. Nach dem Mahlen wird die Substanz nach den üblichen Methoden in Schwefelsäure (Monohydrat) verestert. Die Mischung wird dann unter Rühren auf Eis gegeben, die ausgeschiedene Verbindung wird auf der Nutsche isoliert und unter Zusatz von Natriumbicarbonat neutral in Wasser gelöst.

Analog der geschilderten Arbeitsweise erhält man folgende Farbstoffe:

| Beispiel | Farbton auf Baumwolle |
| --- | --- |
| **Beispiel 133** 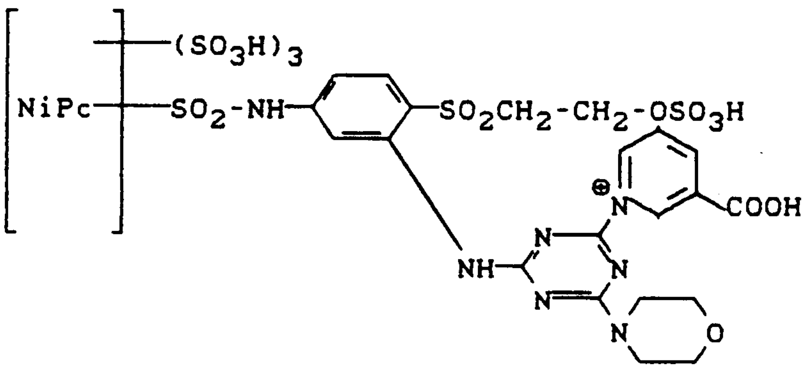 | grün |
| **Beispiel 134** 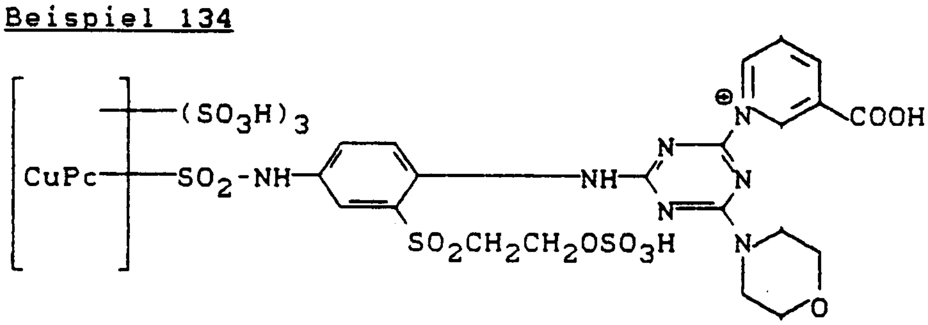 | grünstichig türkis |
| **Beispiel 135** 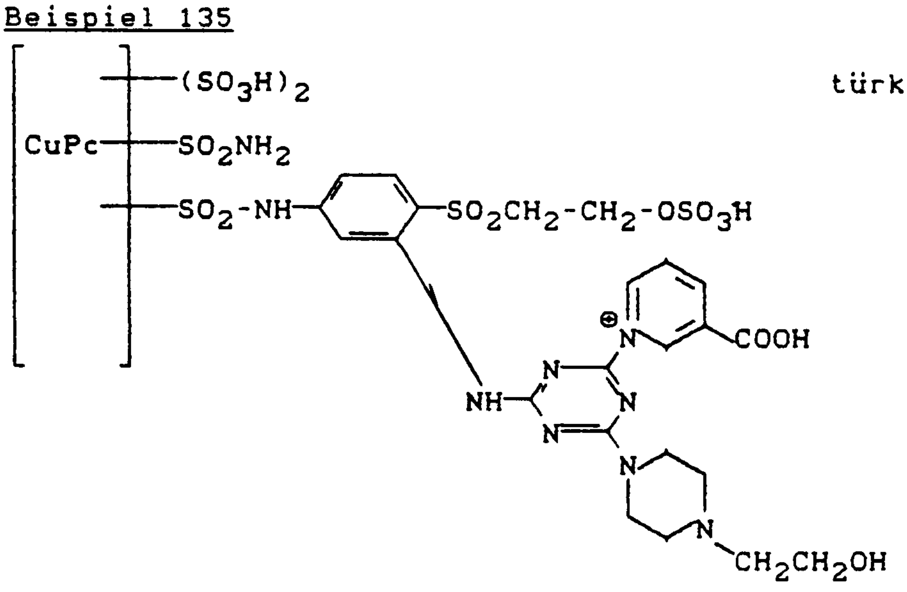 | türkis |

Beispiel 136

52 g des Farbstoffes 1-Amino-4-(3′-amino-4′-β-hydroxy-ethylsulfonyl-phenylamino)-anthrachinon-2-sulfonsäure (hergestellt durch Kondensation von 1,3-Diaminobenzol-4-β-hydroxyethylsulfon und 1-Amino-4-brom-anthrachinon-2-sulfonsäure) werden als trockene, gemahlene Ware unter Rühren in 200 g Monohydrat eingetragen. Man läßt über Nacht bei Raumtemperatur rühren und gießt die Lösung dann unter Rühren auf eine Mischung von 500 g Eis und 150 g Kaliumchlorid.

Der ausgeschiedene Farbstoff wird dann abgesaugt, mit gesättigter Natriumchloridlösung gewaschen und in 300 Teilen Wasser unter Zugabe von Natriumbicarbonat neutral gelöst.

Nach Zugabe des Kondensationsproduktes aus Beispiel 117 stellt man mit Sodalösung auf pH 6 und hält den pH durch Eintropfen von Sodalösung zwischen 5 und 6. Nach beendeter Kondensation wird geklärt und analog Beispiel 117 mit Nicotinsäure ein zweites Mal kondensiert. Nach einem der für Reaktivfarbstoffe üblichen Applikationsverfahren erhält man auf Baumwolle ein klares Blau mit guten Allgemeinechtheiten.

Der Farbstoff entspricht der Formel

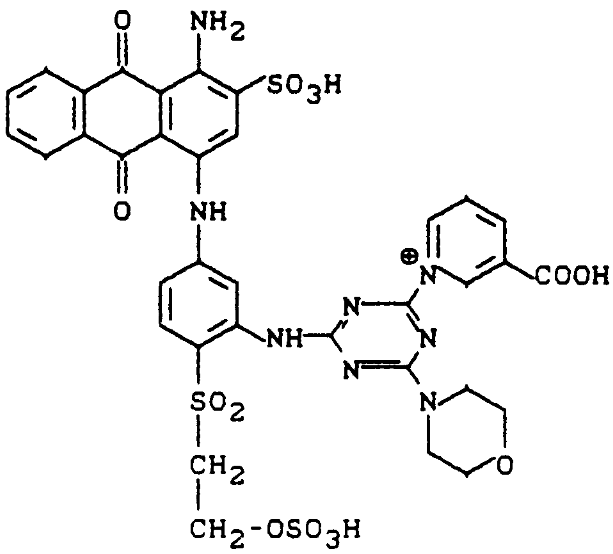

bzw. Gemische mit der Vinylsulfonform.

Beispiel 137

54 g des Farbstoffes 1-Amino-4-(2′-methyl-5′-amino-4′-β-hydroxyethylsulfonyl-phenylamino)-anthrachinon-2-sulfonsäure (hergestellt durch Kondensation von 1-Amino-4-brom-anthrachinon-2-sulfonsäure und 2,4-Diaminotoluol-5-β-hydroxyethylsulfon) werden analog Beispiel 136 umgesetzt.

Es wird der Farbstoff der Formel

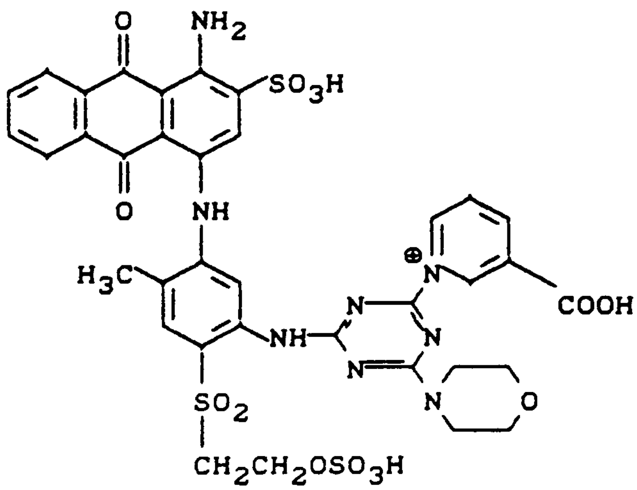

erhalten, der auf Baumwolle und Wolle ein echtes, klares Blau färbt.

Nach der Arbeitsweise von Beispiel 136 lassen sich folgende Farbstoffe herstellen

| Beispiel 138 | Farbton auf Baumwolle |
|---|---|
| 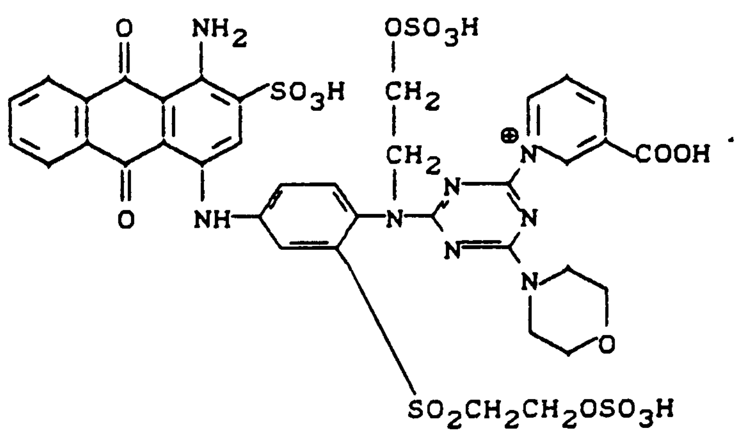 | grünstichig blau |

Beispiel 139

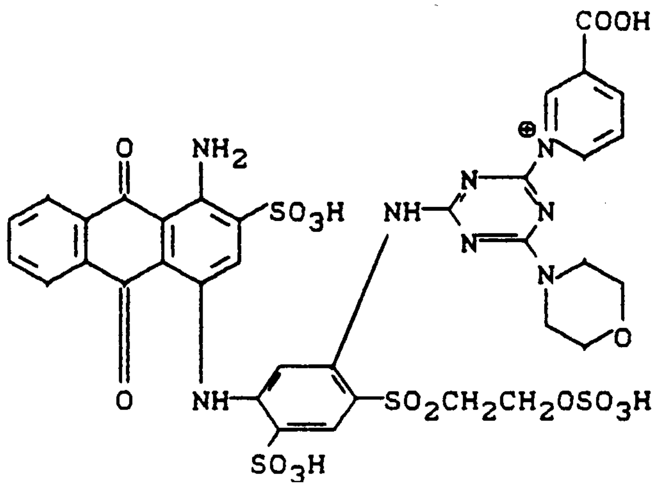

blau

Beispiel 140

23,3 g 2-Carboxyphenylhydrazin-4-sulfonsäure und 21,3 g 4-Acetaminobenzaldehyd-2-sulfonsäure werden in wäßriger Lösung kondensiert und das erhaltene Hydrazon in Gegenwart von Soda und 25 g Kupfersulfat mit der Diazoniumverbindung von 22,7 g 2-Aminophenol-4-($\beta$-hydroxyethyl)-sulfon gekuppelt. Nach beendeter Reaktion wird unter Zusatz von 15 g Soda so lange bei 100 °C verseift, bis dünnschichtchromatographisch eine vollständige Verseifung der Acetylgruppe nachgewiesen werden kann. Der Farbstoff wird dann durch Zugabe von Natriumchlorid ausgeschieden, isoliert und getrocknet. Nach dem Mahlen wird das Farbstoffpulver unter Rühren in Pyridin eingetragen.

Man erwärmt auf 80 °C und gibt die gleiche Menge an Amidosulfonsäure wie an Farbstoffpulver hinzu. Die Temperatur steigt hierbei bis auf 105 °C an. Bei 100 bis 105 °C wird noch 1/2 Stunde nachgerührt. Dann wird Pyridin durch Abdestillieren und Trocknen im Vakuum entfernt, der Rückstand in Wasser gelöst und mit dem Kondensationsprodukt aus Beispiel 117 bei pH 6 bis 6,5 kondensiert. Nach beendeter Reaktion wird der Farbstoff mit Nicotinsäure bei 90 °C und pH 7-8 umgesetzt und isoliert.

Nach dem Mahlen erhält man ein Farbstoffpulver, das das Natriumsalz der Verbindung der Formel

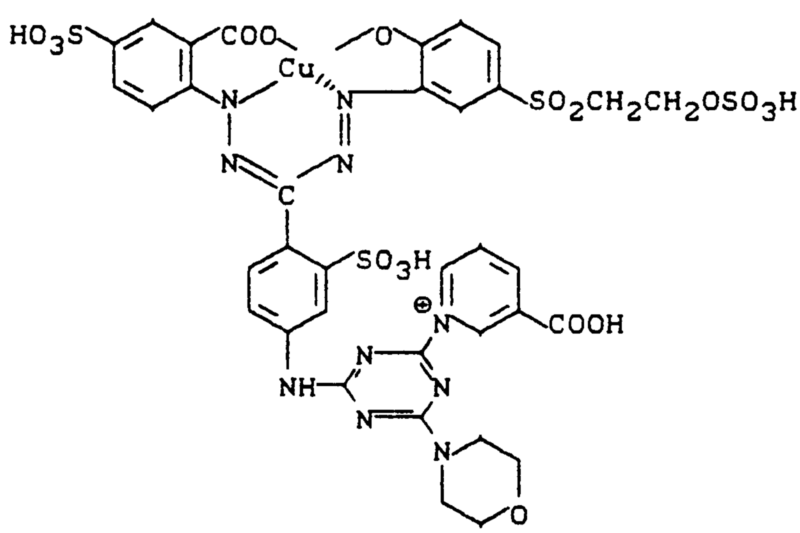

im Gemisch mit der Vinylsulfonform enthält und Baumwolle mit blauer Nuance färbt.

Weitere erfindungsgemäße blaue Reaktivfarbstoffe erhält man, wenn man wie in Beispiel 140 beschrieben, die folgenden Phenylhydrazine und aromatischen Aldehyde zu Hydrazonen umsetzt, mit den ebenfalls nachfolgend angegebenen Diazokomponenten in Gegenwart von $CuSO_4$ kuppelt und die entstandenen

Farbstoffe analog Beispiel 140 verseift, sulfatiert und mit

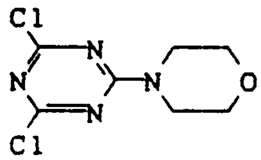

und

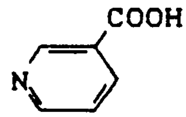

acyliert.

| Beispiel | Phenylhydrazin | Aldehyd | Diazokomponente | Farbton auf Baumwolle |
|---|---|---|---|---|
| 141 | 2-Carboxy-5-(β-hydroxyethylsulfonyl)-phenylhydrazin | Benzaldehyd | 3-Acetyl-amino-4-hydroxy--5-aminobenzolsulfonsäure | blau |
| 142 | 2-Carboxy-4-acetylaminophenylhydrazin | Benzaldehyd | 4-β-Hydroxyethylsulfonyl--2-aminophenol-6-sulfonsäure | blau |

Die folgenden erfindungsgemäßen Farbstoffe lassen sich analog den beschriebenen Farbstoffen herstellen:

Beispiel 143

Farbton auf Baumwolle

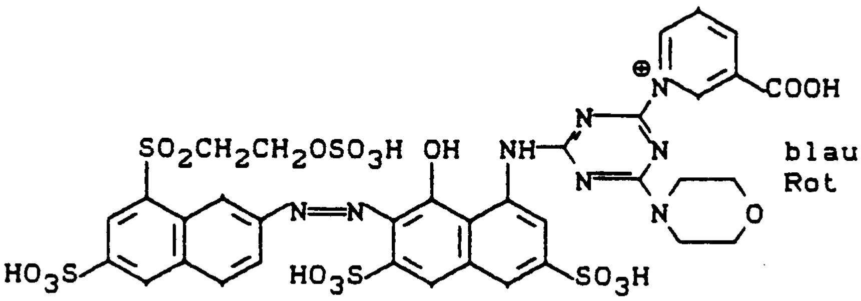

blaustichiges Rot

Beispiel 144

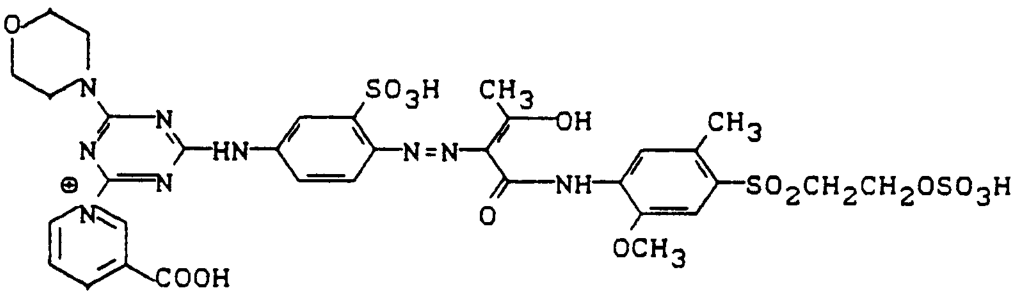

grünstichiges Gelb

Beispiel 145

Farbton auf Baumwolle

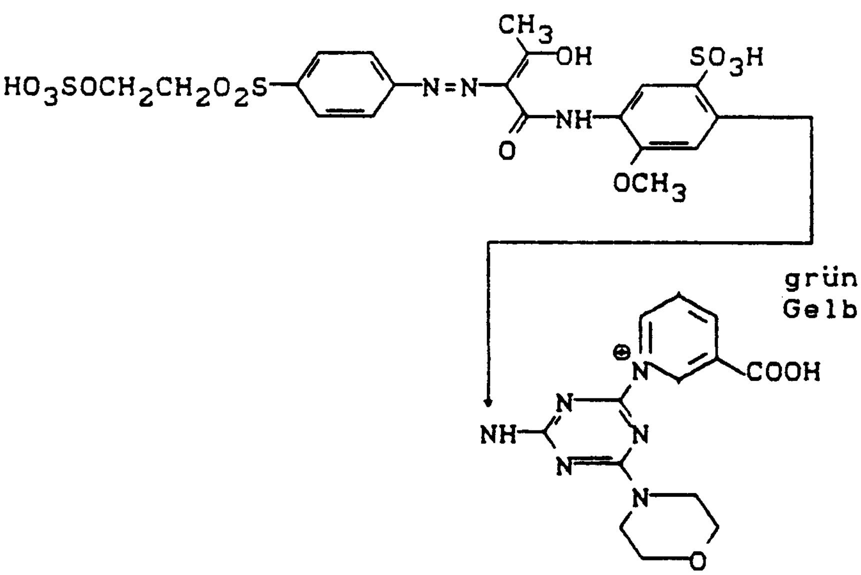

grünstichiges Gelb

Beispiel 146

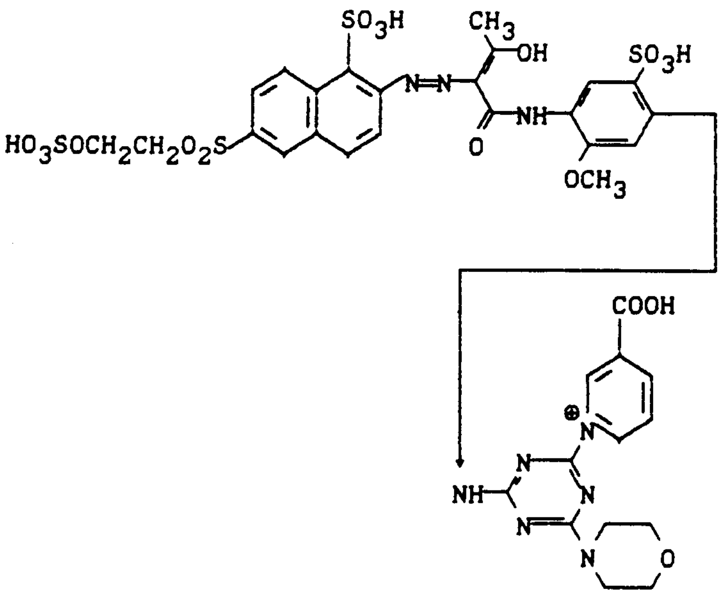

grünstichiges Gelb

Beispiel 147

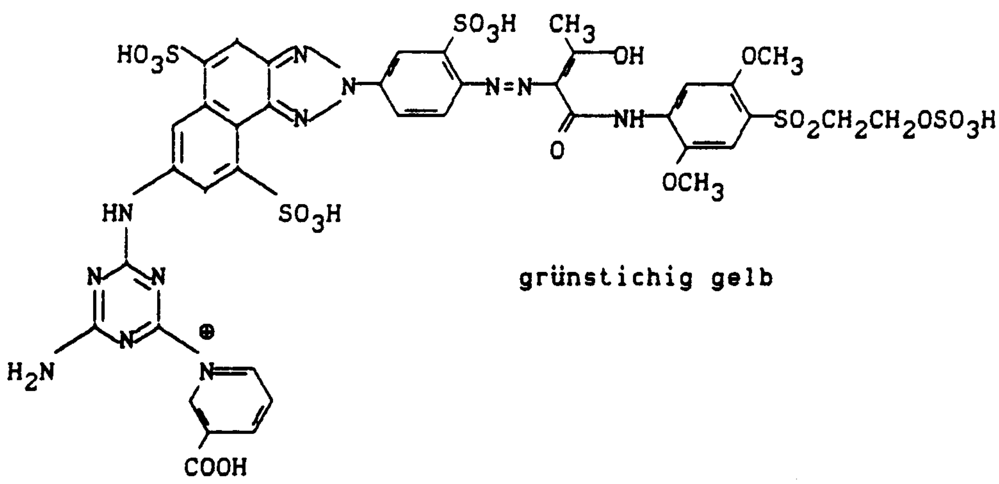

grünstichig gelb

Beispiel 148

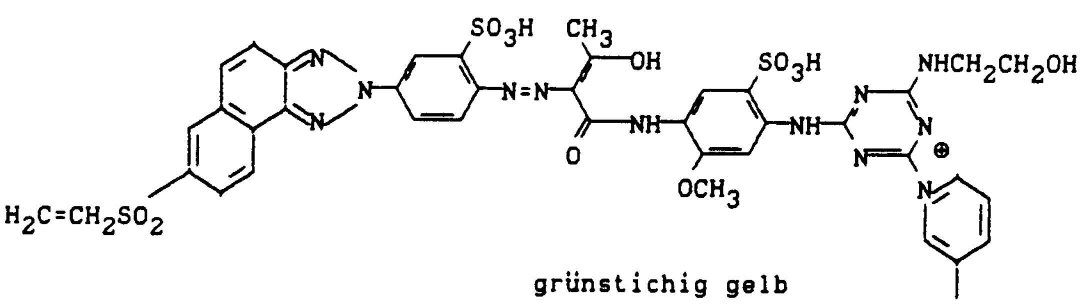

grünstichig gelb

## Patentansprüche

1. Reaktivfarbstoffe der Formel

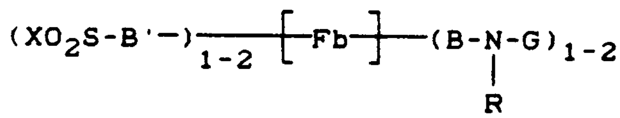

worin

Fb = Rest eines Farbstoffes der Mono- oder Polyazo-, Metallkomplexazo-, Anthrachinon-, Phthalocyanin-, Formazan-, Azomethin-, Dioxazin-, Phenazin-, Xanthen-, Thioxanthon-, Naphthochinon-, Stilben- oder Triphenylmethanreihe,

B bzw. B' = direkte Bindung oder Brückenglied an ein Ring C-Atom eines aromatisch-carbocyclischen oder an ein Ring-C- oder -N-Atom eines aromatisch-heterocyclischen Ringes in Fb,

R = H, gegebenenfalls substituiertes $C_1$-$C_6$-Alkyl (bevorzugte Substituenten: Halogen, OH, COOH, $SO_3H$, $OSO_3H$),

G =

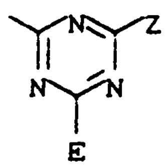

,

Z =

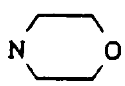

,

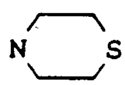

,

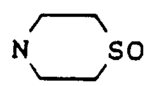

,

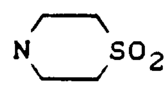

,

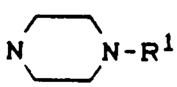

,

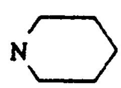

, oder

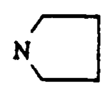

,

wobei die heterocyclischen Ringe gegebenenfalls Substituenten, insbesondere 1 bis 2 $C_1$-$C_4$-Alkyl- oder $C_1$-$C_4$-Alkoxy-Reste aufweisen können, wie z.B. $R^1$ = $CH_3$, $C_2H_5$, $CH_2CH_2OH$ oder H,

X = $CN_2 = CH_2$ oder $CH_2CH_2$-Y, worin

Y = alkalisch eliminierbarer Rest, z.B. $OSO_3H$, $SSO_3H$, $OCOCH_3$, $OPO_3H_2$, $OSO_2CH_3$, SCN, $NHSO_2CH_3$, Cl, Br, F, $OCOC_6H_5$, $OSO_2$-$C_6H_4CH_3$, $N(CH_3)_3]^+Anion^-$ oder E,

E = gegebenenfalls substituierter Pyridinium-Rest.

**2.** Farbstoffe des Anspruchs 1 der Formel

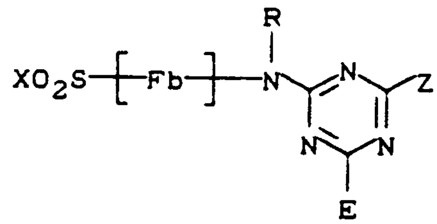

**3.** Gegebenenfalls metallhaltige Monoazo- und Polyazofarbstoffe des Anspruchs 1 der Formel

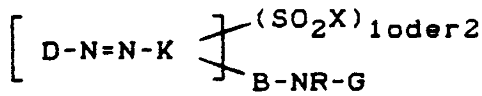

worin

D = Rest einer Diazokomponente der Benzol- oder Naphthalinreihe,

K = Rest einer Kupplungskomponente der Benzol-, Naphthalin-, Acetessigsäurearylid- oder heterocyclischen Reihe; in der heterocyclischen Reihe vorzugsweise ein Pyrazolon- oder Pyridon-Rest.

**4.** Farbstoffe des Anspruchs 1 der Formeln

$X\text{-}SO_2\text{-}D\text{-}N=N\text{-}K\text{-}B\text{-}NR\text{-}G$

$G\text{-}NR\text{-}B\text{-}D\text{-}N=N\text{-}K'\text{-}SO_2\text{-}X$

worin

K' = Rest einer Kupplungskomponente der Pyrazolon-, Pyridon- oder Acetessigsäurearylid-Reihe ist.

**5.** Farbstoffe der Ansprüche 1-4 der Formeln

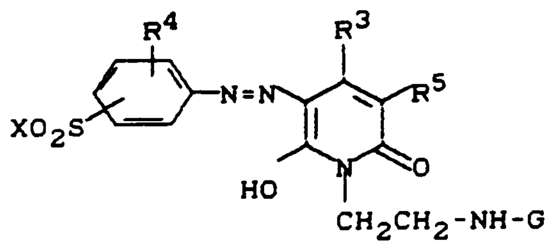

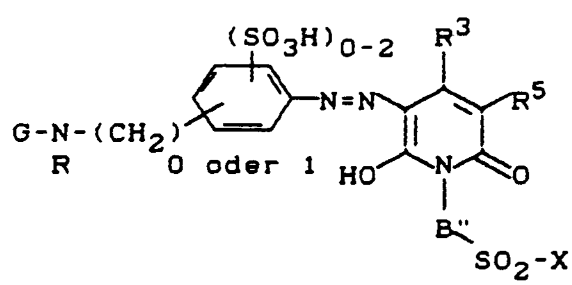

B'' =

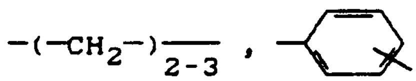

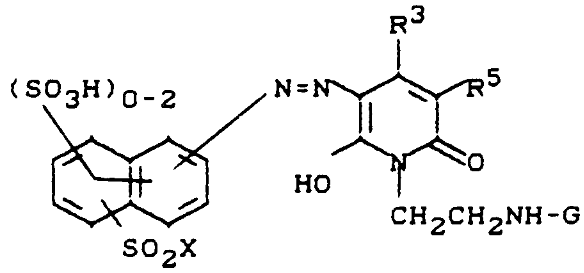

worin

| | |
|---|---|
| $R^3$ = | H, $C_1$-$C_4$-Alkyl, insbesondere $CH_3$ und $CH_2SO_3H$, COOH, |
| $R^4$ = | H, $C_1$-$C_4$-Alkyl, $C_1$-$C_4$-Alkoxy, Cl, Br, COOH, $SO_3H$ |
| $R^5$ = | H, $SO_3H$, $CH_2SO_3H$, Cl, $C_1$-$C_4$-Alkylsulfonyl, Carbonamid, insbesondere $CONH_2$ sowie Carbonsäuremono- und -di-$C_1$-$C_4$-alkylamid. |

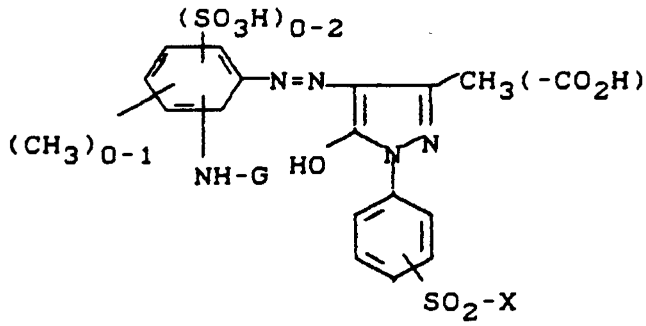

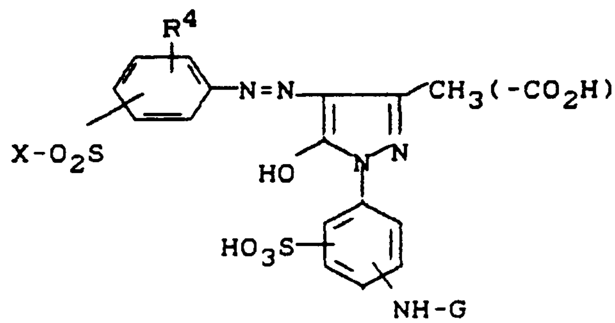

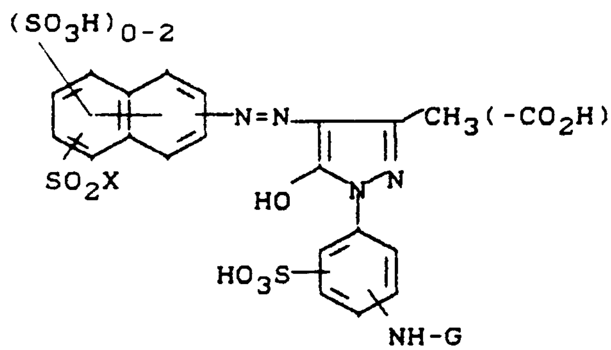

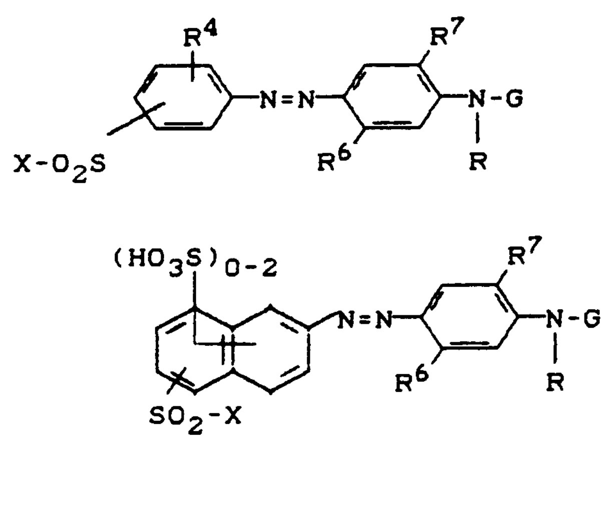

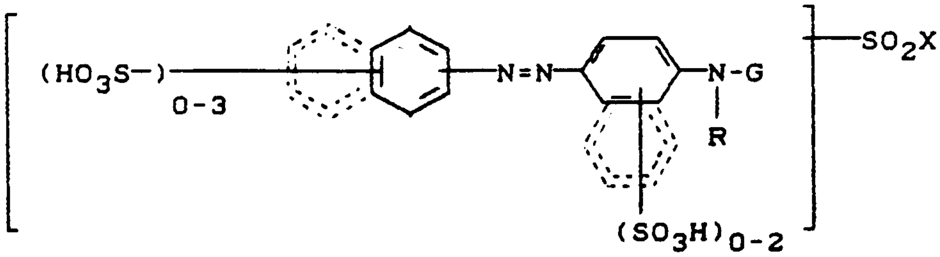

worin

$R^6$ = H, $C_1$-$C_4$-Alkyl, $C_1$-$C_4$-Alkoxy, Acylamino, insbesondere $C_1$-$C_4$-Alkylcarbonylamino oder Aryl carbonylamino wie gegebenenfalls substituiertes Phenylcarbonylamino, $C_1$-$C_4$-Alkylsulfonylamino, Cl, Br, Aminocarbonylamino, $C_1$-$C_4$-Alkylsulfonylamino, Arylsulfonylamino,

$R^7$ = H, $C_1$-$C_4$-Alkyl, $C_1$-$C_4$-Alkoxy, OH, $SO_3H$

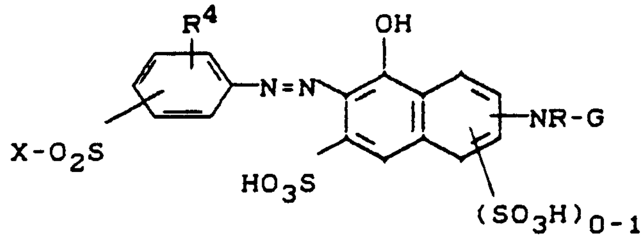

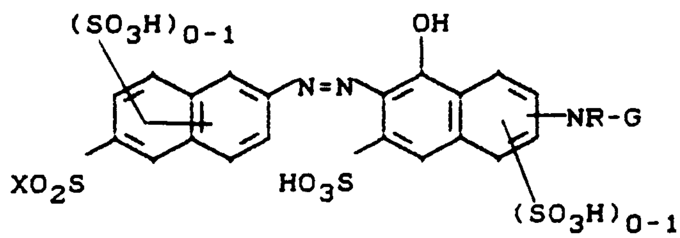

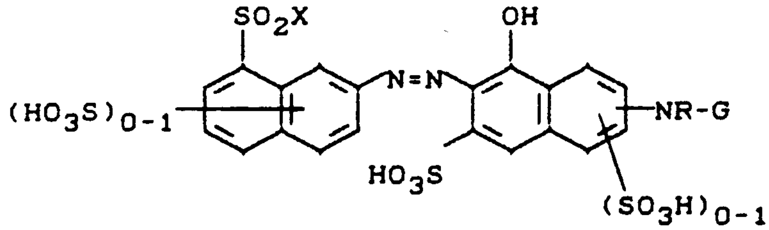

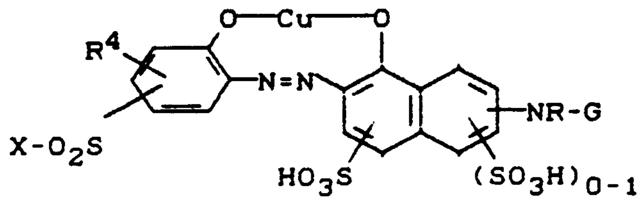

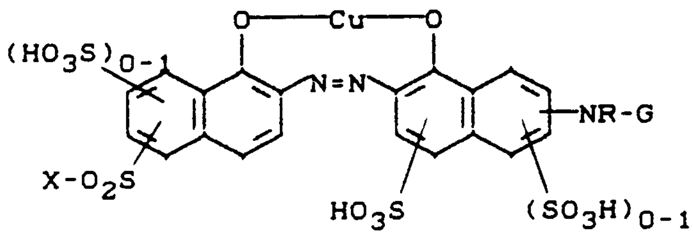

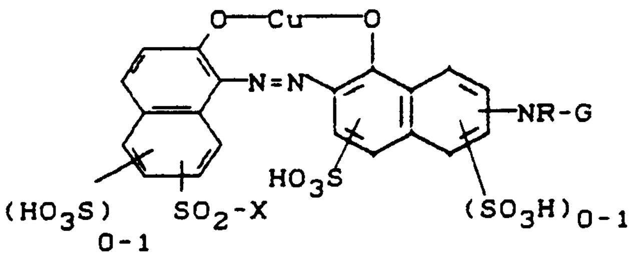

1:2-Metallkomplexe von Farbstoffen

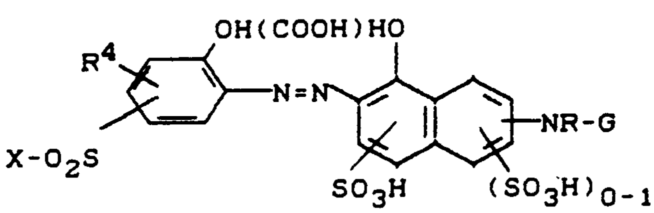

insbesondere die Cr- und Co-Komplexe, die zwei Farbstoffe (21) oder einen Farbstoff (21) und einen beliebigen anderen metallkomplexbildenden Farbstoff, insbesondere einen Azo- oder Azomethinfarbstoff enthalten,

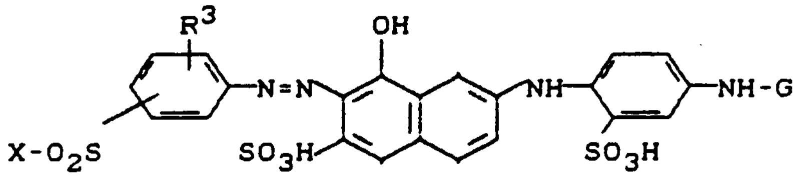

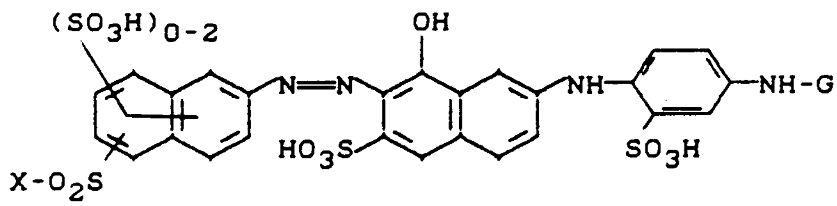

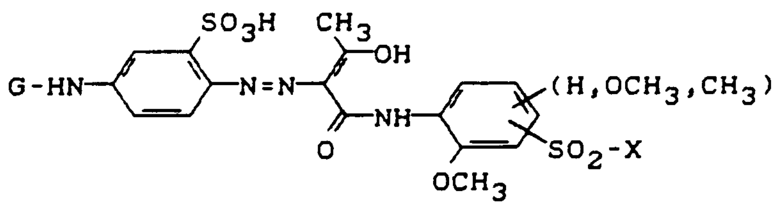

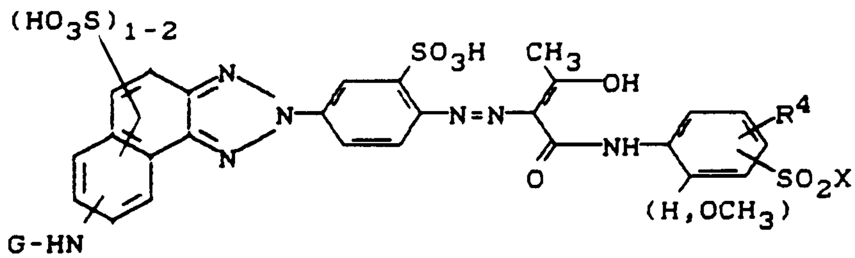

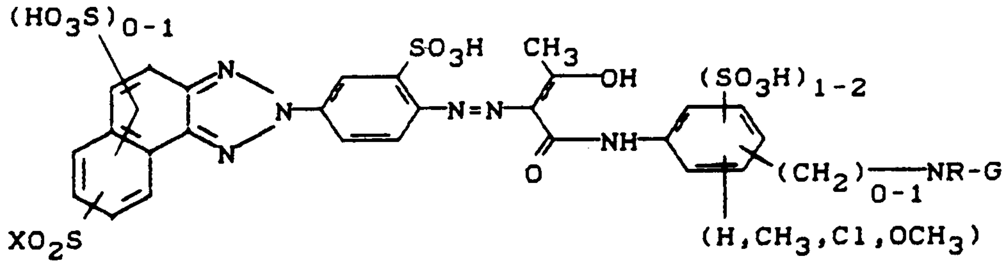

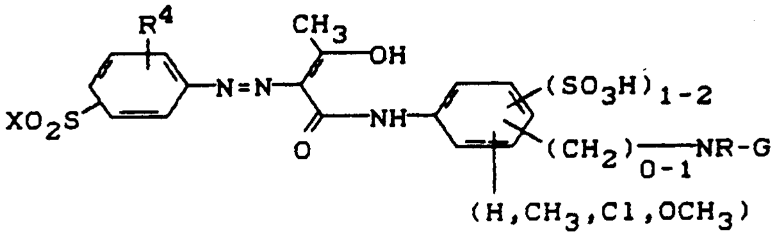

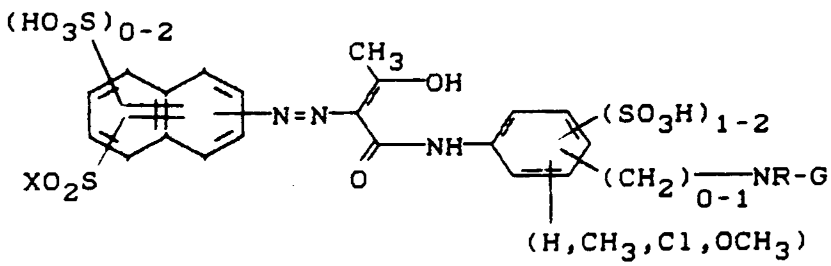

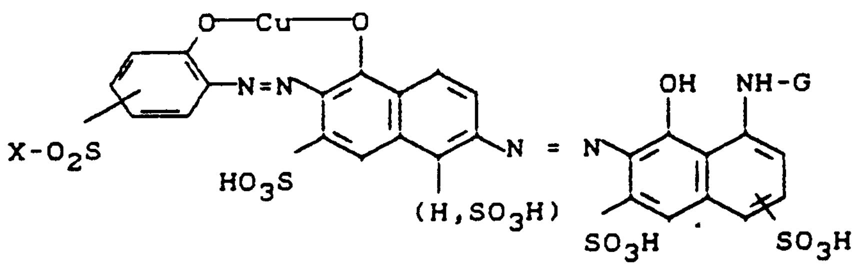

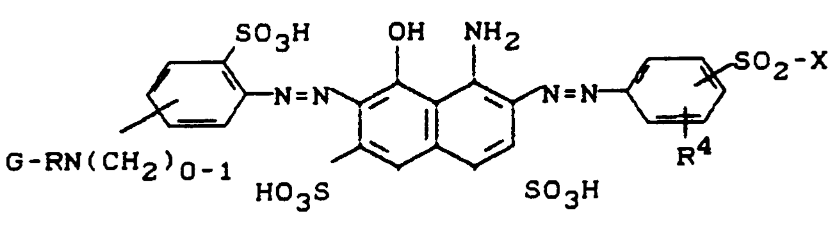

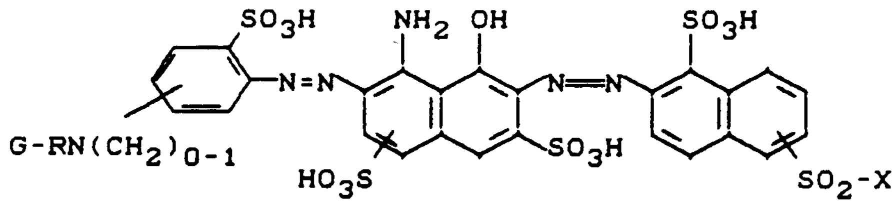

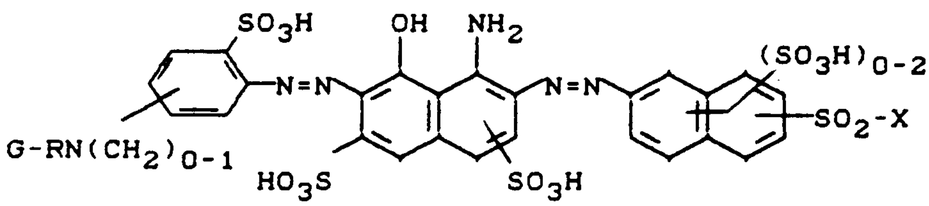

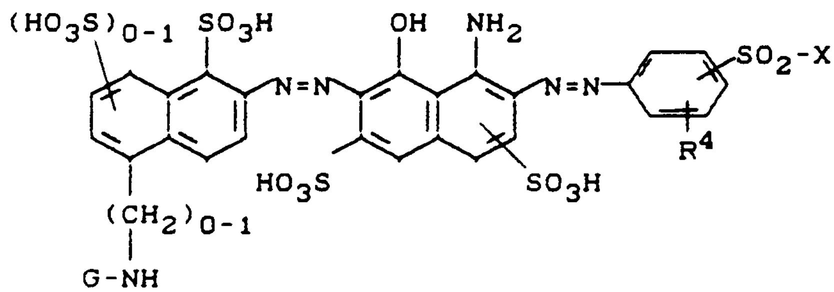

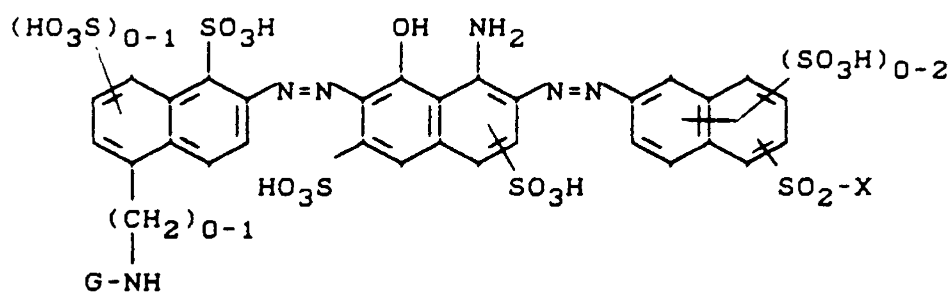

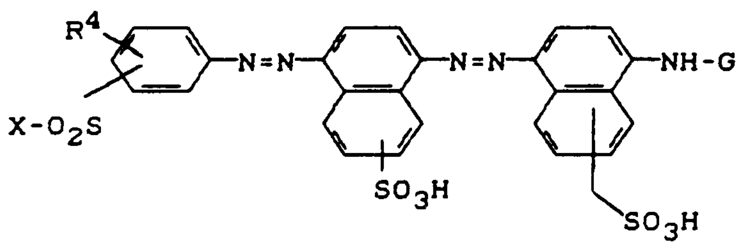

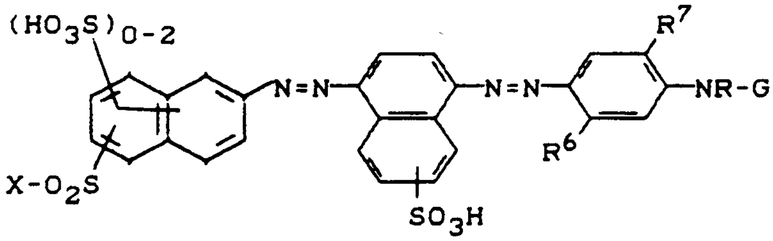

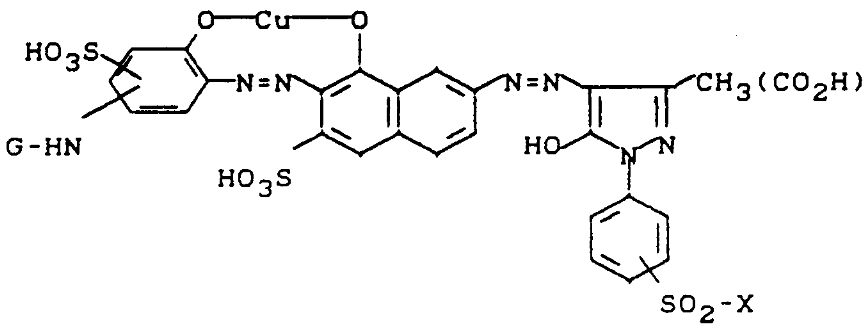

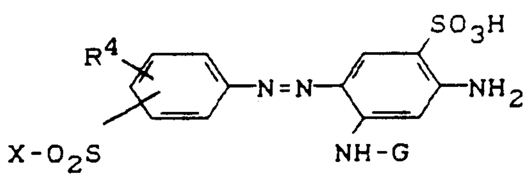

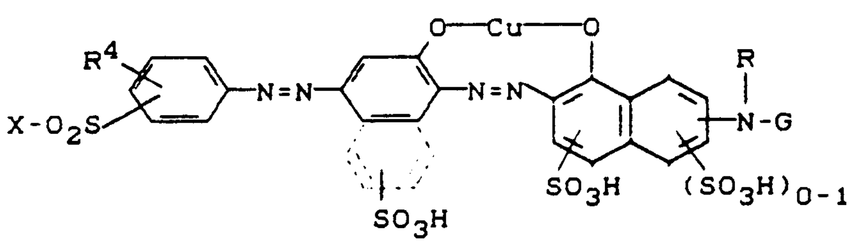

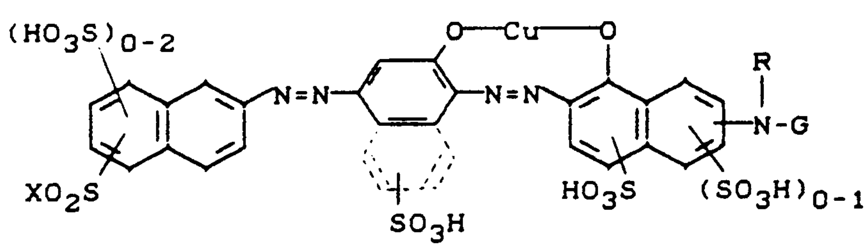

(40)

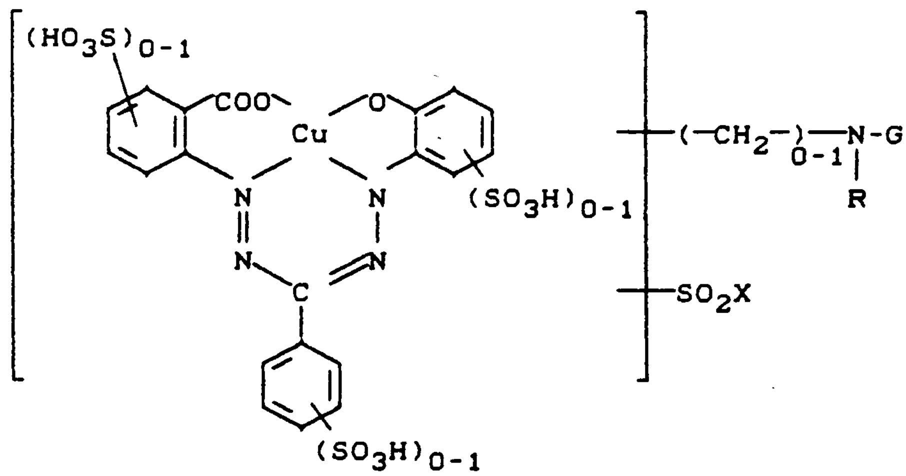

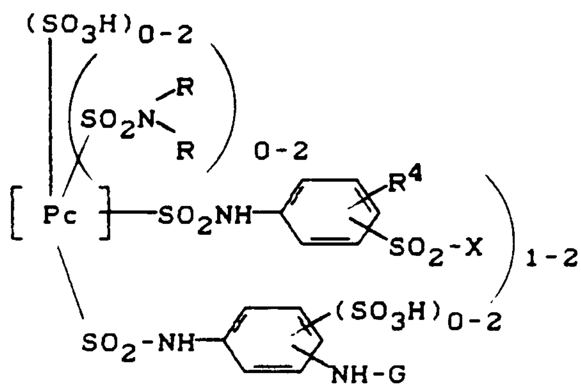

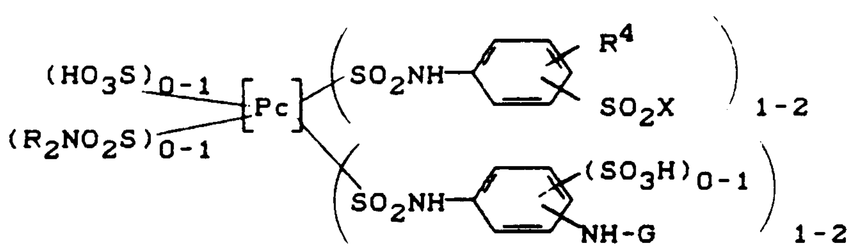

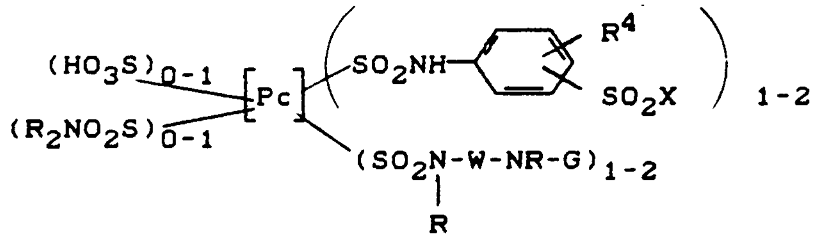

worin Pc für einen Cu- oder Ni-Phthalocyaninrest steht und die Gesamtzahl der Substituenten am Pc-Gerüst maximal 4 beträgt; W = aliphatisches Brückenglied, insbesondere $C_2$-$C_4$-Alkylen und R die obengenannte Bedeutung besitzt.

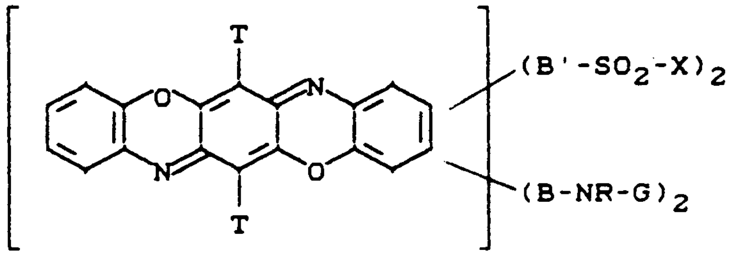

vorzugsweise

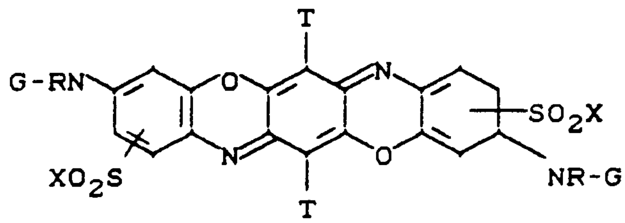

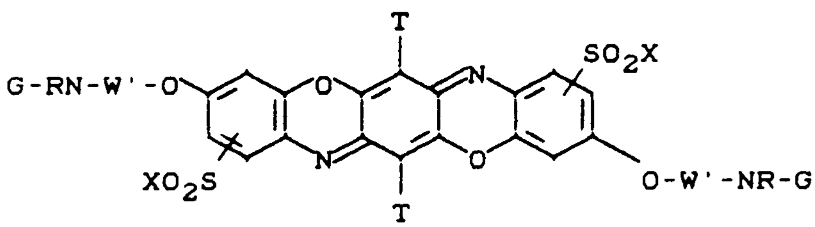

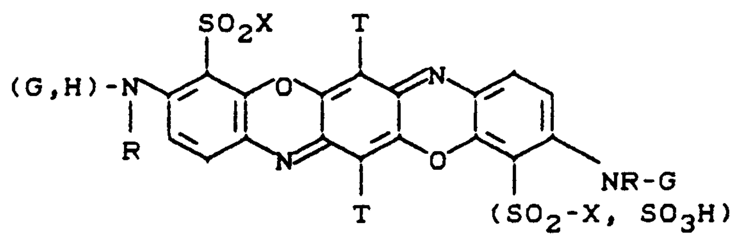

wobei W' = aliphatisches oder aromatisches Brückenglied, insbesondere gegebenenfalls substituiertes $C_2$-$C_4$-Alkylen oder gegebenenfalls substituiertes Phenylen,

T = Wasserstoff oder Substituent, beispielsweise Halogen, Alkyl, Aralkyl, Aryl, Cyan, Carboxy, Carbalkoxy, Arylamino oder Alkoxy.

6. Farbstoffe der Ansprüche 1 bis 5 mit

$-SO_2X$ = $-SO_2CH=CH_2$ oder $-SO_2CH_2$-$CH_2OSO_3H$

E =

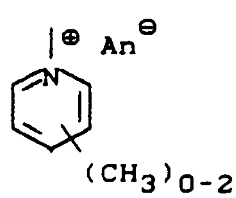

oder

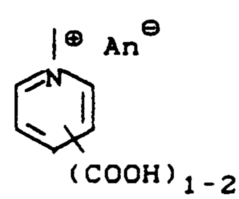

Z =

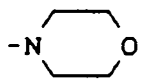 , 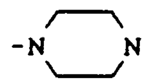 , 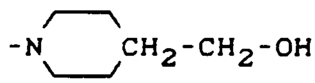

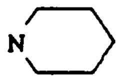 und 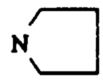

R = H, $C_1$-$C_4$-Alkyl.

7. Verwendung der Farbstoffe der Ansprüche 1-6 zum Färben und Bedrucken von Hydroxylgruppen- und Amidgruppen-haltigen Materialien.

## Claims

1. Reactive dyestuffs of the formula

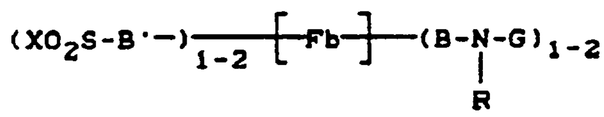

in which

Fb is the radical of a dyestuff from the mono- or polyazo, metal complex azo, anthraquinone, phthalocyanine, formazan, azomethine, dioxazine, phenazine, xanthene, thioxanthone, naphthoquinone, stilbene or triphenylmethane series,

B and B" are a direct bond or a bridging member to a ring C atom of an aromatic-carbocyclic or to a ring C atom or ring N atom of an aromatic-heterocyclic ring in Fb,

R is H, substituted or unsubstituted $C_1$-$C_6$-alkyl (preferred substituents: halogen, OH, COOH, $SO_3H$, $OSO_3H$),

G is

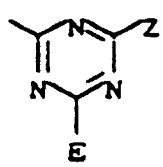 ,

Z is

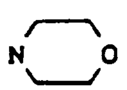 , 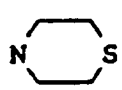 , 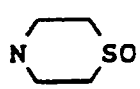 , 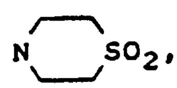 ,

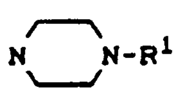 , 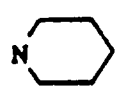 , or 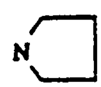 ,

it being possible for the heterocyclic rings to contain, if desired, substituents, in particular 1 to 2 $C_1$-$C_4$-alkyl or $C_1$-$C_4$-alkoxy radicals, such as, for example, $R^1$ being $CH_3$, $C_2H_5$, $CH_2CH_2OH$ or H,

X is $CH_2=CH_2$ or $CH_2CH_2$-Y, in which

Y is a radical which can be eliminated by alkali, for example $OSO_3H$, $SSO_3H$, $OCOCH_3$, $OPO_3H_2$, $OSO_2CH_3$, SCN, $NHSO_2CH_3$, Cl, Br, F, $OCOC_6H_5$, $OSO_2$-$C_6H_4CH_3$, $N(CH_3)_3]^+$ anion$^-$ or E,

E is a substituted or unsubstituted pyridinium radical.

**2.** Dyestuffs of Claim 1 of the formula

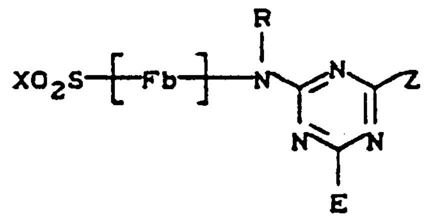

**3.** Metal-free or metal-containing monoazo and polyazo dyestuffs of Claim 1 of the formula

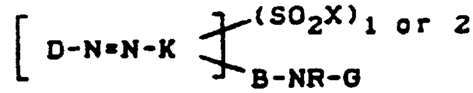

in which

D is the radical of a diazo component from the benzene or naphthalene series,

K is the radical of a coupling component from the benzene, naphthalene, acetoacetarylide or heterocyclic series; in the heterocyclic series preferably a pyrazolone or pyridone radical.

**4.** Dyestuffs of Claim 1 of the formulae

$X$-$SO_2$-D-N = N-K-B-NR-G

G-NR-B-D-N = N-K'-$SO_2$-X

in which

K' is the radical of a coupling component from the pyrazolone, pyridone or acetoacetarylide series.

**5.** Dyestuffs of Claims 1-4 of the formulae

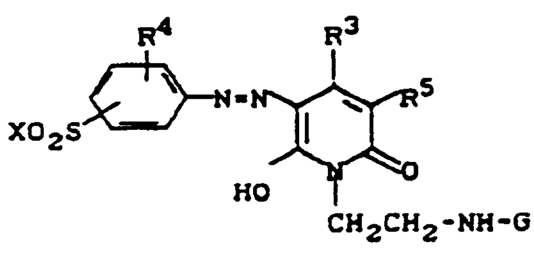

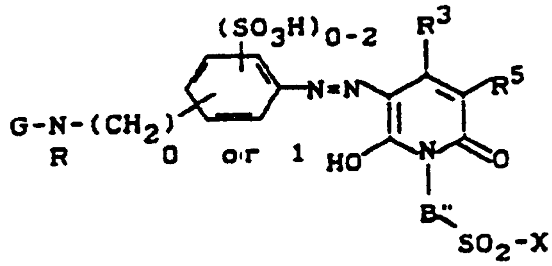

B" is

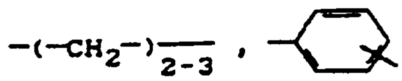

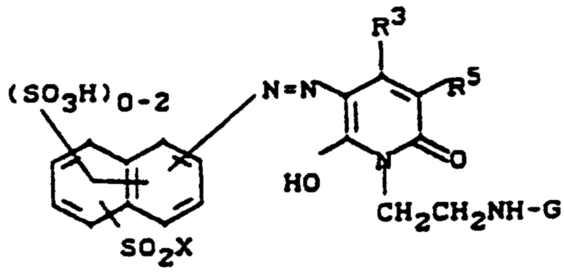

in which

$R^3$ is H, $C_1$-$C_4$-alkyl, in particular $CH_3$ and $CH_2SO_3H$, COOH,

$R^4$ is H, $C_1$-$C_4$-alkyl, $C_1$-$C_4$-alkoxy, Cl, Br, COOH, $SO_3H$

$R^5$ is H, $SO_3H$, $CH_2SO_3H$, Cl, $C_1$-$C_4$-alkylsulphonyl, carboxamide, in particular $CONH_2$ and N-mono- and N,N-di-$C_1$-$C_4$-alkylcarboxamide

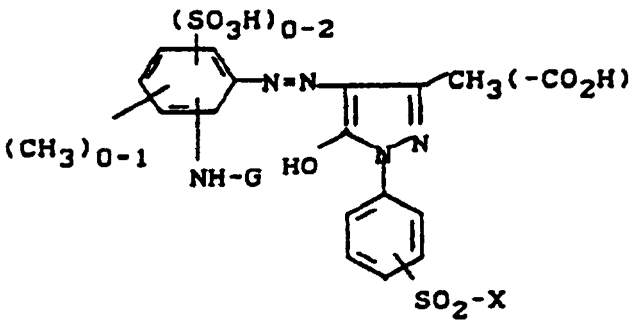

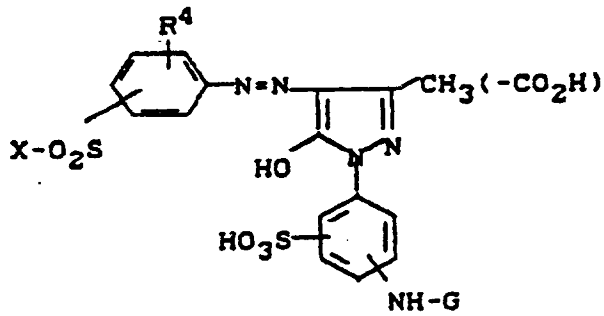

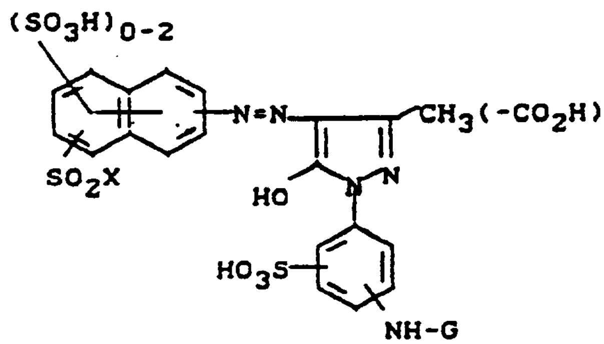

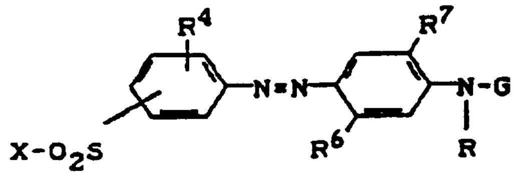

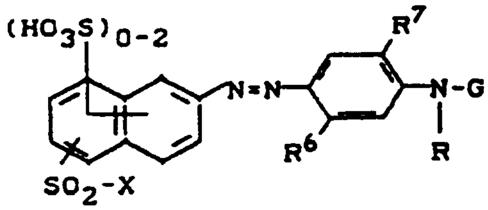

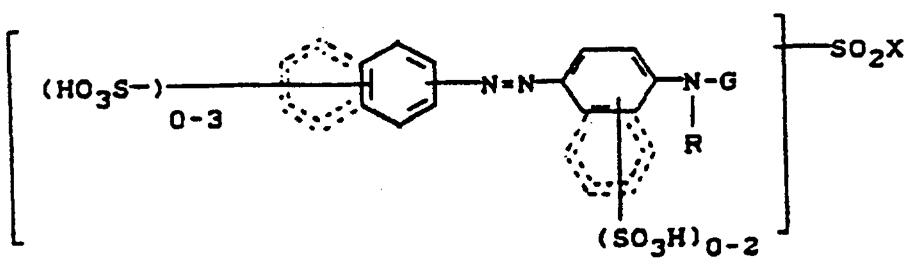

in which

R[6] is H, $C_1$-$C_4$-alkyl, $C_1$-$C_4$-alkoxy, acylamino, in particular $C_1$-$C_4$-alkylcarbonylamino or arylcarbonylamino, such as substituted or unsubstituted phenylcarbonylamino, $C_1$-$C_4$-alkylsulphonylamino, Cl, Br, aminocarbonylamino, $C_1$-$C_4$-alkylsulphonylamino, arylsulphonylamino,

R[7] is H, $C_1$-$C_4$-alkyl, $C_1$-$C_4$-alkoxy, OH, $SO_3H$

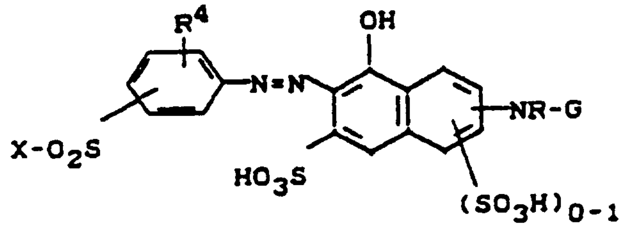

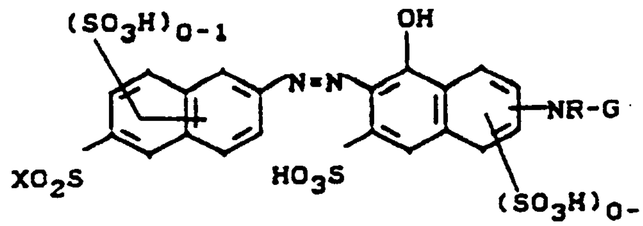

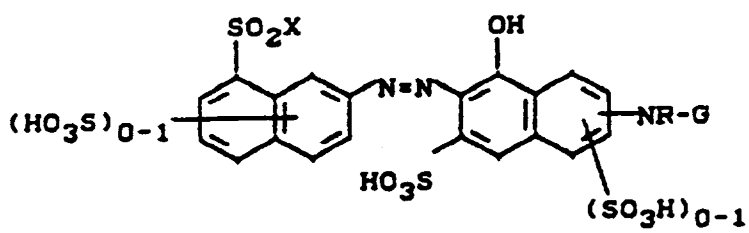

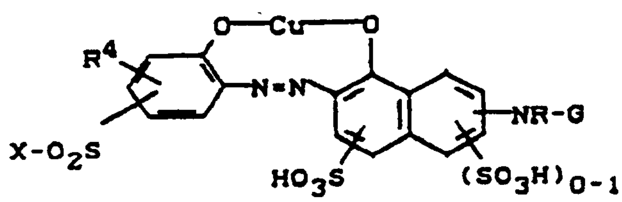

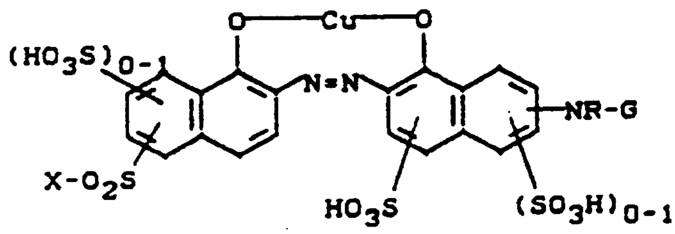

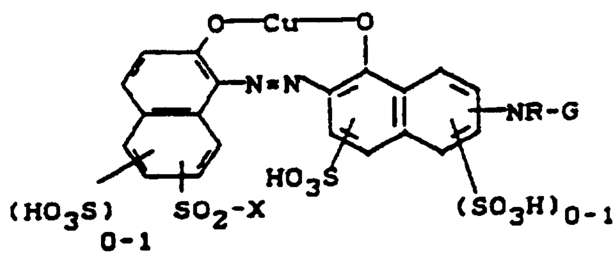

1:2 metal complexes of dyestuffs

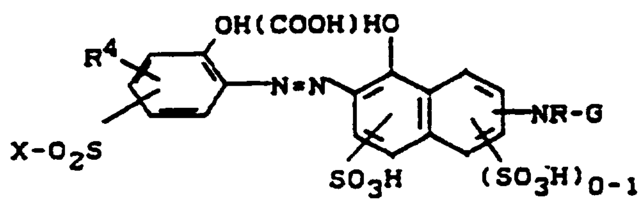

in particular the Cr complexes and Co complexes containing two dyestuffs (21) or one dyestuff (21) and any other metal-complexing dyestuff, in particular an azo or azomethine dyestuff,

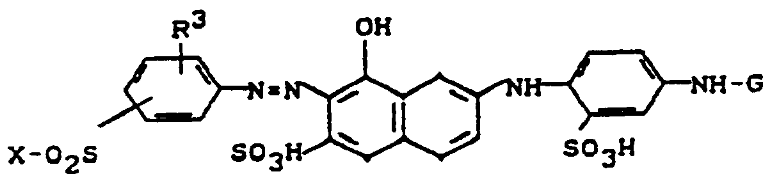

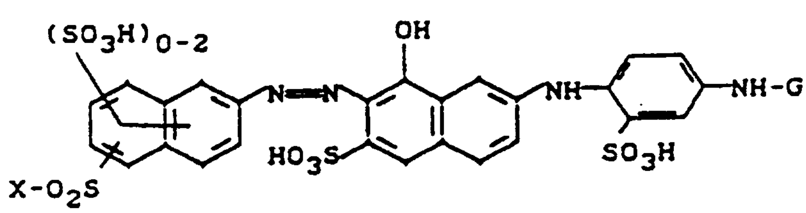

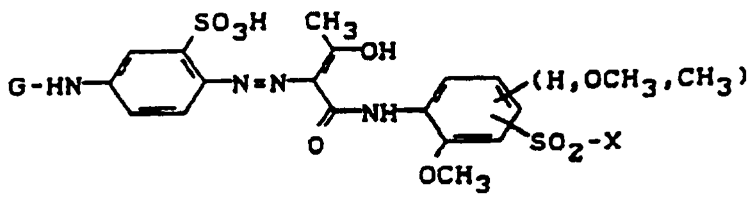

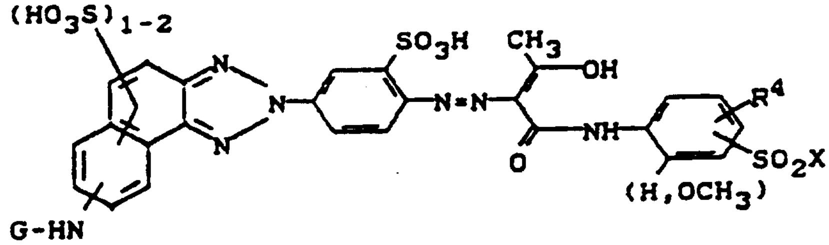

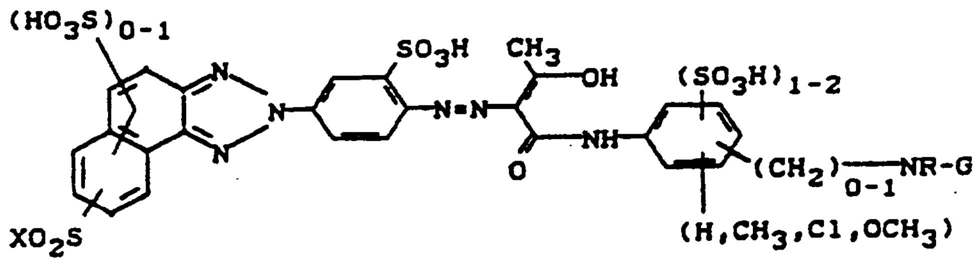

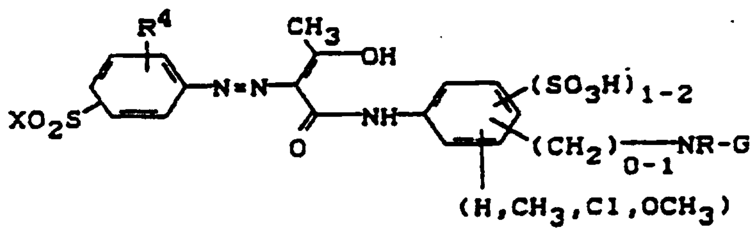

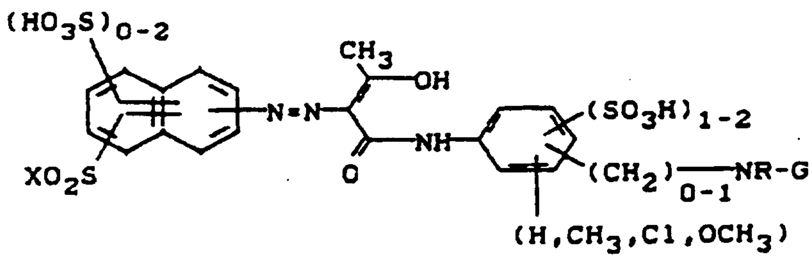

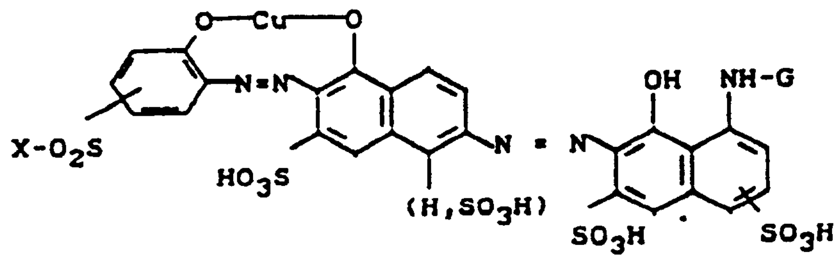

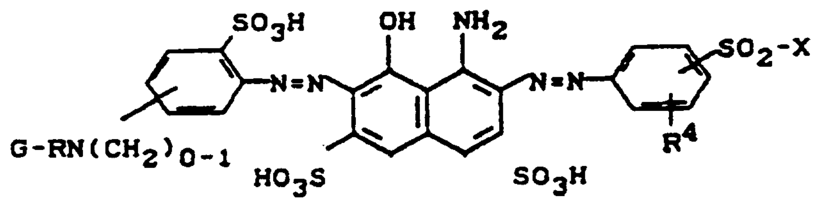

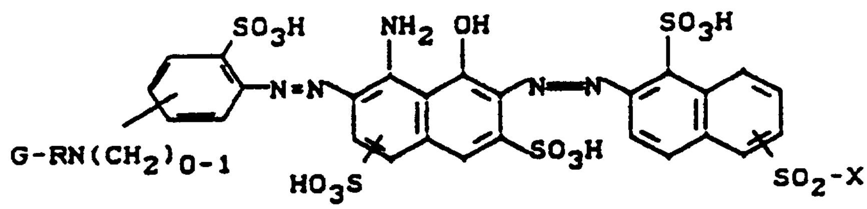

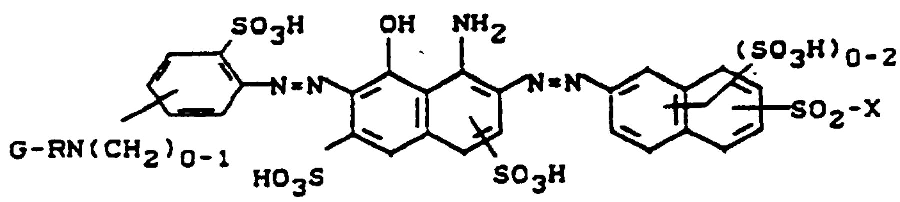

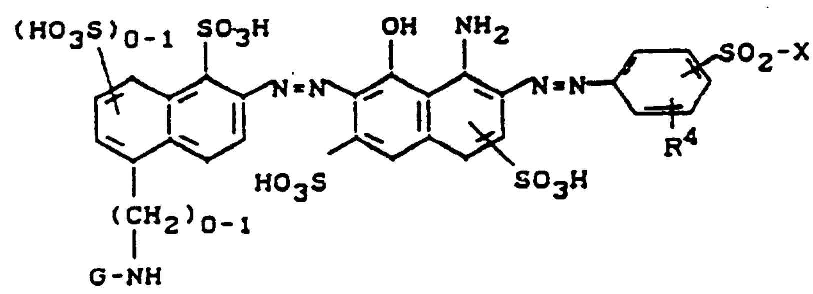

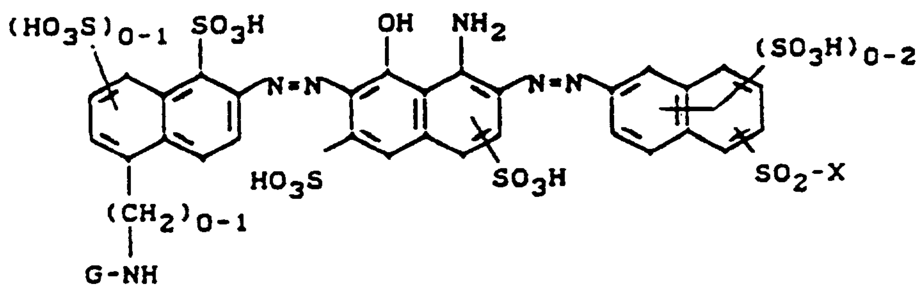

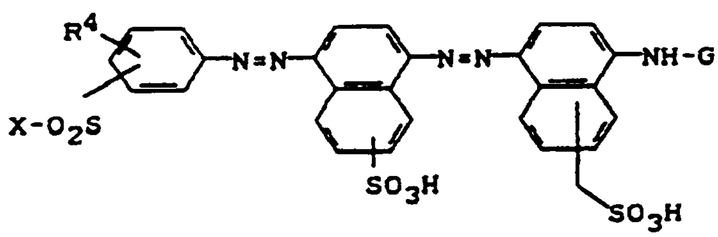

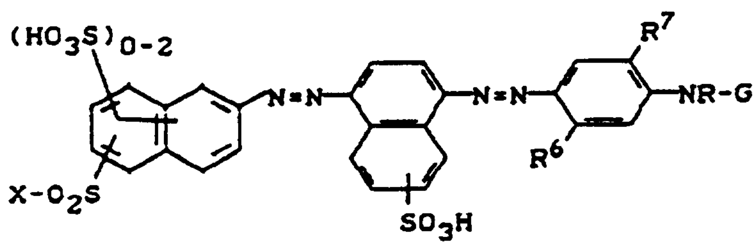

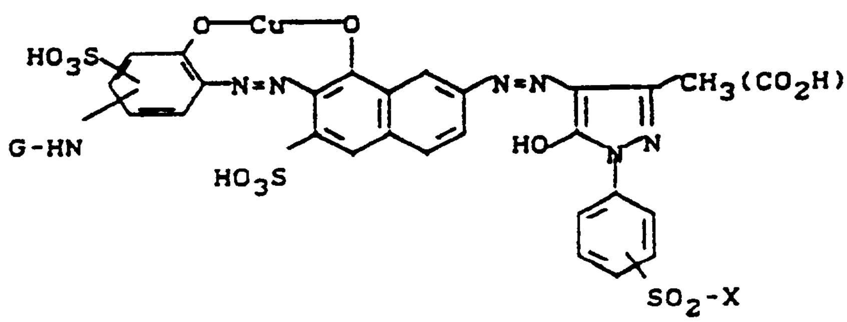

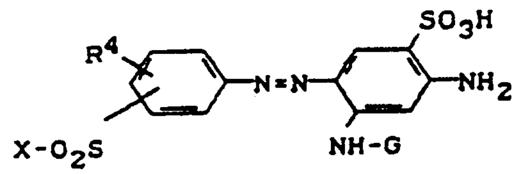

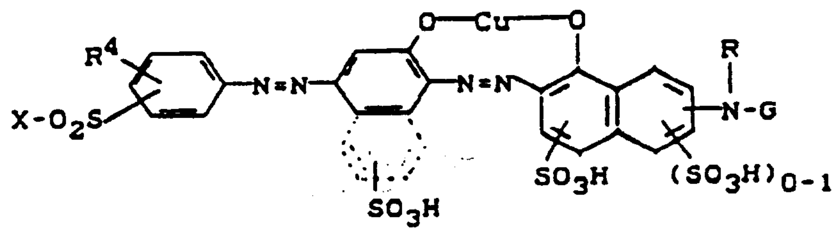

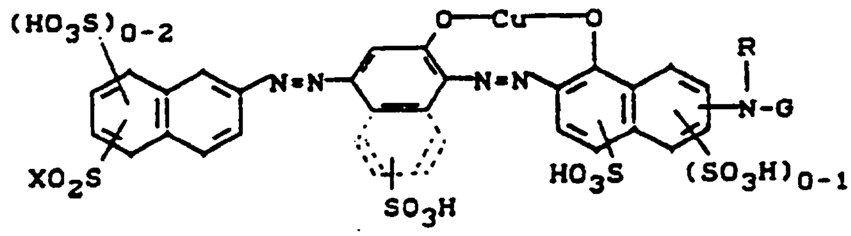

(40)

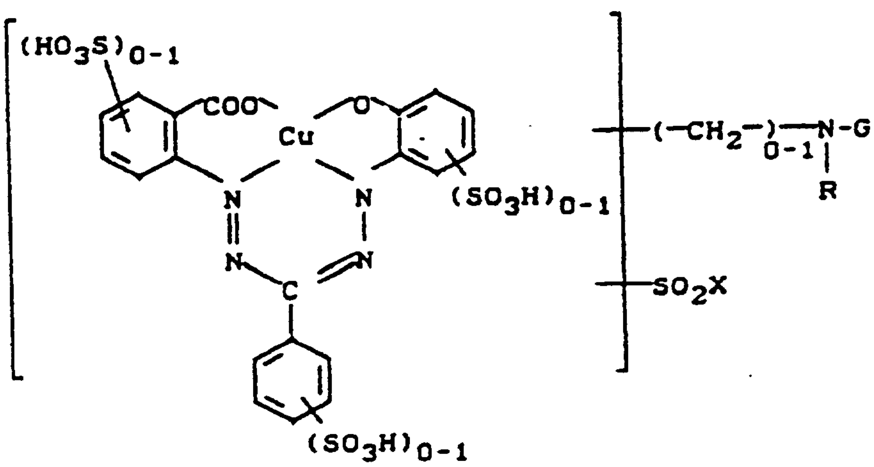

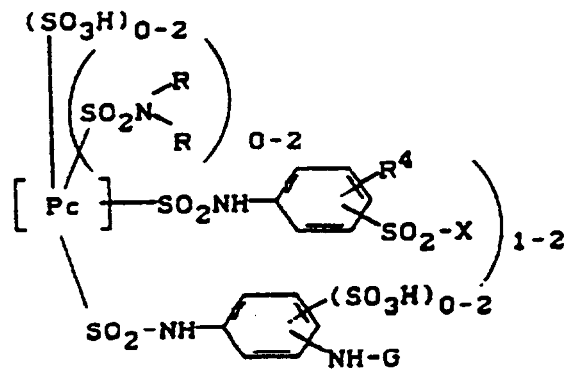

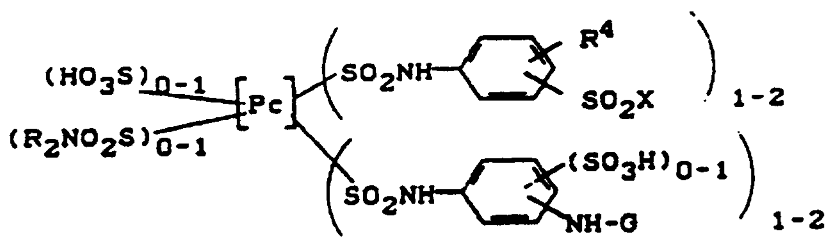

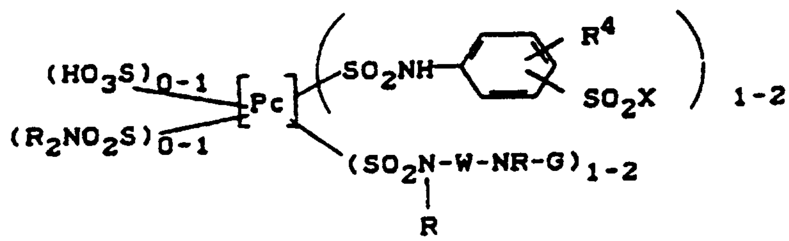

in which Pc represents a Cu phthalocyanine or Ni phthalocyanine radical and the total number of substituents on the Pc skeleton is at most 4; W is an aliphatic bridging member, in particular $C_2$-$C_4$-alkylene, and R has the above-mentioned meaning

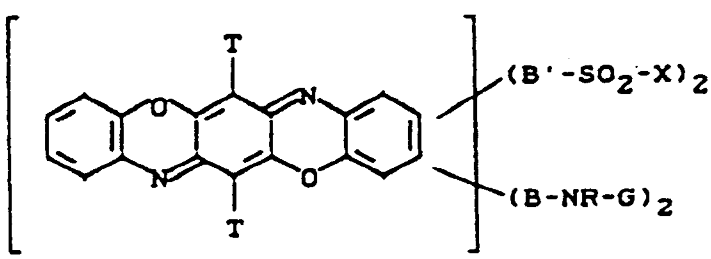

preferably

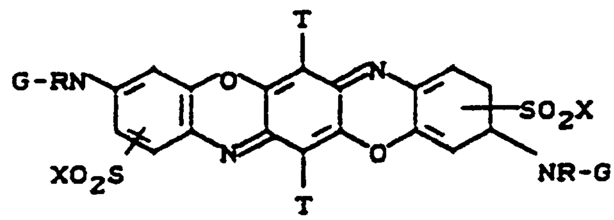

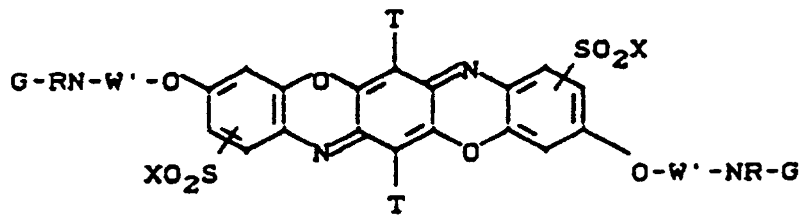

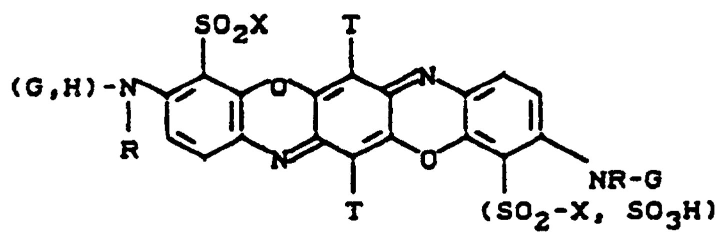

in which W' is an aliphatic or aromatic bridging member, in particular substituted or unsubstituted $C_2$-$C_4$-alkylene or substituted or unsubstituted phenylene,

T is hydrogen or a substituent, for example halogen, alkyl, aralkyl, aryl, cyano, carboxyl, carbalkoxy, arylamino or alkoxy.

**6.** Dyestuffs of Claims 1 to 5 where

$-SO_2X$ is $-SO_2CH=CH_2$ or $-SO_2CH_2-CH_2OSO_3H$

E is

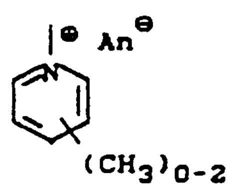

or

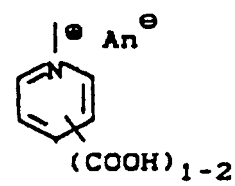

Z is

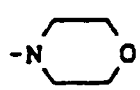 ,

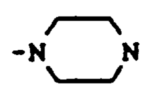 ,

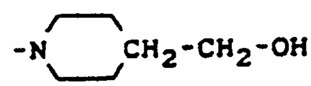

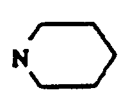

and

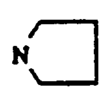

R is H, $C_1$-$C_4$-alkyl.

**7.** Use of the dyestuffs of Claims 1-6 for dyeing and printing hydroxyl- and amido-containing materials.

**Revendications**

**1.** Colorants réactifs, de formule :

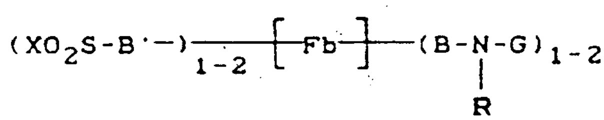

dans laquelle

Fb représente le reste d'un colorant de la série des colorants monoazoïques ou polyazoïques, des colorants azoïques complexes de métaux, de la série anthraquinonique, de la phtalocyanine, du formazane, de l'azométhine, de la dioxazine, de la phénazine, du xanthène, de la thioxanthone, de la naphtoquinone, du stilbène ou du triphénylméthane,

B ou B' représente une liaison directe ou un terme de pontage sur un atome de carbone d'un noyau carbocyclique aromatique ou sur un atome de C ou de N d'un noyau hétérocyclique aromatique présent dans Fb,

R représente H, un groupe alkyle en $C_1$-$C_6$ éventuellement substitué (substituants préférés : un halogène, OH, COOH, $SO_3H$, $OSO_3H$),

G représente

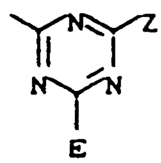

Z représente

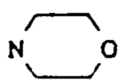 , 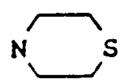 , 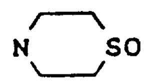 , 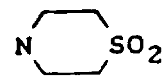,

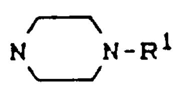 , 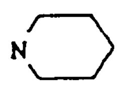 , ou 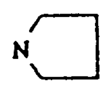

et les noyaux hétérocycliques peuvent éventuellement présenter des substituants, notamment 1 à 2 restes alkyles en $C_1$ à $C_4$ ou alcoxy en $C_1$ à $C_4$, comme par exemple $R^1$ = $CH_3$, $C_2H_5$, $CH_2CH_2OH$ ou H,

X représente $CH_2=CH_2$ ou $CH_2CH_2$-Y, et

Y représente un reste éliminable en voie alcaline, par exemple un $OSO_3H$, $SSO_3H$, $OCOCH_3$, $OPO_3H_2$, $OSO_2CH_3$, SCN, $NYSO_2CH_3$, Cl, Br, F, $OCOC_6H_5$, $OSO_2$-$C_6H_4CH_3$, $N(CH_3)_3]^+$ $anion^-$ ou E,

E représente un reste pyridinium éventuellement substitué.

**2.** Colorants selon la revendication 1, de formule :

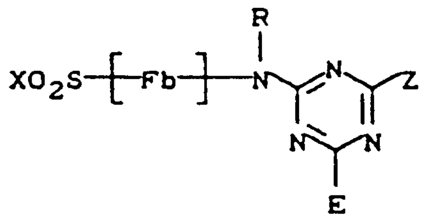

**3.** Colorants monoazoïques et polyazïoques, contenant éventuellement du métal, de la revendication 1 et répondant à la formule :

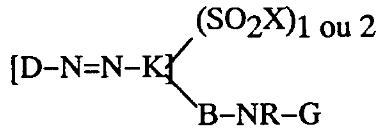

dans laquelle

D représente le reste d'un composant diazotable de la série benzénique ou naphtalénique,

K représente le reste d'un copulant de la série du benzène, du naphtalène, d'un arylide d'acide acétoacétique ou de la série hétérocyclique ; dans la série hétérocyclique, avantageusement un reste de pyrazolone ou de pyridone.

**4.** Colorants selon la revendication 1, répondant aux formules :

$X\text{-}SO_2D\text{-}N=N\text{-}K\text{-}B\text{-}NR\text{-}G$

$G\text{-}NR\text{-}B\text{-}D\text{-}N=N\text{-}K'\text{-}SO_2\text{-}X$

dans lesquelles

K' représente le reste d'un copulant de la série de la pyrazolone, de la pyridone ou d'un arylide d'acide acétoacétique.

**5.** Colorants selon les revendications 1 à 4, répondant aux formules :

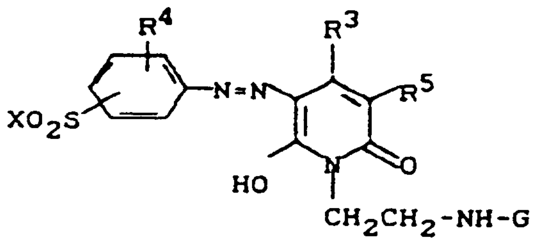

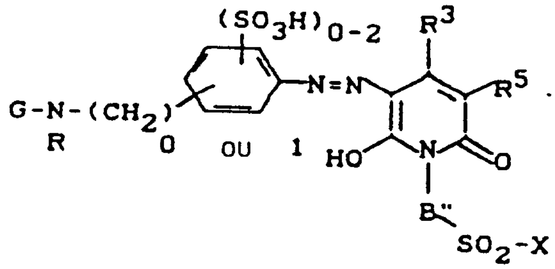

B'' =

$-(-CH_2-)_{2-3}$ , 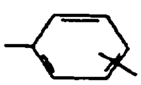

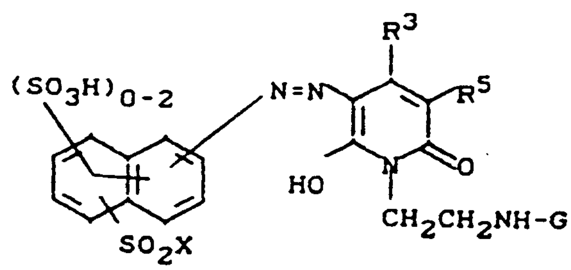

dans lesquelles

$R^3$ représente H, un groupe alkyle en $C_1$ à $C_4$, notamment $CH_3$ et $CH_2SO_3H$, COOH,

$R^4$ représente H, un groupe alkyle en $C_1$ à $C_4$, alcoxy en $C_1$ à $C_4$, Cl, Br, COOH, $SO_3H$,

$R^5$ représente H, un groupe $SO_3H$, $CH_2SO_3H$, Cl, alkylesulfonyle en $C_1$ à $C_4$, carboxamide, notamment $CONH_2$ ainsi qu'un groupe monoalkylamide ou dialkylamide (en $C_1$ à $C_4$) d'acide carboxylique,

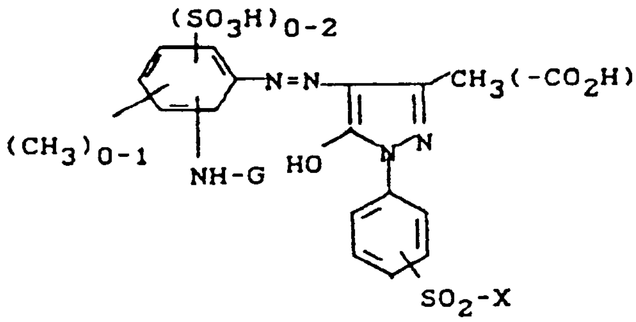

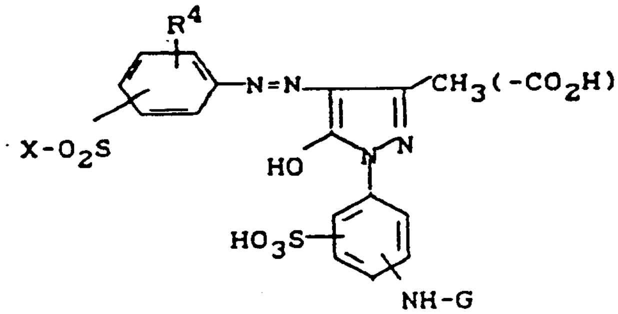

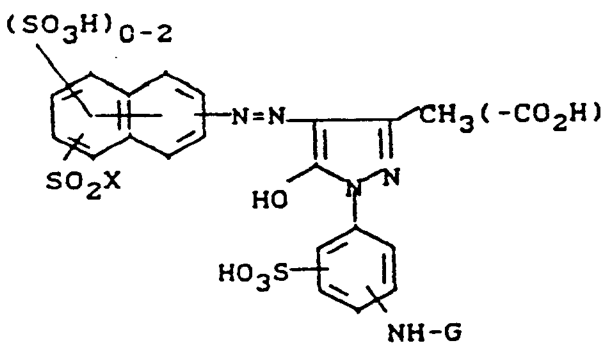

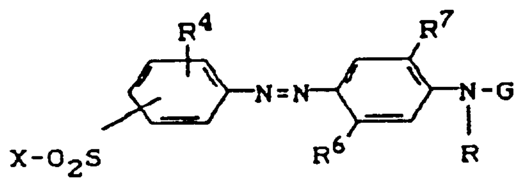

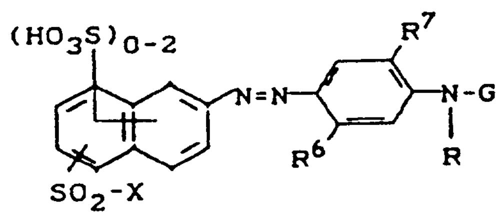

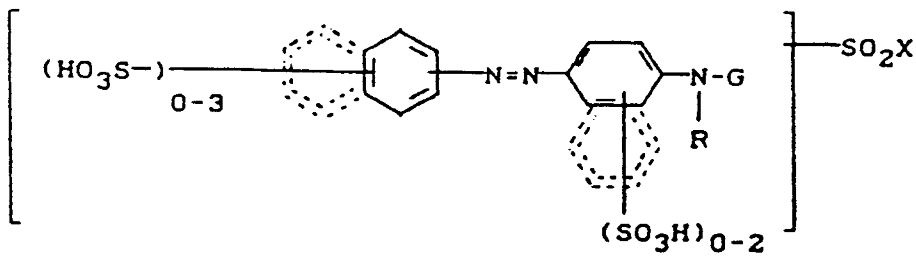

dans lesquelles

$R^6$ représente H, un groupe alkyle en $C_1$ à $C_4$, alcoxy en $C_1$ à $C_4$, acylamino, notamment alkyl(en $C_1$ à $C_4$)-carbonylamino ou arylcarbonylamino comme un groupe phénylcarbonylamino éventuellement substitué, alkyl(en $C_1$ à $C_4$)-sulfonylamino, Cl, Br, un groupe aminocarbonylamino, alkyl(en $C_1$ à $C_4$)-sulfonylamino, arylsulfonylamino,

$R^7$ représente H, un groupe alkyle en $C_1$ à $C_4$, alcoxy en $C_1$ à $C_4$, OH, $SO_3H$,

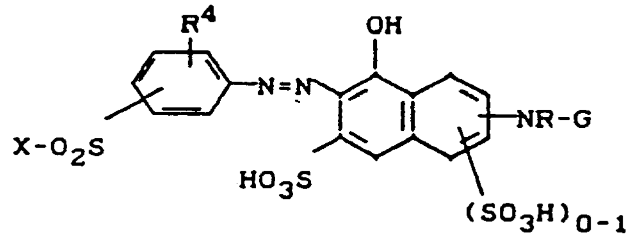

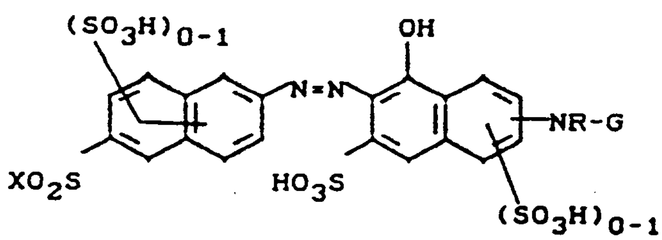

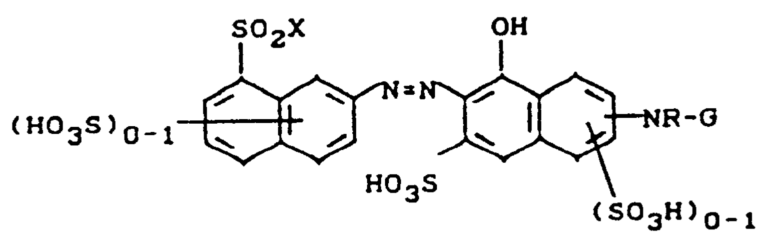

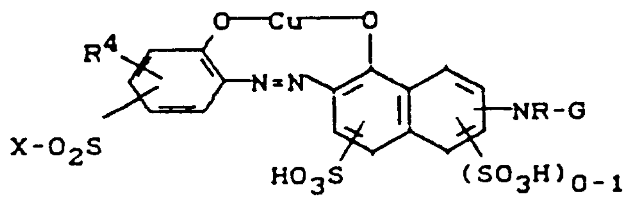

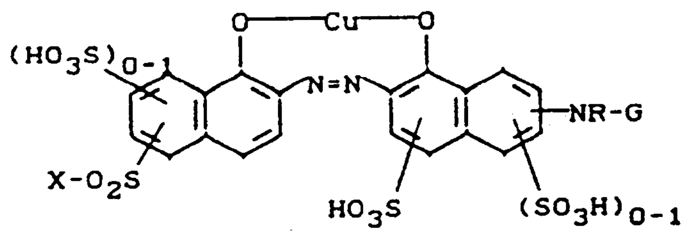

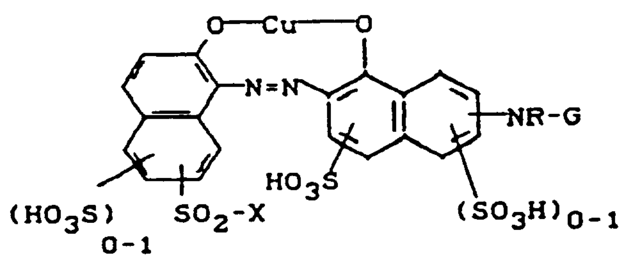

des complexes à 1:2 de métal dérivant des colorants :

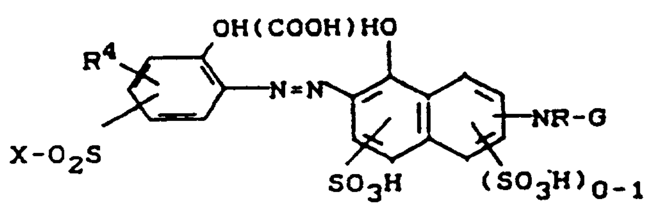

en particulier des complexes de Cr et de Co, qui contiennent deux colorants (21) ou bien un colorant (21) et un autre colorant quelconque formateur de complexes de métaux, notamment un colorant azoïque ou azométhinique,

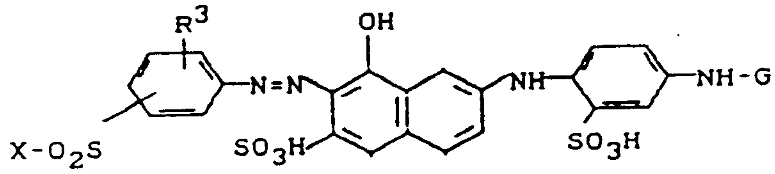

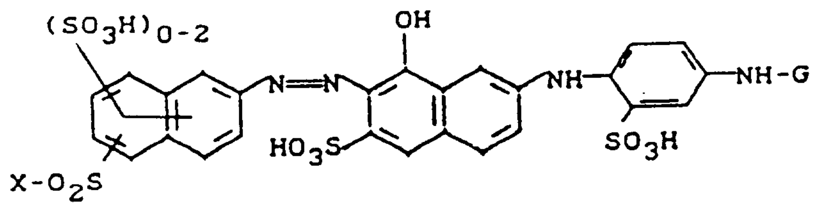

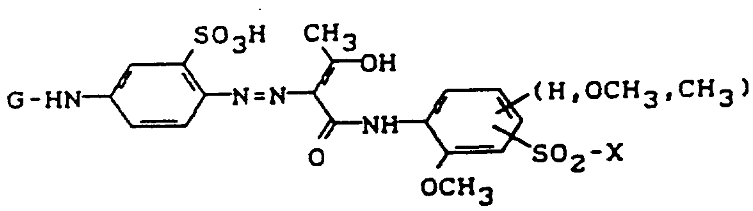

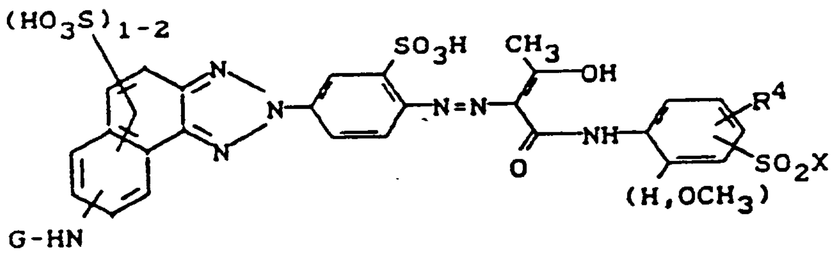

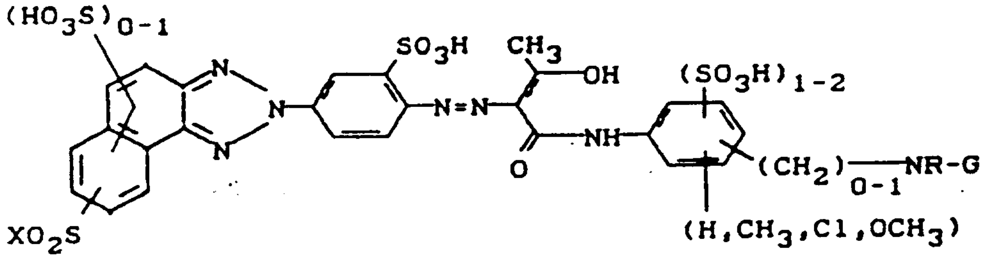

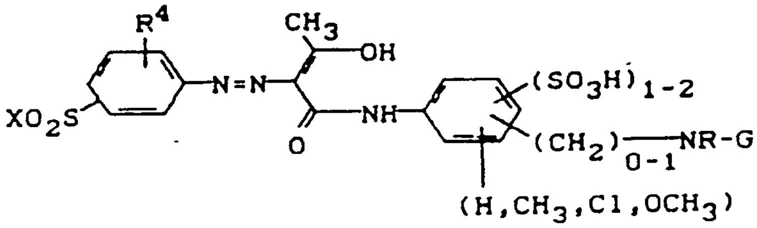

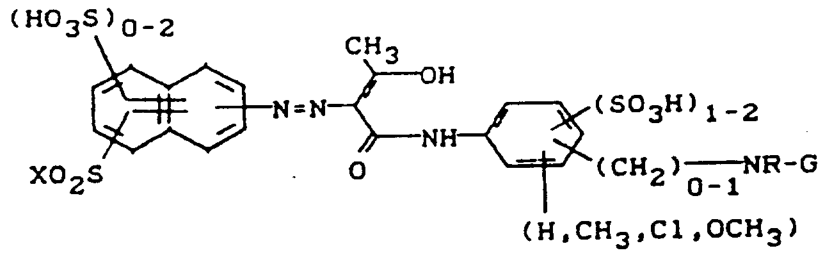

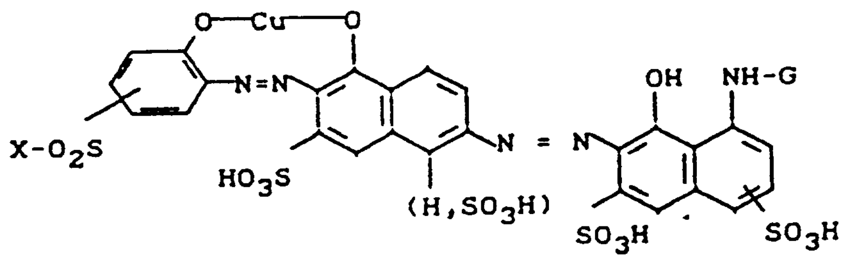

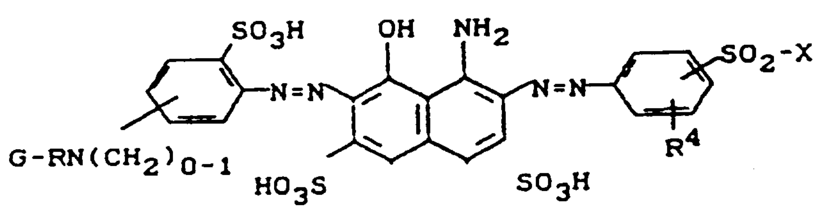

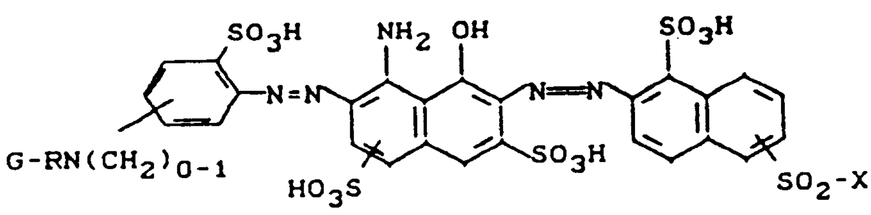

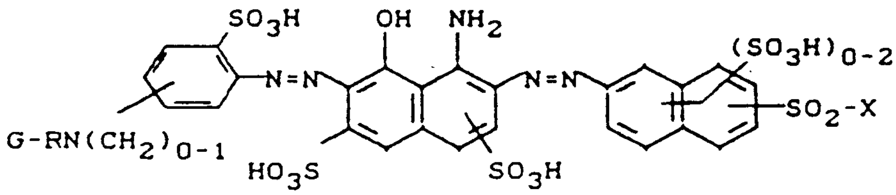

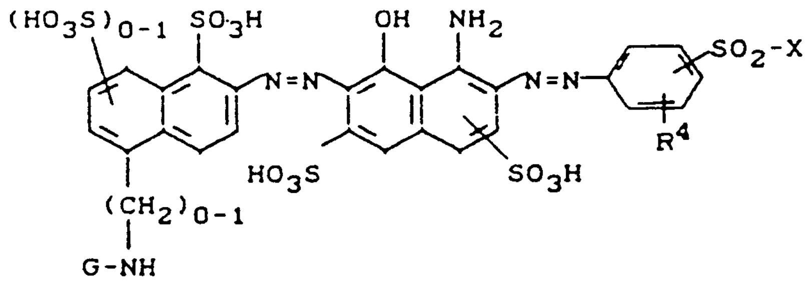

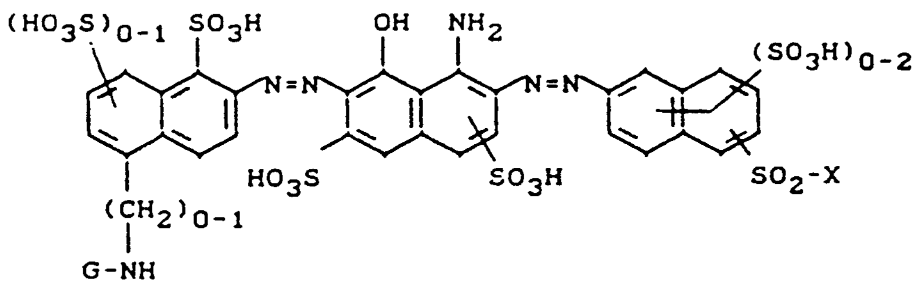

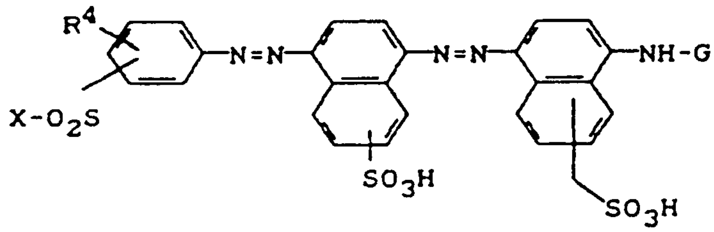

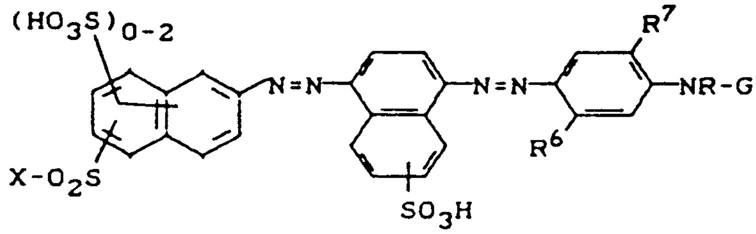

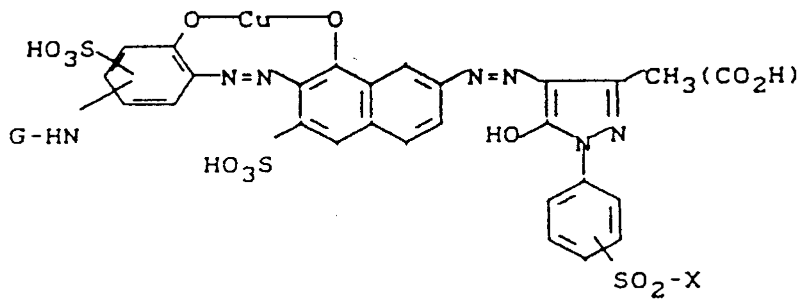

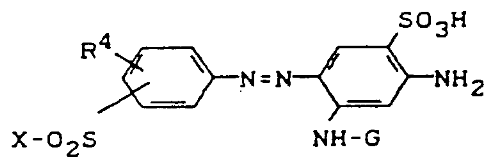

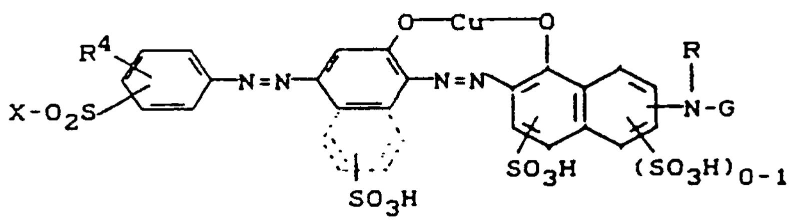

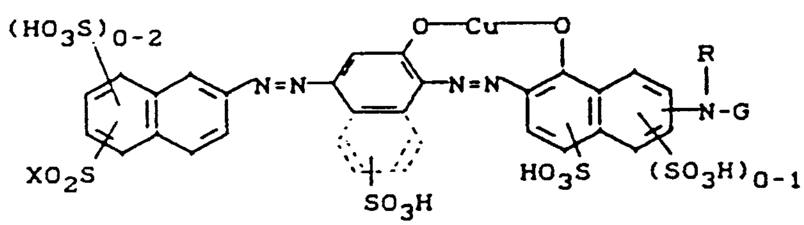

(40)

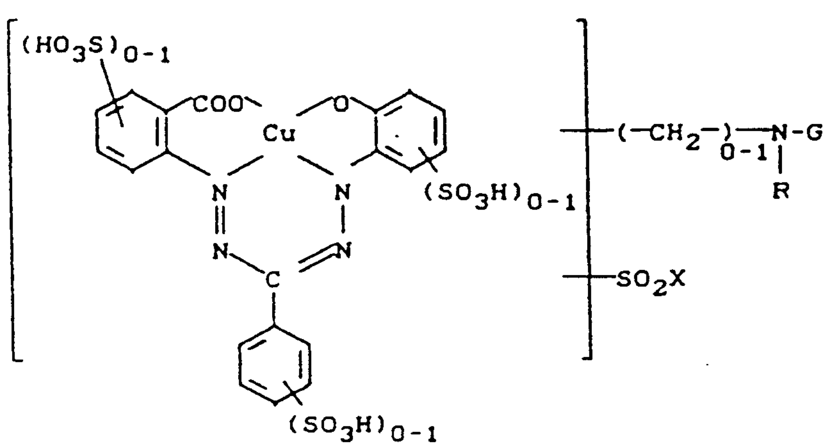

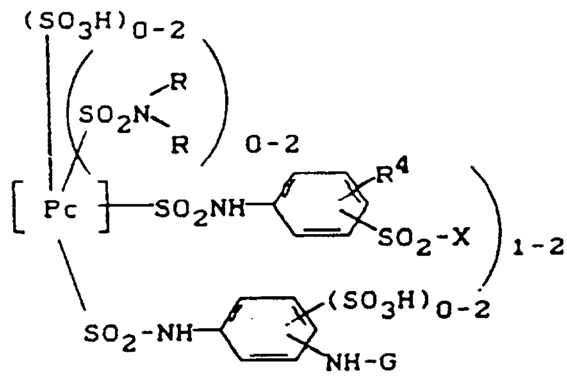

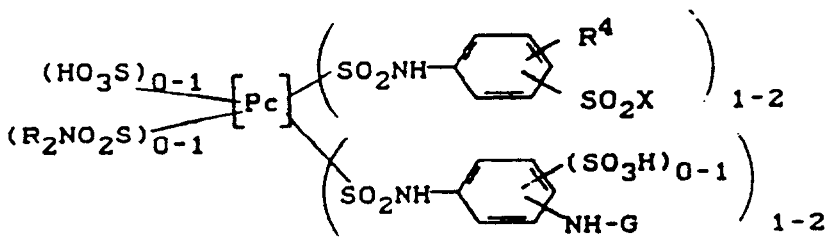

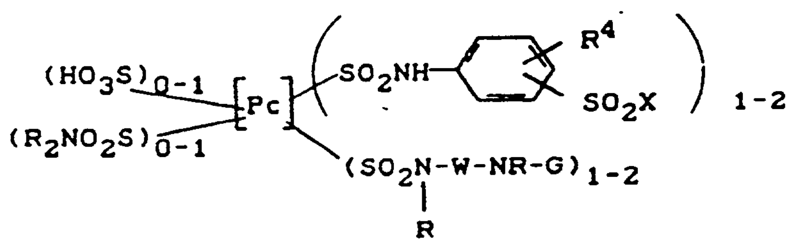

dans lesquelles Pc représente un reste phtalocyanine de Cu ou de Ni, et le nombre total des substituants fixés sur le squelette Pc vaut au maximum 4 ; W représente un terme aliphatique de pontage, notamment un groupe alkylène en $C_2$ à $C_4$, et R a le sens précité,

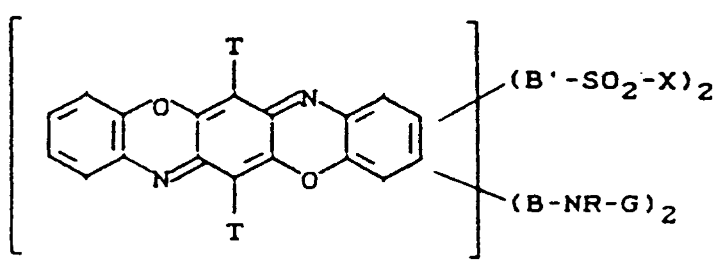

avantageusement,

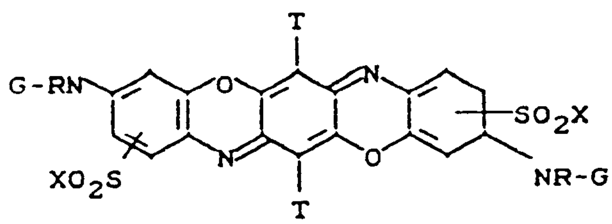

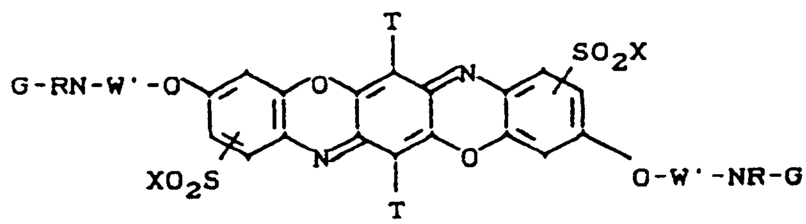

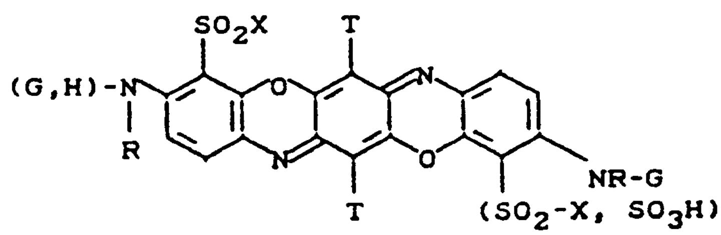

dans lesquelles

W' représente un terme aliphatique ou aromatique de pontage, notamment un groupe alkylène en $C_2$ à $C_4$, éventuellement substitué, ou un groupe phénylène éventuellement substitué,

T représente un atome d'hydrogène ou un substituant, par exemple un atome d'halogène, un groupe alkyle, aralkyle, aryle, cyano, carboxy, carbalcoxy, arylamino ou alcoxy.

**6.** Colorants des revendications 1 à 5, avec

$-SO_2X$ = $-SO_2CH=CH_2$ ou $-SO_2CH_2-CH_2OSO_3H$

E =

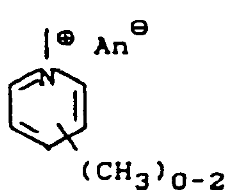

ou

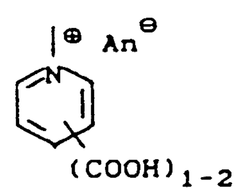

Z =

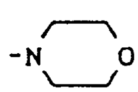

,

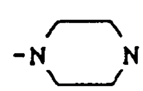

,

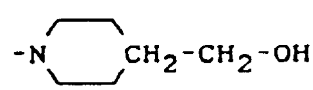

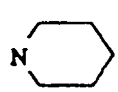

et

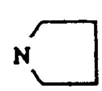

R = H, un groupe alkyle en $C_1$ à $C_4$.

7. Utilisation des colorants selon les revendications 1 à 6 pour imprimer des matières contenant des groupes hydroxyles et contenant des groupes amides.